(19) Europäisches Patentamt
European Patent Office
Office européen des brevets

(11) **EP 4 296 743 B1**

(12) **EUROPEAN PATENT SPECIFICATION**

(45) Date of publication and mention
of the grant of the patent:
**28.05.2025 Bulletin 2025/22**

(51) International Patent Classification (IPC):
**G02B 9/64** *(2006.01)* **G02B 13/00** *(2006.01)*
**G02B 13/18** *(2006.01)*

(21) Application number: **22192052.3**

(52) Cooperative Patent Classification (CPC):
**G02B 13/0045; G02B 9/64; G02B 13/18**

(22) Date of filing: **25.08.2022**

(54) **IMAGING LENS ASSEMBLY, IMAGE CAPTURING UNIT AND ELECTRONIC DEVICE**

BILDGEBUNGSLINSENANORDNUNG, BILDAUFNAHMEEINHEIT UND ELEKTRONISCHE VORRICHTUNG

ENSEMBLE LENTILLE D'IMAGERIE, UNITÉ DE CAPTURE D'IMAGES ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2022 TW 111122801**

(43) Date of publication of application:
**27.12.2023 Bulletin 2023/52**

(73) Proprietor: **LARGAN Precision Co., Ltd.**
**Taichung City (TW)**

(72) Inventors:
• **CHU, Pin-Yen**
**Taichung City (TW)**
• **YEH, Kuan-Ting**
**Taichung City (TW)**
• **CHEN, Chun-Yen**
**Taichung City (TW)**
• **KUO, Tzu-Chieh**
**Taichung City (TW)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
US-A1- 2020 393 648    US-A1- 2021 157 092
US-A1- 2021 181 480

• "Handbook of optical systems, Aberration theory and correction of optical systems, Chapter 31: Correction of Aberrations ED - Gross H", 1 January 2007, HANDBOOK OF OPTICAL SYSTEMS, ABERRATION THEORY AND CORRECTION OF OPTICAL SYSTEMS, WILEY-VCH, WEINHEIM, DE, PAGE(S) 215 - 221, 225, ISBN: 978-3-527-40379-0, XP002719371
• "Handbook of Optical Systems, Vol 3", 1 January 2007, WILEY-VCH, Weinheim, ISBN: 978-3-52-740379-0, article HERBERT GROSS: "Handbook of Optical Systems, Vol.3 : Aberration Theory and Correction of optical Systems", pages: 377 - 379, XP055169688
• "Modern Lens Design", 1 January 1992, MCGRAW-HILL, INC, ISBN: 978-0-07-059178-3, article WARREN J. SMITH: "Modern Lens Design", pages: 25 - 27, XP055152035
• "Modern Optical Engineering, The Design of Optical Systems", 1 January 1990, MCGRAW-HILL, INC., ISBN: 978-0-07-059174-5, article WARREN J. SMITH: "Modern Optical Engineering, The Design of Optical Systems", pages: 70 - 71, XP055152063

## Description

## BACKGROUND

Technical Field

The present disclosure relates to an imaging lens assembly, an image capturing unit and an electronic device, more particularly to an imaging lens assembly and an image capturing unit applicable to an electronic device.

Description of Related Art

With the development of semiconductor manufacturing technology, the performance of image sensors has improved, and the pixel size thereof has been scaled down. Therefore, featuring high image quality becomes one of the indispensable features of an optical system nowadays.

Furthermore, due to the rapid changes in technology, electronic devices equipped with optical systems are trending towards multi-functionality for various applications, and therefore the functionality requirements for the optical systems have been increasing. However, it is difficult for a conventional optical system to obtain a balance among the requirements such as high image quality, low sensitivity, a proper aperture size, miniaturization and a desirable field of view.

Document US 2021/181480 A1 discloses a camera optical lens which includes a first lens, a second lens, a third lens, a fourth lens, a fifth lens, a sixth lens, a seventh lens and an eighth lens.

Document US 2021/157092 A1 disclsoses a photographing optical system which includes a first lens element, a second lens element, a third lens element, a fourth lens element, a fifth lens element, a sixth lens element, a seventh lens element and an eighth lens element.

Document US 2020/393648 A1 disclsoses a photographing lens assembly which includes a first lens element, a second lens element, a third lens element, a fourth lens element, a fifth lens element, a sixth lens element, a seventh lens element and an eighth lens element.

## SUMMARY

The invention is defined in the claims.

According to one aspect of the present disclosure, an imaging lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has positive refractive power, the object-side surface of the first lens element is convex in a paraxial region thereof, and the image-side surface of the first lens element is concave in a paraxial region thereof. The object-side surface of the second lens element is convex in a paraxial region thereof, and the image-side surface of the second lens element is concave in a paraxial region thereof. The fifth lens element has positive refractive power. The sixth lens element has negative refractive power, and the image-side surface of the sixth lens element is concave in a paraxial region thereof. The seventh lens element has positive refractive power, and the object-side surface of the seventh lens element is convex in a paraxial region thereof. The eighth lens element has negative refractive power. At least one of the object-side surface and the image-side surface of at least one lens element of the imaging lens assembly has at least one critical point in an off-axis region thereof.

When an Abbe number of the first lens element is V1, an Abbe number of the second lens element is V2, an Abbe number of the third lens element is V3, an Abbe number of the fourth lens element is V4, an Abbe number of the fifth lens element is V5, a curvature radius of the image-side surface of the sixth lens element is R12, a curvature radius of the object-side surface of the seventh lens element is R13, a focal length of the first lens element is f1, a focal length of the fifth lens element is f5, a focal length of the sixth lens element is f6, a focal length of the seventh lens element is f7, and a focal length of the eighth lens element is f8, the following conditions are satisfied:

$$2.0 < (V1+V3+V5)/(V2+V4) < 9.0;$$

$$0.60 < R12/R13 < 3.3;$$

$$0.20 < f5/f1 < 4.0;$$

$$0.10 < f6/f8 < 4.5;$$

and

$$-1.7 < f7/f8 < -0.20.$$

According to another aspect of the present disclosure that is not part of the claimed invention, an imaging lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has positive refractive power, the object-side surface of the first lens element is convex in a paraxial region thereof, and the image-side surface of the first lens element is concave in a paraxial region thereof. The object-side surface of the second lens element is convex in a paraxial region thereof. The fifth lens element has positive refractive power. The sixth lens element has negative refractive power, and the image-side surface of the sixth lens element is concave in a paraxial region thereof. The seventh lens element has positive refractive power, and the object-side surface of the seventh lens element is convex in a paraxial region thereof. The eighth lens element has negative refractive power. At least one of the object-side surface and the image-side surface of at least one lens element of the imaging lens assembly has at least one critical point in an off-axis region thereof.

When an Abbe number of the first lens element is V1, an Abbe number of the second lens element is V2, an Abbe number of the third lens element is V3, an Abbe number of the fourth lens element is V4, an Abbe number of the fifth lens element is V5, a curvature radius of the image-side surface of the sixth lens element is R12, a curvature radius of the object-side surface of the seventh lens element is R13, a focal length of the first lens element is f1, a focal length of the fifth lens element is f5, a focal length of the sixth lens element is f6, a focal length of the seventh lens element is f7, and a focal length of the eighth lens element is f8, the following conditions are satisfied:

$$2.5 < (V1+V3+V5)/(V2+V4) < 8.5;$$

$$0.60 < R12/R13 < 3.3;$$

$$0.20 < f5/f1 < 4.0;$$

$$0.10 < f6/f8 < 4.5;$$

and

$$-1.7 < f7/f8 < -0.20.$$

According to another aspect of the present disclosure that is not part of the claimed invention, an imaging lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has positive refractive power, the object-side surface of the first lens element is convex in a paraxial region thereof, and the image-side surface of the first lens element is concave in a paraxial region thereof. The object-side surface of the second lens element is convex in a paraxial region thereof, and the image-side surface of the second lens element is concave in a paraxial region thereof. The fifth lens element has positive refractive power. The sixth lens element has negative refractive power, and the image-side surface of the sixth lens element is concave in a paraxial region thereof. The seventh lens element has positive refractive power, and the object-side surface of the seventh lens element is convex in a paraxial region thereof. The eighth lens element has negative refractive power. At least one of the object-side surface and the image-side surface of at least one lens element of the imaging lens assembly has at least one critical point in an off-axis region thereof.

When an Abbe number of the first lens element is V1, an Abbe number of the second lens element is V2, an Abbe number of the third lens element is V3, an Abbe number of the fourth lens element is V4, an Abbe number of the fifth lens element is V5, a curvature radius of the image-side surface of the sixth lens element is R12, a curvature radius of the object-side surface of the seventh lens element is R13, a focal length of the first lens element is f1, a focal length of the fifth lens element is f5, a focal length of the sixth lens element is f6, a focal length of the eighth lens element is f8, an axial distance between the fifth lens element and the sixth lens element is T56, and an axial distance between the sixth lens element and the seventh lens element is T67, the following conditions are satisfied:

$$2.0 < (V1+V3+V5)/(V2+V4) < 9.0;$$

$$0.60 < R12/R13 < 3.3;$$

$$0.20 < f5/f1 < 4.0;$$

$$0.10 < f6/f8 < 4.5;$$

and

$$0.95 < T56/T67.$$

According to another aspect of the present disclosure, an image capturing unit includes one of the aforementioned imaging lens assemblies and an image sensor, wherein the image sensor is disposed on an image surface of the imaging lens assembly.

According to another aspect of the present disclosure, an electronic device includes the aforementioned image capturing unit.

## BRIEF DESCRIPTION OF THE DRAWINGS

The disclosure can be better understood by reading the following detailed description of the embodiments, with reference made to the accompanying drawings as follows:

Fig. 1 is a schematic view of an image capturing unit according to the 1st embodiment of the present disclosure;
Fig. 2 shows spherical aberration curves, astigmatic field curves and a distortion curve of the image capturing unit according to the 1st embodiment;
Fig. 3 is a schematic view of an image capturing unit according to the 2nd embodiment of the present disclosure;
Fig. 4 shows spherical aberration curves, astigmatic field curves and a distortion curve of the image capturing unit according to the 2nd embodiment;
Fig. 5 is a schematic view of an image capturing unit according to the 3rd embodiment of the present disclosure;
Fig. 6 shows spherical aberration curves, astigmatic field curves and a distortion curve of the image capturing unit according to the 3rd embodiment;
Fig. 7 is a schematic view of an image capturing unit according to the 4th embodiment of the present disclosure;
Fig. 8 shows spherical aberration curves, astigmatic field curves and a distortion curve of the image capturing unit according to the 4th embodiment;
Fig. 9 is a schematic view of an image capturing unit according to the 5th embodiment of the present disclosure;
Fig. 10 shows spherical aberration curves, astigmatic field curves and a distortion curve of the image capturing unit according to the 5th embodiment;
Fig. 11 is a schematic view of an image capturing unit according to the 6th embodiment of the present disclosure;
Fig. 12 shows spherical aberration curves, astigmatic field curves and a distortion curve of the image capturing unit according to the 6th embodiment;
Fig. 13 is a schematic view of an image capturing unit according to the 7th embodiment of the present disclosure;
Fig. 14 shows spherical aberration curves, astigmatic field curves and a distortion curve of the image capturing unit according to the 7th embodiment;
Fig. 15 is a schematic view of an image capturing unit according to the 8th embodiment of the present disclosure;
Fig. 16 shows spherical aberration curves, astigmatic field curves and a distortion curve of the image capturing unit according to the 8th embodiment;
Fig. 17 is a schematic view of an image capturing unit according to the 9th embodiment of the present disclosure;

Fig. 18 shows spherical aberration curves, astigmatic field curves and a distortion curve of the image capturing unit according to the 9th embodiment;

Fig. 19 is a perspective view of an image capturing unit according to the 10th embodiment of the present disclosure;

Fig. 20 is one perspective view of an electronic device according to the 11th embodiment of the present disclosure;

Fig. 21 is another perspective view of the electronic device in Fig. 20;

Fig. 22 is a block diagram of the electronic device in Fig. 20;

Fig. 23 is one perspective view of an electronic device according to the 12th embodiment of the present disclosure;

Fig. 24 is one perspective view of an electronic device according to the 13th embodiment of the present disclosure;

Fig. 25 shows a schematic view of Y42, Y62, Y71, Y72, Y82, Yc42, Yc62, Yc71, Yc72, Yc82 and several critical points of lens elements in off-axis regions thereof according to the 1st embodiment of the present disclosure;

Fig. 26 shows a schematic view of a configuration of a light-folding element in an imaging lens assembly according to one embodiment of the present disclosure;

Fig. 27 shows a schematic view of another configuration of a light-folding element in an imaging lens assembly according to one embodiment of the present disclosure; and

Fig. 28 shows a schematic view of a configuration of two light-folding elements in an imaging lens assembly according to one embodiment of the present disclosure.

## DETAILED DESCRIPTION

An imaging lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has positive refractive power. Therefore, it is favorable for miniaturizing the object side of the imaging lens assembly. The object-side surface of the first lens element is convex in a paraxial region thereof. Therefore, it is favorable for adjusting the traveling direction of incident light into the imaging lens assembly, thereby increasing the field of view. The image-side surface of the first lens element is concave in a paraxial region thereof. Therefore, it is favorable for adjusting the travelling direction of light, thereby reducing the outer diameter at the object side of the imaging lens assembly.

The object-side surface of the second lens element is convex in a paraxial region thereof. Therefore, it is favorable for combining the second lens element with the first lens element to correct aberrations. The image-side surface of the second lens element is concave in a paraxial region thereof. Therefore, it is favorable for adjusting the lens shape of the second lens element, thereby correcting aberrations such as astigmatism.

The image-side surface of the fourth lens element can be concave in a paraxial region thereof. Therefore, it is favorable for combining the fourth lens element with the fifth lens element to correct aberrations.

The fifth lens element has positive refractive power. Therefore, it is favorable for properly adjusting the refractive power distribution of the imaging lens assembly, thereby reducing the sensitivity thereof so as to increase assembly yield rate.

The sixth lens element has negative refractive power. Therefore, it is favorable for balancing the refractive power distribution at the image side of the imaging lens assembly, thereby correcting aberrations such as spherical aberration. The image-side surface of the sixth lens element is concave in a paraxial region thereof. Therefore, it is favorable for adjusting the lens shape and the refractive power of the sixth lens element so as to correct aberrations.

The seventh lens element has positive refractive power. Therefore, it is favorable for miniaturizing the image side of the imaging lens assembly. The object-side surface of the seventh lens element is convex in a paraxial region thereof. Therefore, it is favorable for adjusting the lens shape and the refractive power of the seventh lens element so as to correct aberrations.

The eighth lens element has negative refractive power. Therefore, it is favorable for properly balancing the refractive power distribution at the image side of the imaging lens assembly so as to correct aberrations. The image-side surface of the eighth lens element can be concave in a paraxial region thereof. Therefore, it is favorable for reducing the back focal length.

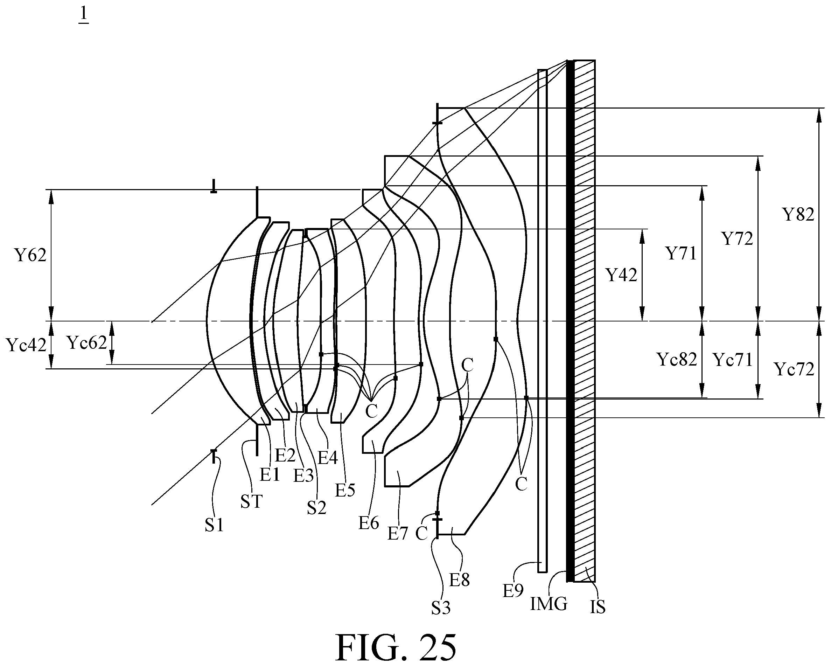

According to the present disclosure, at least one of the object-side surface and the image-side surface of at least one lens element of the imaging lens assembly has at least one critical point in an off-axis region thereof. Therefore, it is favorable for increasing design flexibility of the lens surface, thereby miniaturizing the overall size and correcting aberrations. Moreover, at least one of the object-side surface and the image-side surface of each of at least two lens elements of the imaging lens assembly can have at least one critical point in an off-axis region thereof. Moreover, at least one of the object-side surface and the image-side surface of each of at least three lens elements of the imaging lens assembly can have at least one critical point in an off-axis region thereof. Moreover, the image-side surface of the fourth lens element can have at least one convex critical point in an off-axis region thereof. Therefore, it is favorable for adjusting the travelling direction of light, thereby improving image quality such as relative illuminance at the periphery of the image surface. When a vertical distance between a convex critical point on the image-side surface of the fourth lens element and an optical axis is Yc42, and a maximum effective radius of the image-side surface of the fourth lens element is Y42, at least one convex critical point on the image-side surface of the fourth lens element in the off-axis region can satisfy the following condition: 0.25 < Yc42/Y42 < 0.80. Therefore, it is favorable for further improving image quality. Moreover, the image-side surface of the sixth lens element can have at least one convex critical point in an off-axis region thereof. Therefore, it is favorable for adjusting the lens shape of the sixth lens element, thereby correcting off-axis aberrations such as field curvature. When a vertical distance between a convex critical point on the image-side surface of the sixth lens element and the optical axis is Yc62, and a maximum effective radius of the image-side surface of the sixth lens element is Y62, at least one convex critical point on the image-side surface of the sixth lens element in the off-axis region can satisfy the following condition: 0.15 < Yc62/Y62 < 0.55. Therefore, it is favorable for further correcting aberrations. Moreover, the object-side surface of the seventh lens element can have at least one concave critical point in an off-axis region thereof. Therefore, it is favorable for adjusting the light incident angle on the seventh lens element, thereby reducing surface reflection of light from the wide field of view. When a vertical distance between a concave critical point on the object-side surface of the seventh lens element and the optical axis is Yc71, and a maximum effective radius of the object-side surface of the seventh lens element is Y71, at least one concave critical point on the object-side surface of the seventh lens element in the off-axis region can satisfy the following condition: 0.35 < Yc71/Y71 < 0.75. Therefore, it is favorable for further reducing surface reflection. Moreover, the image-side surface of the seventh lens element can have at least one convex critical point in an off-axis region thereof. Therefore, it is favorable for adjusting the lens shape of the seventh lens element so as to correct off-axis aberrations. When a vertical distance between a convex critical point on the image-side surface of the seventh lens element and the optical axis is Yc72, and a maximum effective radius of the image-side surface of the seventh lens element is Y72, at least one convex critical point on the image-side surface of the seventh lens element in the off-axis region can satisfy the following condition: 0.35 < Yc72/Y72 < 0.80. Therefore, it is favorable for further correcting aberrations. Moreover, the image-side surface of the eighth lens element can have at least one convex critical point in an off-axis region thereof. Therefore, it is favorable for adjusting the light incident angle on the image surface so as to increase response efficiency of the image sensor, thereby further improving image quality such as illuminance. When a vertical distance between a convex critical point on the image-side surface of the eighth lens element and the optical axis is Yc82, and a maximum effective radius of the image-side surface of the eighth lens element is Y82, at least one convex critical point on the image-side surface of the eighth lens element in the off-axis region can satisfy the following condition: 0.15 < Yc82/Y82 < 0.55. Therefore, it is favorable further improving image quality. Please refer to Fig. 25, which shows a schematic view of Y42, Y62, Y71, Y72, Y82, Yc42, Yc62, Yc71, Yc72, Yc82 and several critical points C of lens elements in off-axis regions thereof according to the 1st embodiment of the present disclosure.

When an Abbe number of the first lens element is V1, an Abbe number of the second lens element is V2, an Abbe number of the third lens element is V3, an Abbe number of the fourth lens element is V4, and an Abbe number of the fifth lens element is V5, the following condition is satisfied: 2.0 < (V1+V3+V5)/(V2+V4) < 9.0. Therefore, it is favorable for adjusting the material configuration of the imaging lens assembly so as to correct aberrations such as chromatic aberrations. Moreover, the following condition can also be satisfied: 2.5 < (V1+V3+V5)/(V2+V4) < 8.5. Moreover, the following condition can also be satisfied: 3.0 < (V1+V3+V5)/(V2+V4) < 8.0. Moreover, the following condition can also be satisfied: 3.5 < (V1+V3+V5)/(V2+V4) < 7.5. Moreover, the following condition can also be satisfied: 4.0 < (V1+V3+V5)/(V2+V4) < 7.0.

When a curvature radius of the image-side surface of the sixth lens element is R12, and a curvature radius of the object-side surface of the seventh lens element is R13, the following condition is satisfied: 0.60 < R12/R13 < 3.3. Therefore, it is favorable for the sixth lens element collaborating with the seventh lens element so as to correct aberrations. Moreover, the following condition can also be satisfied: 0.78 < R12/R13 < 3.0. Moreover, the following condition can also be satisfied: 0.96 < R12/R13 < 2.6. Moreover, the following condition can also be satisfied: 1.1 < R12/R13 < 2.4.

When a focal length of the first lens element is f1, and a focal length of the fifth lens element is f5, the following condition is satisfied: 0.20 < f5/f1 < 4.0. Therefore, it is favorable for properly adjusting the refractive power distribution of the imaging lens assembly, thereby preventing overmuch aberrations generated while miniaturizing the overall size. Moreover, the following condition can also be satisfied: 0.40 < f5/f1 < 3.5. Moreover, the following condition can also be satisfied: 0.60 < f5/f1 < 3.0. Moreover, the following condition can also be satisfied: 0.80 < f5/f1 < 2.5.

When a focal length of the sixth lens element is f6, and a focal length of the eighth lens element is f8, the following condition is satisfied: 0.10 < f6/f8 < 4.5. Therefore, it is favorable for properly adjusting the refractive power distribution at the image side of the imaging lens assembly, thereby reducing the sensitivity of the imaging lens assembly so as to increase assembly yield rate. Moreover, the following condition can also be satisfied: 0.50 < f6/f8 < 4.0. Moreover, the following condition can also be satisfied: 0.90 < f6/f8 < 3.5.

When a focal length of the seventh lens element is f7, and the focal length of the eighth lens element is f8, the following condition is satisfied: -1.7 < f7/f8 < -0.20. Therefore, it is favorable for the seventh lens element collaborating with the eighth lens element so as to correct aberrations such as spherical aberration. Moreover, the following condition can also be satisfied: -1.5 < f7/f8 < -0.40. Moreover, the following condition can also be satisfied: -1.3 < f7/f8 < -0.60.

When an axial distance between the fifth lens element and the sixth lens element is T56, and an axial distance between the sixth lens element and the seventh lens element is T67, the following condition can be satisfied: 0.95 < T56/T67. Therefore, it is favorable for adjusting the lens configuration at the image side of the imaging lens assembly, thereby obtaining a proper balance between size distribution and image quality. Moreover, the following condition can also be satisfied: 1.4 < T56/T67 < 60. Moreover, the following condition can also be satisfied: 1.8 < T56/T67 < 50. Moreover, the following condition can also be satisfied: 2.2 < T56/T67 < 40. Moreover, the following condition can also be satisfied: 2.6 < T56/T67 < 30.

When a central thickness of the first lens element is CT1, a central thickness of the fifth lens element is CT5, an axial distance between the first lens element and the second lens element is T12, and an axial distance between the fourth lens element and the fifth lens element is T45, the following condition is satisfied: 25.0 < CT1/T12+CT5/T45. Therefore, it is favorable for properly adjusting the lens configuration at the object side of the imaging lens assembly, thereby miniaturizing the size at the object side. Moreover, the following condition can also be satisfied: 29.0 < CT1/T12+CT5/T45 < 150. Moreover, the following condition can also be satisfied: 33.0 < CT1/T12+CT5/T45 < 100.

When a curvature radius of the object-side surface of the second lens element is R3, a curvature radius of the image-side surface of the second lens element is R4, and a focal length of the second lens element is f2, the following condition can be satisfied: $0 \leq$ (R3+R4)/|f2| < 0.90. Therefore, it is favorable for adjusting the lens shape and the refractive power of the second lens element so as to correct aberrations. Moreover, the following condition can also be satisfied: $0 \leq$ (R3+R4)/|f2| < 0.70.

When an f-number of the imaging lens assembly is Fno, the following condition can be satisfied: 0.90 < Fno < 2.0. Therefore, it is favorable for obtaining a proper balance among illuminance, the depth of field and image quality. Moreover, the following condition can also be satisfied: 1.1 < Fno < 1.8.

When half of a maximum field of view of the imaging lens assembly is HFOV, the following condition can be satisfied: 3.5 < 1/|1-tan(HFOV)|. Therefore, it is favorable for obtaining a proper balance between the field of view and image quality.

When a focal length of the imaging lens assembly is f, the curvature radius of the image-side surface of the sixth lens element is R12, and the curvature radius of the object-side surface of the seventh lens element is R13, the following condition can be satisfied: 3.4 < f/R12+f/R13 < 7.0. Therefore, it is favorable for the sixth lens element collaborating with the seventh lens element so as to correct aberrations.

When the focal length of the imaging lens assembly is f, an axial distance between the object-side surface of the first lens element and the image surface is TL, an entrance pupil diameter of the imaging lens assembly is EPD, and a maximum image height of the imaging lens assembly (which can be half of a diagonal length of an effective photosensitive area of the image sensor) is ImgH, the following condition is satisfied: 1.2 < (f×TL)/(EPD×ImgH) < 2.2. Therefore, it is favorable for obtaining a proper balance among the field of view, the overall size, the aperture size and the size of the image surface.

When a curvature radius of the object-side surface of the first lens element is R1, and a curvature radius of the image-side surface of the first lens element is R2, the following condition can be satisfied: 1.5 < R2/R1 < 4.5. Therefore, it is favorable for adjusting the lens shape of the first lens element, thereby correcting aberrations such as astigmatism.

When the focal length of the imaging lens assembly is f, the focal length of the second lens element is f2, a focal length of the third lens element is f3, and a focal length of the fourth lens element is f4, the following condition can be satisfied: |f/f2|+|f/f3|+|f/f4| < 1.2. Therefore, it is favorable for the refractive powers of the second lens element through the fourth lens element collaborating with one another so as to enlarge the field of view and correct aberrations.

When a central thickness of the second lens element is CT2, a central thickness of the third lens element is CT3, a central thickness of the fourth lens element is CT4, an axial distance between the second lens element and the third lens element is T23, and an axial distance between the third lens element and the fourth lens element is T34, the following condition can be satisfied: 0.80 < (CT2+CT3+CT4)/(T23+T34) < 1.7. Therefore, it is favorable for the second lens element through the fourth lens element collaborating with one another so as to miniaturize the object side of the imaging lens assembly.

When a central thickness of the seventh lens element is CT7, a central thickness of the eighth lens element is CT8, and an axial distance between the seventh lens element and the eighth lens element is T78, the following condition can be satisfied: 0.65 < (CT7+CT8)/T78 < 2.2. Therefore, it is favorable for the seventh lens element collaborating with the eighth lens element, thereby correcting off-axis aberrations. Moreover, the following condition can also be satisfied: 0.75 < (CT7+CT8)/T78 < 1.9.

When the axial distance between the object-side surface of the first lens element and the image surface is TL, and the maximum image height of the imaging lens assembly is ImgH, the following condition can be satisfied: 0.80 < TL/ImgH < 1.5. Therefore, it is favorable for obtaining a proper balance between reduction of the total track length and enlargement of the image surface.

When the focal length of the imaging lens assembly is f, and a curvature radius of the image-side surface of the eighth lens element is R16, the following condition can be satisfied: $1.8 < f/R16 < 4.0$. Therefore, it is favorable for adjusting the lens shape and the refractive power of the eighth lens element, thereby correcting aberrations and reducing the back focal length. Moreover, the following condition can also be satisfied: $2.1 < f/R16 < 3.5$.

According to the present disclosure, the aforementioned features and conditions can be utilized in numerous combinations so as to achieve corresponding effects.

According to the present disclosure, the lens elements of the imaging lens assembly can be made of either glass or plastic material. When the lens elements are made of glass material, the refractive power distribution of the imaging lens assembly may be more flexible, and the influence on imaging caused by external environment temperature change may be reduced. The glass lens element can either be made by grinding or molding. When the lens elements are made of plastic material, the manufacturing costs can be effectively reduced. Furthermore, surfaces of each lens element can be arranged to be spherical or aspheric. Spherical lens elements are simple in manufacture. Aspheric lens element design allows more control variables for eliminating aberrations thereof and reducing the required number of lens elements, and the total track length of the imaging lens assembly can therefore be effectively shortened. Additionally, the aspheric surfaces may be formed by plastic injection molding or glass molding.

According to the present disclosure, when a lens surface is aspheric, it means that the lens surface has an aspheric shape throughout its optically effective area, or a portion(s) thereof.

According to the present disclosure, one or more of the lens elements' material may optionally include an additive which generates light absorption and interference effects and alters the lens elements' transmittance in a specific range of wavelength for a reduction in unwanted stray light or color deviation. For example, the additive may optionally filter out light in the wavelength range of 600 nm to 800 nm to reduce excessive red light and/or near infrared light; or may optionally filter out light in the wavelength range of 350 nm to 450 nm to reduce excessive blue light and/or near ultraviolet light from interfering the final image. The additive may be homogeneously mixed with a plastic material to be used in manufacturing a mixed-material lens element by injection molding. Moreover, the additive may be coated on the lens surfaces to provide the abovementioned effects.

According to the present disclosure, each of an object-side surface and an image-side surface has a paraxial region and an off-axis region. The paraxial region refers to the region of the surface where light rays travel close to the optical axis, and the off-axis region refers to the region of the surface away from the paraxial region. Particularly, unless otherwise stated, when the lens element has a convex surface, it indicates that the surface is convex in the paraxial region thereof; when the lens element has a concave surface, it indicates that the surface is concave in the paraxial region thereof. Moreover, when a region of refractive power or focus of a lens element is not defined, it indicates that the region of refractive power or focus of the lens element is in the paraxial region thereof.

According to the present disclosure, a critical point is a non-axial point of the lens surface where its tangent is perpendicular to the optical axis.

According to the present disclosure, the image surface of the imaging lens assembly, based on the corresponding image sensor, can be flat or curved, especially a curved surface being concave facing towards the object side of the imaging lens assembly.

According to the present disclosure, an image correction unit, such as a field flattener, can be optionally disposed between the lens element closest to the image side of the imaging lens assembly along the optical path and the image surface for correction of aberrations such as field curvature. The optical properties of the image correction unit, such as curvature, thickness, index of refraction, position and surface shape (convex or concave surface with spherical, aspheric, diffractive or Fresnel types), can be adjusted according to the design of the image capturing unit. In general, a preferable image correction unit is, for example, a thin transparent element having a concave object-side surface and a planar image-side surface, and the thin transparent element is disposed near the image surface.

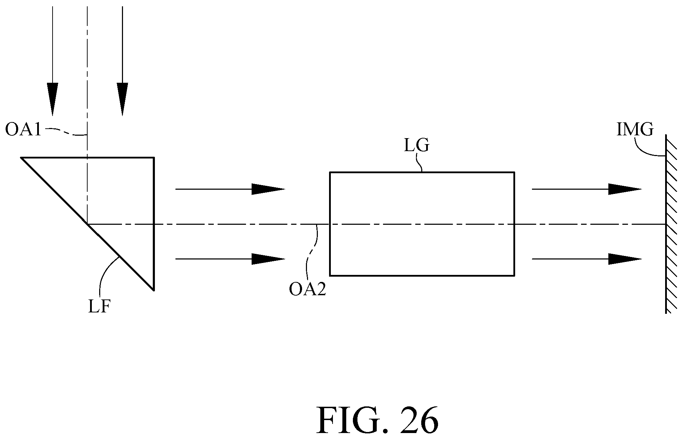

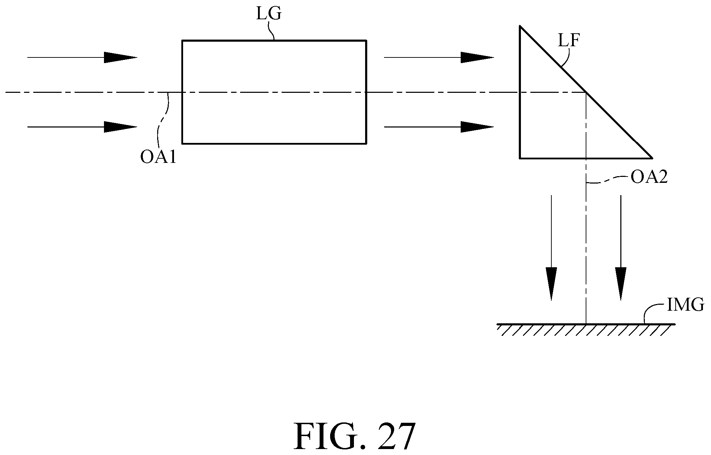

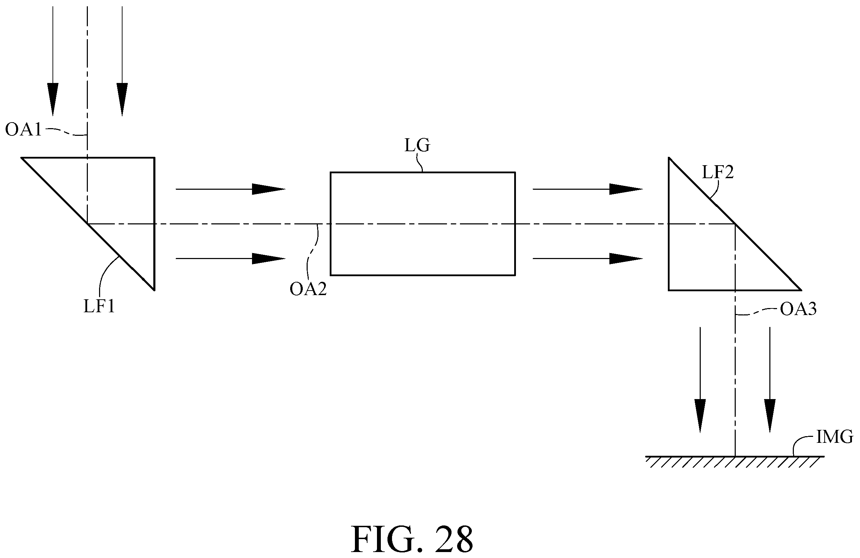

According to the present disclosure, at least one light-folding element, such as a prism or a mirror, can be optionally disposed between an imaged object and the image surface on the imaging optical path, such that the imaging lens assembly can be more flexible in space arrangement, and therefore the dimensions of an electronic device is not restricted by the total track length of the imaging lens assembly. Specifically, please refer to Fig. 26 and Fig. 27. Fig. 26 shows a schematic view of a configuration of a light-folding element in an imaging lens assembly according to one embodiment of the present disclosure, and Fig. 27 shows a schematic view of another configuration of a light-folding element in an imaging lens assembly according to one embodiment of the present disclosure. In Fig. 26 and Fig. 27, the imaging lens assembly can have, in order from an imaged object (not shown in the figures) to an image surface IMG along an optical path, a first optical axis OA1, a light-folding element LF and a second optical axis OA2. The light-folding element LF can be disposed between the imaged object and a lens group LG of the imaging lens assembly as shown in Fig. 26 or disposed between a lens group LG of the imaging lens assembly and the image surface IMG as shown in Fig. 27. Furthermore, please refer to Fig. 28, which shows a schematic view of a configuration of two light-folding elements in an imaging lens assembly according to one embodiment of the present disclosure. In Fig. 28, the imaging lens assembly can have, in order from an imaged object (not shown in the figure) to an image surface IMG along an optical path, a first optical axis OA1, a first light-folding element LF1, a second optical axis OA2, a second light-folding element LF2 and a third optical axis OA3. The first light-folding element LF1 is disposed between the imaged object and a lens group LG of the imaging lens assembly, the second light-folding element LF2 is disposed between the lens group LG of the imaging lens assembly and the image surface IMG, and the travelling direction of light on the first optical axis OA1 can be the same direction as the travelling direction of light on the third optical axis OA3 as shown in Fig. 28. The imaging lens assembly can be optionally provided with three or more light-folding elements, and the present disclosure is not limited to the type, amount and position of the light-folding elements of the embodiments disclosed in the aforementioned figures.

According to the present disclosure, the imaging lens assembly can include at least one stop, such as an aperture stop, a glare stop or a field stop. Said glare stop or said field stop is set for eliminating the stray light and thereby improving image quality thereof.

According to the present disclosure, an aperture stop can be configured as a front stop or a middle stop. A front stop disposed between an imaged object and the first lens element can provide a longer distance between an exit pupil of the imaging lens assembly and the image surface to produce a telecentric effect, and thereby improves the image-sensing efficiency of an image sensor (for example, CCD or CMOS). A middle stop disposed between the first lens element and the image surface is favorable for enlarging the viewing angle of the imaging lens assembly and thereby provides a wider field of view for the same.

According to the present disclosure, the imaging lens assembly can include an aperture control unit. The aperture control unit may be a mechanical component or a light modulator, which can control the size and shape of the aperture through electricity or electrical signals. The mechanical component can include a movable member, such as a blade assembly or a light shielding sheet. The light modulator can include a shielding element, such as a filter, an electrochromic material or a liquid-crystal layer. The aperture control unit controls the amount of incident light or exposure time to enhance the capability of image quality adjustment. In addition, the aperture control unit can be the aperture stop of the present disclosure, which changes the f-number to obtain different image effects, such as the depth of field or lens speed.

According to the present disclosure, the imaging lens assembly can include one or more optical elements for limiting the form of light passing through the imaging lens assembly. Each optical element can be, but not limited to, a filter, a polarizer, etc., and each optical element can be, but not limited to, a single-piece element, a composite component, a thin film, etc. The optical element can be located at the object side or the image side of the imaging lens assembly or between any two adjacent lens elements so as to allow light in a specific form to pass through, thereby meeting application requirements.

According to the above description of the present disclosure, the following specific embodiments are provided for further explanation.


## 1st Embodiment

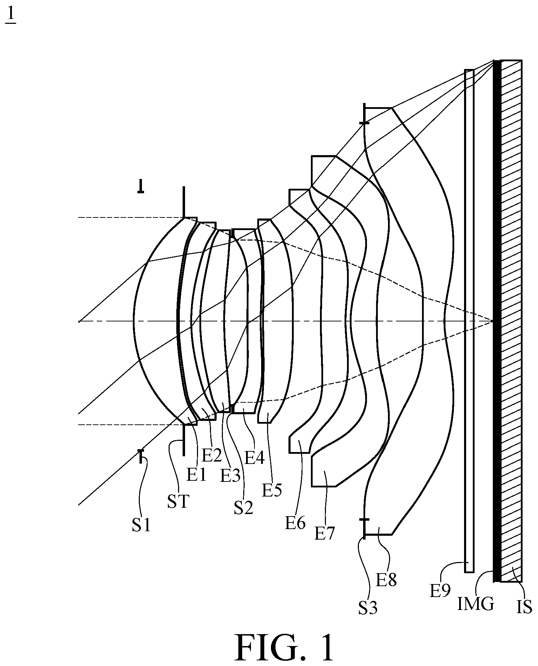

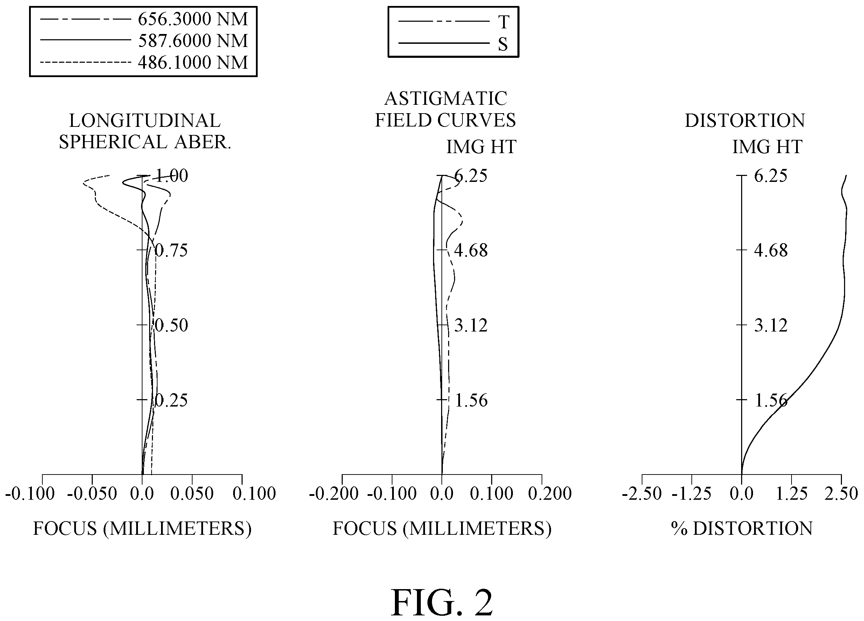

Fig. 1 is a schematic view of an image capturing unit according to the 1st embodiment of the present disclosure. Fig. 2 shows, in order from left to right, spherical aberration curves, astigmatic field curves and a distortion curve of the image capturing unit according to the 1st embodiment. In Fig. 1, the image capturing unit 1 includes the imaging lens assembly (its reference numeral is omitted) of the present disclosure and an image sensor IS. The imaging lens assembly includes, in order from an object side to an image side along an optical axis, a stop S1, an aperture stop ST, a first lens element E1, a second lens element E2, a third lens element E3, a stop S2, a fourth lens element E4, a fifth lens element E5, a sixth lens element E6, a seventh lens element E7, a stop S3, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has two critical points in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The equation of the aspheric surface profiles of the aforementioned lens elements of the 1st embodiment is expressed as follows:

$$X(Y) = (Y^2/R)/\left(1 + sqrt\left(1 - (1+k)\times(Y/R)^2\right)\right) + \sum_i (Ai)\times(Y^i)$$

, where,

X is the displacement in parallel with an optical axis from an axial vertex on the aspheric surface to a point at a distance of Y from the optical axis on the aspheric surface;
Y is the vertical distance from the point on the aspheric surface to the optical axis;
R is the curvature radius;
k is the conic coefficient; and
Ai is the i-th aspheric coefficient, and in the embodiments, i may be, but is not limited to, 4, 6, 8, 10, 12, 14, 16, 18, 20, 22, 24, 26, 28 and 30.

In the imaging lens assembly of the image capturing unit 1 according to the 1st embodiment, when a focal length of the imaging lens assembly is f, an f-number of the imaging lens assembly is Fno, and half of a maximum field of view of the imaging lens assembly is HFOV, these parameters have the following values: f = 6.92 millimeters (mm), Fno = 1.38, HFOV = 41.3 degrees (deg.).

When an Abbe number of the first lens element E1 is V1, an Abbe number of the second lens element E2 is V2, an Abbe number of the third lens element E3 is V3, an Abbe number of the fourth lens element E4 is V4, and an Abbe number of the fifth lens element E5 is V5, the following condition is satisfied: (V1+V3+V5)/(V2+V4) = 4.57.

When a central thickness of the first lens element E1 is CT1, a central thickness of the fifth lens element E5 is CT5, an axial distance between the first lens element E1 and the second lens element E2 is T12, and an axial distance between the fourth lens element E4 and the fifth lens element E5 is T45, the following condition is satisfied: CT1/T12+CT5/T45 = 39.14. In this embodiment, an axial distance between two adjacent lens elements is a distance in a paraxial region between two adjacent lens surfaces of the two adjacent lens elements.

When a central thickness of the second lens element E2 is CT2, a central thickness of the third lens element E3 is CT3, a central thickness of the fourth lens element E4 is CT4, an axial distance between the second lens element E2 and the third lens element E3 is T23, and an axial distance between the third lens element E3 and the fourth lens element E4 is T34, the following condition is satisfied: (CT2+CT3+CT4)/(T23+T34) = 1.54.

When a central thickness of the seventh lens element E7 is CT7, a central thickness of the eighth lens element E8 is CT8, and an axial distance between the seventh lens element E7 and the eighth lens element E8 is T78, the following condition is satisfied: (CT7+CT8)/T78 = 1.05.

When an axial distance between the fifth lens element E5 and the sixth lens element E6 is T56, and an axial distance between the sixth lens element E6 and the seventh lens element E7 is T67, the following condition is satisfied:

T56/T67 = 5.54.

When an axial distance between the object-side surface of the first lens element E1 and the image surface IMG is TL, and a maximum image height of the imaging lens assembly is ImgH, the following condition is satisfied: TL/ImgH = 1.39.

When a curvature radius of the object-side surface of the first lens element E1 is R1, and a curvature radius of the image-side surface of the first lens element E1 is R2, the following condition is satisfied: R2/R1 = 2.44.

When a curvature radius of the object-side surface of the second lens element E2 is R3, a curvature radius of the image-side surface of the second lens element E2 is R4, and a focal length of the second lens element E2 is f2, the following condition is satisfied: (R3+R4)/|f2| = 0.57.

When a curvature radius of the image-side surface of the sixth lens element E6 is R12, and a curvature radius of the object-side surface of the seventh lens element E7 is R13, the following condition is satisfied: R12/R13 = 1.65.

When the focal length of the imaging lens assembly is f, the focal length of the second lens element E2 is f2, a focal length of the third lens element E3 is f3, and a focal length of the fourth lens element E4 is f4, the following condition is satisfied: |f/f2|+|f/f3|+|f/f4| = 1.08.

When the focal length of the imaging lens assembly is f, the curvature radius of the image-side surface of the sixth lens element E6 is R12, and the curvature radius of the object-side surface of the seventh lens element E7 is R13, the following condition is satisfied: f/R12+f/R13 = 4.81.

When the focal length of the imaging lens assembly is f, and a curvature radius of the image-side surface of the eighth lens element E8 is R16, the following condition is satisfied: f/R16 = 2.91.

When a focal length of the first lens element E1 is f1, and a focal length of the fifth lens element E5 is f5, the following condition is satisfied: f5/f1 = 2.14.

When a focal length of the sixth lens element E6 is f6, and a focal length of the eighth lens element E8 is f8, the following condition is satisfied: f6/f8 = 1.99.

When a focal length of the seventh lens element E7 is f7, and the focal length of the eighth lens element E8 is f8, the following condition is satisfied: f7/f8 = -0.89.

When the focal length of the imaging lens assembly is f, the axial distance between the object-side surface of the first lens element E1 and the image surface IMG is TL, an entrance pupil diameter of the imaging lens assembly is EPD, and the maximum image height of the imaging lens assembly is ImgH, the following condition is satisfied: (f×TL)/(EPD×ImgH) = 1.92.

When half of the maximum field of view of the imaging lens assembly is HFOV, the following condition is satisfied: 1/|1-tan(HFOV)| = 8.28.

When a vertical distance between a convex critical point on the image-side surface of the fourth lens element E4 and the optical axis is Yc42, and a maximum effective radius of the image-side surface of the fourth lens element E4 is Y42, the following condition is satisfied: Yc42/Y42 = 0.52.

When a vertical distance between a convex critical point on the image-side surface of the sixth lens element E6 and the optical axis is Yc62, and a maximum effective radius of the image-side surface of the sixth lens element E6 is Y62, the following condition is satisfied: Yc62/Y62 = 0.33.

When a vertical distance between a concave critical point on the object-side surface of the seventh lens element E7 and the optical axis is Yc71, and a maximum effective radius of the object-side surface of the seventh lens element E7 is Y71, the following condition is satisfied: Yc71/Y71 = 0.57.

When a vertical distance between a convex critical point on the image-side surface of the seventh lens element E7 and the optical axis is Yc72, and a maximum effective radius of the image-side surface of the seventh lens element E7 is Y72, the following condition is satisfied: Yc72/Y72 = 0.59.

When a vertical distance between a convex critical point on the image-side surface of the eighth lens element E8 and the optical axis is Yc82, and a maximum effective radius of the image-side surface of the eighth lens element E8 is Y82, the following condition is satisfied: Yc82/Y82 = 0.36.

The detailed optical data of the 1st embodiment are shown in Table 1A and the aspheric surface data are shown in Table 1B below.

| TABLE 1A | | | | | | | |
|---|---|---|---|---|---|---|---|
| 1st Embodiment | | | | | | | |
| f = 6.92 mm, Fno = 1.38, HFOV = 41.3 deg. | | | | | | | |
| Surface # | | Curvature Radius | Thickness | Material | Index | Abbe # | Focal Length |
| 0 | Object | Plano | Infinity | | | | |

(continued)

| TABLE 1A | | | | | | | | |
|---|---|---|---|---|---|---|---|---|
| 1st Embodiment | | | | | | | | |
| f = 6.92 mm, Fno = 1.38, HFOV = 41.3 deg. | | | | | | | | |
| Surface # | | Curvature Radius | | Thickness | Material | Index | Abbe # | Focal Length |
| 1 | Stop | Plano | | 1.047 | | | | |
| 2 | Ape. Stop | Plano | | -1.215 | | | | |
| 3 | Lens 1 | 3.2007 | (ASP) | 1.051 | Plastic | 1.545 | 56.1 | 9.22 |
| 4 | | 7.7958 | (ASP) | 0.039 | | | | |
| 5 | Lens 2 | 6.0649 | (ASP) | 0.300 | Plastic | 1.686 | 18.4 | -17.69 |
| 6 | | 3.9625 | (ASP) | 0.218 | | | | |
| 7 | Lens 3 | 4.7368 | (ASP) | 0.579 | Plastic | 1.544 | 56.0 | 17.73 |
| 8 | | 8.9064 | (ASP) | 0.202 | | | | |
| 9 | Stop | Plano | | 0.359 | | | | |
| 10 | Lens 4 | 17.7821 | (ASP) | 0.320 | Plastic | 1.686 | 18.4 | -22.83 |
| 11 | | 8.2676 | (ASP) | 0.059 | | | | |
| 12 | Lens 5 | 15.2276 | (ASP) | 0.719 | Plastic | 1.544 | 56.0 | 19.75 |
| 13 | | -35.8985 | (ASP) | 0.676 | | | | |
| 14 | Lens 6 | 11.1120 | (ASP) | 0.596 | Plastic | 1.566 | 37.4 | -10.58 |
| 15 | | 3.8161 | (ASP) | 0.122 | | | | |
| 16 | Lens 7 | 2.3074 | (ASP) | 0.634 | Plastic | 1.544 | 56.0 | 4.73 |
| 17 | | 20.2457 | (ASP) | -0.301 | | | | |
| 18 | Stop | Plano | | 1.405 | | | | |
| 19 | Lens 8 | 15.8844 | (ASP) | 0.520 | Plastic | 1.534 | 56.0 | -5.31 |
| 20 | | 2.3794 | (ASP) | 0.500 | | | | |
| 21 | Filter | Plano | | 0.210 | Glass | 1.517 | 64.2 | - |
| 22 | | Plano | | 0.480 | | | | |
| 23 | Image | Plano | | - | | | | |
| Note: Reference wavelength is 587.6 nm (d-line). | | | | | | | | |
| An effective radius of the stop S1 (Surface 1) is 3.120 mm. | | | | | | | | |
| An effective radius of the stop S2 (Surface 9) is 2.040 mm. | | | | | | | | |
| An effective radius of the stop S3 (Surface 18) is 4.790 mm. | | | | | | | | |

| TABLE 1B | | | | |
|---|---|---|---|---|
| Aspheric Coefficients | | | | |
| Surface # | 3 | 4 | 5 | 6 |
| k = | -6.71428E-02 | 8.80443E-01 | -8.97978E+00 | 0.00000E+00 |

(continued)

| TABLE 1B | | | | |
|---|---|---|---|---|
| Aspheric Coefficients | | | | |
| Surface # | 3 | 4 | 5 | 6 |
| A4 = | 9.645040813E-04 | 2.831444973E-03 | -2.447120117E-03 | -1.427223647E-02 |
| A6 = | -5.640914311E-04 | 4.047852799E-04 | 4.417504132E-03 | 4.951271969E-03 |
| A8 = | 8.749713000E-04 | -6.193964057E-03 | -9.715229072E-03 | -4.147952253E-03 |
| A10 = | -6.858794356E-04 | 5.349217294E-03 | 8.043886740E-03 | 2.417931569E-03 |
| A12 = | 3.223094940E-04 | -2.237523718E-03 | -3.600266479E-03 | -7.802183192E-04 |
| A14 = | -8.977927882E-05 | 5.122177292E-04 | 9.530082880E-04 | 1.139991151E-04 |
| A16 = | 1.430035425E-05 | -5.999333180E-05 | -1.458159204E-04 | 5.691708173E-06 |
| A18 = | -1.173856173E-06 | 2.843976289E-06 | 1.187400479E-05 | -3.527332740E-06 |
| A20 = | 3.704125391E-08 | -9.364442215E-09 | -4.006597758E-07 | 2.688505098E-07 |
| Surface # | 7 | 8 | 10 | 11 |
| k = | 0.00000E+00 | 0.00000E+00 | 0.00000E+00 | 2.16027E+00 |
| A4 = | -8.327069484E-03 | -4.432163216E-03 | -2.558302438E-02 | -5.821470989E-02 |
| A6 = | 1.582728534E-03 | 9.355483398E-04 | 1.493521664E-02 | 8.263845421E-02 |
| A8 = | -1.385152229E-03 | -2.869710581E-03 | -2.398482519E-02 | -1.102377896E-01 |
| A10 = | 3.516753299E-05 | 3.005812746E-03 | 2.041968651E-02 | 1.024577091E-01 |
| A12 = | 5.112053082E-04 | -2.055423426E-03 | -1.112258130E-02 | -7.018235403E-02 |
| A14 = | -3.948506474E-04 | 8.563976701 E-04 | 3.849807137E-03 | 3.573271381E-02 |
| A16 = | 1.529037102E-04 | -2.069795541E-04 | -8.093097222E-04 | -1.336264161E-02 |
| A18 = | -3.154081082E-05 | 2.708516993E-05 | 9.401611619E-05 | 3.590451466E-03 |
| A20 = | 3.281616484E-06 | -1.499898986E-06 | -4.631971109E-06 | -6.694219195E-04 |
| A22 = | -1.358241828E-07 | - | - | 8.166294508E-05 |
| A24 = | - | - | - | -5.825517721E-06 |
| A26 = | - | - | - | 1.832223566E-07 |
| Surface # | 12 | 13 | 14 | 15 |
| k = | 0.00000E+00 | 0.00000E+00 | 0.00000E+00 | -1.04843E+00 |
| A4 = | -5.796695373E-02 | -2.007820840E-02 | -2.542335478E-02 | -9.629837776E-02 |
| A6 = | 8.958392308E-02 | 7.371424645E-03 | 1.019597783E-02 | 2.473150949E-02 |
| A8 = | -1.036786279E-01 | -1.680216954E-03 | 2.774768978E-03 | 3.867726951E-03 |
| A10 = | 8.287811416E-02 | -3.037793145E-03 | -9.363355284E-03 | -8.483786226E-03 |
| A12 = | -4.622234323E-02 | 3.698234870E-03 | 8.062685773E-03 | 5.100040589E-03 |
| A14 = | 1.728189769E-02 | -2.080290133E-03 | -4.234325480E-03 | -1.952960788E-03 |
| A16 = | -3.665649238E-03 | 6.935785551E-04 | 1.511504565E-03 | 5.228460627E-04 |
| A18 = | 3.777788602E-05 | -1.351130166E-04 | -3.768839373E-04 | -9.919037727E-05 |
| A20 = | 2.335075206E-04 | 1.097588504E-05 | 6.556662591E-05 | 1.321062518E-05 |
| A22 = | -7.369967510E-05 | 1.210510223E-06 | -7.783212796E-06 | -1.202952116E-06 |
| A24 = | 1.137038323E-05 | -4.049023724E-07 | 5.994367848E-07 | 7.110255886E-08 |
| A26 = | -9.179175505E-07 | 4.018014638E-08 | -2.692859963E-08 | -2.452994798E-09 |

(continued)

| Surface # | 12 | 13 | 14 | 15 |
|---|---|---|---|---|
| A28 = | 3.092775214E-08 | -1.471007201E-09 | 5.342490121E-10 | 3.744115152E-11 |

| Surface # | 16 | 17 | 19 | 20 |
|---|---|---|---|---|
| k = | -1.08401E+00 | 0.00000E+00 | 0.00000E+00 | -7.34250E+00 |
| A4 = | -4.365273982E-02 | 4.145390831E-02 | -9.289881564E-02 | -5.081184671E-02 |
| A6 = | 1.141929405E-02 | -1.522461316E-03 | 3.698844633E-02 | 2.204104579E-02 |
| A8 = | -3.779063364E-03 | -1.299060690E-02 | -1.316251200E-02 | -7.827669114E-03 |
| A10 = | -1.213258627E-04 | 8.516882216E-03 | 3.639973017E-03 | 2.055159559E-03 |
| A12 = | 8.018164562E-04 | -3.045843134E-03 | -6.867243259E-04 | -3.891601623E-04 |
| A14 = | -4.325829547E-04 | 7.117056060E-04 | 8.769899280E-05 | 5.325796035E-05 |
| A16 = | 1.293191892E-04 | -1.144430840E-04 | -7.743458303E-06 | -5.305315381E-06 |
| A18 = | -2.518804644E-05 | 1.288437027E-05 | 4.799913232E-07 | 3.857961041E-07 |
| A20 = | 3.368710126E-06 | -1.013392523E-06 | -2.090642571E-08 | -2.038692948E-08 |
| A22 = | -3.101618576E-07 | 5.450611993E-08 | 6.284004618E-10 | 7.717976988E-10 |
| A24 = | 1.881226053E-08 | -1.908343801E-09 | -1.244091169E-11 | -2.034344708E-11 |
| A26 = | -6.732205228E-10 | 3.914288879E-11 | 1.462771545E-13 | 3.538853385E-13 |
| A28 = | 1.069127801E-11 | -3.564783177E-13 | -7.749933163E-16 | -3.647112752E-15 |
| A30 = | - | - | - | 1.684926244E-17 |

In Table 1A, the curvature radius, the thickness and the focal length are shown in millimeters (mm). Surface numbers 0-23 represent the surfaces sequentially arranged from the object side to the image side along the optical axis. In Table 1B, k represents the conic coefficient of the equation of the aspheric surface profiles. A4-A30 represent the aspheric coefficients ranging from the 4th order to the 30th order. The tables presented below for each embodiment are the corresponding schematic parameter and aberration curves, and the definitions of the tables are the same as Table 1A and Table 1B of the 1st embodiment. Therefore, an explanation in this regard will not be provided again.

## 2nd Embodiment

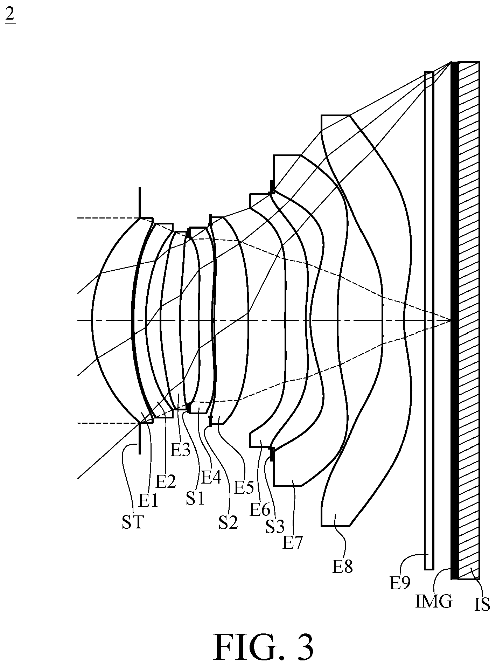

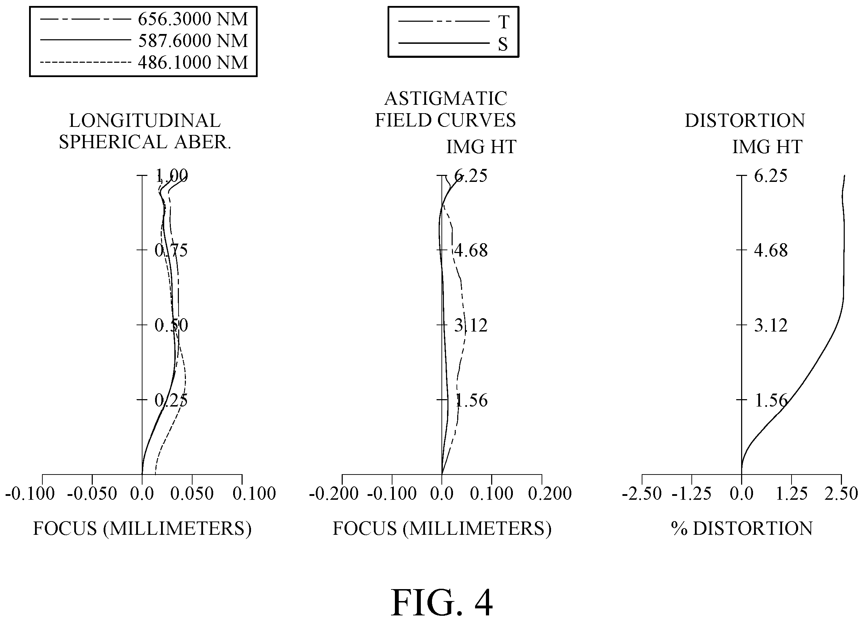

Fig. 3 is a schematic view of an image capturing unit according to the 2nd embodiment of the present disclosure. Fig. 4 shows, in order from left to right, spherical aberration curves, astigmatic field curves and a distortion curve of the image capturing unit according to the 2nd embodiment. In Fig. 3, the image capturing unit 2 includes the imaging lens assembly (its reference numeral is omitted) of the present disclosure and an image sensor IS. The imaging lens assembly includes, in order from an object side to an image side along an optical axis, an aperture stop ST, a first lens element E1, a second lens element E2, a third lens element E3, a stop S1, a fourth lens element E4, a stop S2, a fifth lens element E5, a sixth lens element E6, a stop E3, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of glass material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of glass material and has the object-side surface and the image-side surface being both aspheric. The object-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has two critical points in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 2nd embodiment are shown in Table 2A and the aspheric surface data are shown in Table 2B below.

| TABLE 2A | | | | | | | | |
|---|---|---|---|---|---|---|---|---|
| 2nd Embodiment | | | | | | | | |
| f = 6.83 mm, Fno = 1.38, HFOV = 41.6 deg. | | | | | | | | |
| Surface # | | Curvature Radius | Thickness | Material | Index | Abbe # | Focal Length | |
| 0 | Object | Plano | Infinity | | | | | |
| 1 | Ape. Stop | Plano | | -1.158 | | | | |
| 2 | Lens 1 | 3.2451 | (ASP) | 0.960 | Glass | 1.619 | 63.8 | 10.20 |
| 3 | | 5.9266 | (ASP) | 0.041 | | | | |
| 4 | Lens 2 | 5.5522 | (ASP) | 0.300 | Plastic | 1.686 | 18.4 | -22.86 |
| 5 | | 4.0102 | (ASP) | 0.354 | | | | |
| 6 | Lens 3 | 4.8771 | (ASP) | 0.473 | Plastic | 1.544 | 56.0 | 23.40 |
| 7 | | 7.6364 | (ASP) | 0.211 | | | | |
| 8 | Stop | Plano | | 0.243 | | | | |
| 9 | Lens 4 | 12.2940 | (ASP) | 0.320 | Plastic | 1.686 | 18.4 | -18.68 |
| 10 | | 6.2088 | (ASP) | -0.035 | | | | |
| 11 | Stop | Plano | | 0.092 | | | | |
| 12 | Lens 5 | 9.5378 | (ASP) | 0.827 | Glass | 1.619 | 63.8 | 10.08 |
| 13 | | -17.4041 | (ASP) | 0.891 | | | | |
| 14 | Lens 6 | 18.9659 | (ASP) | 0.493 | Plastic | 1.587 | 28.3 | -7.92 |
| 15 | | 3.6992 | (ASP) | -0.824 | | | | |
| 16 | Stop | Plano | | 0.935 | | | | |
| 17 | Lens 7 | 2.3578 | (ASP) | 0.661 | Plastic | 1.566 | 37.4 | 4.70 |

(continued)

| TABLE 2A | | | | | | | |
|---|---|---|---|---|---|---|---|
| 2nd Embodiment | | | | | | | |
| f = 6.83 mm, Fno = 1.38, HFOV = 41.6 deg. | | | | | | | |
| Surface # | | Curvature Radius | Thickness | Material | Index | Abbe # | Focal Length |
| 18 | | 18.6388 | (ASP) 1.078 | | | | |
| 19 | Lens 8 | 25.8049 | (ASP) 0.520 | Plastic | 1.534 | 56.0 | -5.68 |
| 20 | | 2.6980 | (ASP) 0.500 | | | | |
| 21 | Filter | Plano | 0.210 | Glass | 1.517 | 64.2 | - |
| 22 | | Plano | 0.438 | | | | |
| 23 | Image | Plano | - | | | | |
| Note: Reference wavelength is 587.6 nm (d-line). | | | | | | | |
| An effective radius of the stop S1 (Surface 8) is 2.032 mm. | | | | | | | |
| An effective radius of the stop S2 (Surface 11) is 2.327 mm. | | | | | | | |
| An effective radius of the stop S3 (Surface 16) is 3.082 mm. | | | | | | | |

| TABLE 2B | | | | |
|---|---|---|---|---|
| Aspheric Coefficients | | | | |
| Surface # | 2 | 3 | 4 | 5 |
| k = | 4.03591E-02 | -6.40736E-01 | -6.33815E+00 | 0.00000E+00 |
| A4 = | -2.299737178E-04 | -2.386284436E-02 | -3.512375178E-02 | -2.396895840E-02 |
| A6 = | 1.568039313E-03 | 3.393214791E-02 | 4.812749493E-02 | 2.349034982E-02 |
| A8 = | -1.756996041E-03 | -2.059949481E-02 | -3.135297015E-02 | -1.655592983E-02 |
| A10 = | 1.254400788E-03 | 5.534119830E-03 | 1.123199652E-02 | 8.163878313E-03 |
| A12 = | -5.648246843E-04 | 8.005604821E-05 | -1.866823894E-03 | -2.640435807E-03 |
| A14 = | 1.588685326E-04 | -4.493963491E-04 | -2.826909727E-05 | 5.788371338E-04 |
| A16 = | -2.698191385E-05 | 1.178085223E-04 | 6.245914807E-05 | -8.833647739E-05 |
| A18 = | 2.527026311E-06 | -1.312300553E-05 | -9.124584770E-06 | 9.037237709E-06 |
| A20 = | -1.003516363E-07 | 5.564183135E-07 | 4.362816723E-07 | -4.708006840E-07 |
| Surface # | 6 | 7 | 9 | 10 |
| k = | 0.00000E+00 | 0.00000E+00 | 0.00000E+00 | -1.23871E+00 |
| A4 = | -1.528216764E-02 | -1.255964356E-02 | -2.830294534E-02 | -5.013974996E-02 |
| A6 = | 1.060481737E-03 | 2.968107078E-03 | 1.729441113E-02 | 3.014354992E-02 |
| A8 = | 4.097450122E-03 | -4.254306377E-03 | -1.619002225E-02 | -8.369695399E-03 |
| A10 = | -6.986949316E-03 | 3.580202748E-03 | 9.413700043E-03 | -1.243935711E-02 |
| A12 = | 5.662192529E-03 | -1.970144854E-03 | -3.738697198E-03 | 1.843250829E-02 |
| A14 = | -2.713930602E-03 | 7.235592605E-04 | 1.015171096E-03 | -1.343925672E-02 |
| A16 = | 8.160425791E-04 | -1.631950395E-04 | -1.798163079E-04 | 6.411678421E-03 |
| A18 = | -1.514481053E-04 | 2.029385706E-05 | 1.831965308E-05 | -2.072532920E-03 |
| A20 = | 1.592604583E-05 | -1.050412600E-06 | -7.969608847E-07 | 4.451588888E-04 |
| A22 = | -7.276914412E-07 | - | - | -6.049073295E-05 |

(continued)

| Surface # | 6 | 7 | 9 | 10 |
|---|---|---|---|---|
| A24 = | - | - | - | 4.693733287E-06 |
| A26 = | - | - | - | -1.582670802E-07 |

| Surface # | 12 | 13 | 14 | 15 |
|---|---|---|---|---|
| k = | 0.00000E+00 | 0.00000E+00 | 0.00000E+00 | -9.71650E-01 |
| A4 = | -3.298259136E-02 | -8.193138372E-03 | -3.503317499E-02 | -1.366015522E-01 |
| A6 = | 6.216555455E-03 | -3.366485286E-03 | 3.389058419E-02 | 1.038618553E-01 |
| A8 = | 2.463413287E-02 | 3.429013367E-03 | -3.468285880E-02 | -8.614918265E-02 |
| A10 = | -4.593404011E-02 | -1.201081629E-03 | 2.717785721E-02 | 5.780545764E-02 |
| A12 = | 4.478090080E-02 | -9.678420898E-04 | -1.591074486E-02 | -2.859083012E-02 |
| A14 = | -2.951739785E-02 | 1.389241816E-03 | 6.792549757E-03 | 1.019582920E-02 |
| A16 = | 1.389190260E-02 | -8.094264129E-04 | -2.105211581E-03 | -2.615510815E-03 |
| A18 = | -4.664046671E-03 | 2.848905205E-04 | 4.711785242E-04 | 4.806845850E-04 |
| A20 = | 1.096289348E-03 | -6.549118355E-05 | -7.520226755E-05 | -6.247015978E-05 |
| A22 = | -1.750229902E-04 | 9.907480182E-06 | 8.344835193E-06 | 5.586609176E-06 |
| A24 = | 1.801273181E-05 | -9.514693070E-07 | -6.124586089E-07 | -3.262662860E-07 |
| A26 = | -1.075592512E-06 | 5.256747906E-08 | 2.676704673E-08 | 1.118397829E-08 |
| A28 = | 2.827489353E-08 | -1.270591242E-09 | -5.277543714E-10 | -1.704522544E-10 |

| Surface # | 17 | 18 | 19 | 20 |
|---|---|---|---|---|
| k = | -1.02936E+00 | 0.00000E+00 | 0.00000E+00 | -1.05915E+01 |
| A4 = | -8.515660233E-02 | 2.578648033E-02 | -8.454012349E-02 | -3.704992658E-02 |
| A6 = | 7.032305463E-02 | 2.545261581E-03 | 3.030625875E-02 | 1.136781358E-02 |
| A8 = | -5.780198067E-02 | -9.922580759E-03 | -9.396543513E-03 | -2.900046189E-03 |
| A10 = | 3.416340060E-02 | 5.469986540E-03 | 2.302927012E-03 | 5.331133163E-04 |
| A12 = | -1.457884955E-02 | -1.749599519E-03 | -3.758795794E-04 | -6.028958265E-05 |
| A14 = | 4.501114794E-03 | 3.753100278E-04 | 3.863111849E-05 | 2.345426127E-06 |
| A16 = | -1.006900623E-03 | -5.637746240E-05 | -2.354281702E-06 | 4.221785130E-07 |
| A18 = | 1.622325981E-04 | 6.007169079E-06 | 6.332550812E-08 | -8.544343433E-08 |
| A20 = | -1.852764622E-05 | -4.518000876E-07 | 1.708900049E-09 | 7.919037470E-09 |
| A22 = | 1.455922482E-06 | 2.343150328E-08 | -2.154678041E-10 | -4.544635426E-10 |
| A24 = | -7.461359446E-08 | -7.964025765E-10 | 8.172742881E-12 | 1.693869222E-11 |
| A26 = | 2.241048810E-09 | 1.594306965E-11 | -1.503984786E-13 | -4.004181798E-13 |
| A28 = | -2.990629344E-11 | -1.422855888E-13 | 1.130837431E-15 | 5.467098115E-15 |
| A30 = | - | - | - | -3.287622849E-17 |

In the 2nd embodiment, the equation of the aspheric surface profiles of the aforementioned lens elements is the same as the equation of the 1st embodiment. Also, the definitions of these parameters shown in Table 2C are the same as those stated in the 1st embodiment with corresponding values for the 2nd embodiment, so an explanation in this regard will not be provided again.

Moreover, these parameters can be calculated from Table 2A and Table 2B as the following values and satisfy the following conditions:

| TABLE 2C | | | |
|---|---|---|---|
| Schematic Parameters | | | |
| f [mm] | 6.83 | f/R12+f/R13 | 4.75 |
| Fno | 1.38 | f/R16 | 2.53 |
| HFOV [deg.] | 41.6 | f5/f1 | 0.99 |
| (V1 +V3+V5)/(V2+V4) | 4.99 | f6/f8 | 1.39 |
| CT1/T12+CT5/T45 | 37.92 | f7/f8 | -0.83 |
| (CT2+CT3+CT4)/(T23+T34) | 1.35 | (f×TL)/(EPD×ImgH) | 1.92 |
| (CT7+CT8)/T78 | 1.10 | 1/\|1-tan(HFOV)\| | 8.93 |
| T56/T67 | 8.03 | Yc42/Y42 | 0.59 |
| TL/ImgH | 1.39 | Yc62/Y62 | 0.33 |
| R2/R1 | 1.83 | Yc71/Y71 | 0.58 |
| (R3+R4)/\|f2\| | 0.42 | Yc72/Y72 | 0.59 |
| R12/R13 | 1.57 | Yc82/Y82 | 0.34 |
| \|f/62]+\|f/3\|+\|f/f4\| | 0.96 | - | - |

### 3rd Embodiment

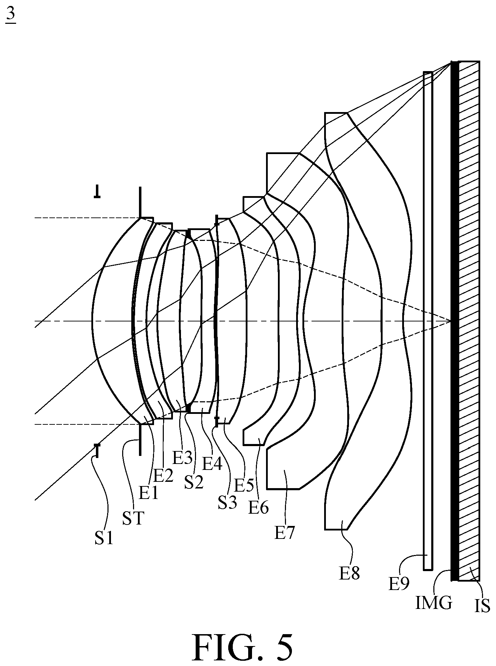

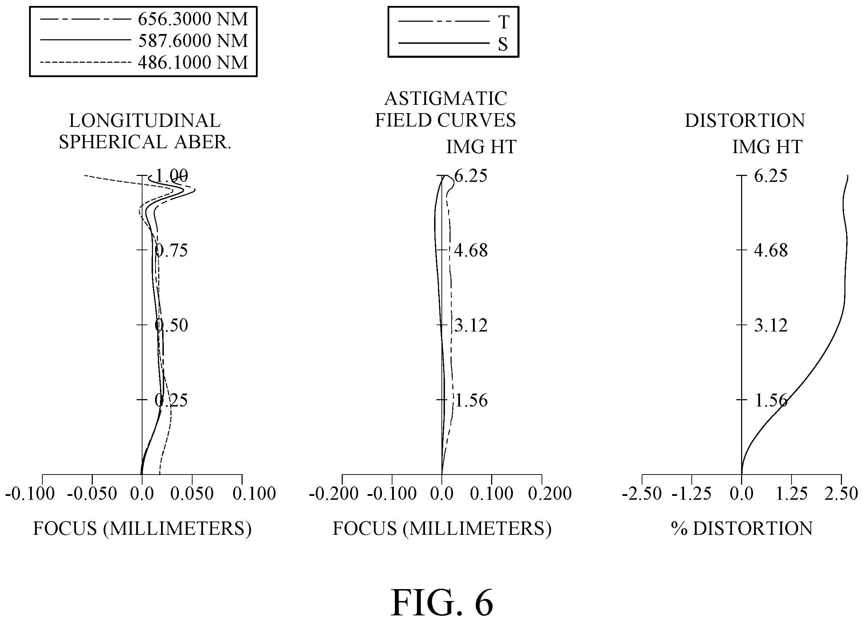

Fig. 5 is a schematic view of an image capturing unit according to the 3rd embodiment of the present disclosure. Fig. 6 shows, in order from left to right, spherical aberration curves, astigmatic field curves and a distortion curve of the image capturing unit according to the 3rd embodiment. In Fig. 5, the image capturing unit 3 includes the imaging lens assembly (its reference numeral is omitted) of the present disclosure and an image sensor IS. The imaging lens assembly includes, in order from an object side to an image side along an optical axis, a stop S1, an aperture stop ST, a first lens element E1, a second lens element E2, a third lens element E3, a stop S2, a fourth lens element E4, a stop S3, a fifth lens element E5, a sixth lens element E6, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of glass material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of glass material and has the object-side surface and the image-side surface being both aspheric. The object-side surface of the fifth lens element E5 has two critical points in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has two critical points in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 3rd embodiment are shown in Table 3A and the aspheric surface data are shown in Table 3B below.

| TABLE 3A | | | | | | | | |
|---|---|---|---|---|---|---|---|---|
| 3rd Embodiment | | | | | | | | |
| f = 6.89 mm, Fno = 1.38, HFOV = 41.4 deg. | | | | | | | | |
| Surface # | | Curvature Radius | Thickness | Material | Index | Abbe # | Focal Length | |
| 0 | Object | Plano | | Infinity | | | | |
| 1 | Stop | Plano | | 1.047 | | | | |
| 2 | Ape. Stop | Plano | | -1.166 | | | | |
| 3 | Lens 1 | 3.2545 | (ASP) | 0.965 | Glass | 1.619 | 63.4 | 9.63 |
| 4 | | 6.3587 | (ASP) | 0.046 | | | | |
| 5 | Lens 2 | 5.6441 | (ASP) | 0.300 | Plastic | 1.686 | 18.4 | -21.72 |
| 6 | | 4.0052 | (ASP) | 0.265 | | | | |
| 7 | Lens 3 | 4.9932 | (ASP) | 0.545 | Plastic | 1.544 | 56.0 | 20.53 |
| 8 | | 8.6829 | (ASP) | 0.220 | | | | |
| 9 | Stop | Plano | | 0.301 | | | | |
| 10 | Lens 4 | 17.3510 | (ASP) | 0.320 | Plastic | 1.686 | 18.4 | -17.46 |
| 11 | | 7.0341 | (ASP) | 0.052 | | | | |
| 12 | Stop | Plano | | -0.009 | | | | |
| 13 | Lens 5 | 9.2015 | (ASP) | 0.735 | Glass | 1.619 | 63.4 | 11.67 |
| 14 | | -32.4758 | (ASP) | 0.768 | | | | |
| 15 | Lens 6 | 15.7686 | (ASP) | 0.448 | Plastic | 1.587 | 28.3 | -7.96 |
| 16 | | 3.5667 | (ASP) | 0.151 | | | | |
| 17 | Lens 7 | 2.5397 | (ASP) | 0.944 | Plastic | 1.566 | 37.4 | 4.62 |
| 18 | | 75.6314 | (ASP) | 0.942 | | | | |
| 19 | Lens 8 | 16.1274 | (ASP) | 0.520 | Plastic | 1.534 | 56.0 | -5.71 |
| 20 | | 2.5365 | (ASP) | 0.500 | | | | |
| 21 | Filter | Plano | | 0.210 | Glass | 1.517 | 64.2 | - |
| 22 | | Plano | | 0.464 | | | | |
| 23 | Image | Plano | | - | | | | |
| Note: Reference wavelength is 587.6 nm (d-line). | | | | | | | | |
| An effective radius of the stop S1 (Surface 1) is 3.000 mm. | | | | | | | | |

(continued)

| TABLE 3A | | | | | | | |
|---|---|---|---|---|---|---|---|
| 3rd Embodiment | | | | | | | |
| f = 6.89 mm, Fno = 1.38, HFOV = 41.4 deg. | | | | | | | |
| Surface # | | Curvature Radius | Thickness | Material | Index | Abbe # | Focal Length |
| An effective radius of the stop S2 (Surface 9) is 2.040 mm. | | | | | | | |
| An effective radius of the stop S3 (Surface 12) is 2.340 mm. | | | | | | | |

| TABLE 3B | | | | |
|---|---|---|---|---|
| Aspheric Coefficients | | | | |
| Surface # | 3 | 4 | 5 | 6 |
| k = | 2.13968E-02 | -2.02248E-01 | -6.46312E+00 | 0.00000E+00 |
| A4 = | 2.811200630E-04 | -4.055583448E-03 | -9.339223623E-03 | -1.417944360E-02 |
| A6 = | 3.145724440E-04 | 1.365701775E-02 | 2.055516422E-02 | 9.682332360E-03 |
| A8 = | -2.147444784E-04 | -1.595321864E-02 | -2.246888071E-02 | -7.401683546E-03 |
| A10 = | 7.990815758E-05 | 9.490709630E-03 | 1.390608712E-02 | 3.220644441E-03 |
| A12 = | -2.198148086E-05 | -3.384422152E-03 | -5.275213795E-03 | -3.324349795E-04 |
| A14 = | 7.135666275E-06 | 7.456865642E-04 | 1.250778961E-03 | -2.921202986E-04 |
| A16 = | -2.185465086E-06 | -9.686170276E-05 | -1.811608224E-04 | 1.373288777E-04 |
| A18 = | 3.581383104E-07 | 6.656905418E-06 | 1.410496128E-05 | -2.374225560E-05 |
| A20 = | -2.196220081E-08 | -1.840940971E-07 | -4.529315812E-07 | 1.474191982E-06 |
| Surface # | 7 | 8 | 10 | 11 |
| k = | 0.00000E+00 | 0.00000E+00 | 0.00000E+00 | -5.46930E-02 |
| A4 = | -1.068109264E-02 | -6.761555954E-03 | -2.468793650E-02 | -6.297482860E-02 |
| A6 = | 1.457611190E-03 | -1.783973425E-04 | 1.698023890E-02 | 7.743257147E-02 |
| A8 = | -3.489359850E-04 | -4.104187251E-04 | -2.359509780E-02 | -9.097461233E-02 |
| A10 = | -1.589784303E-03 | -2.985623452E-04 | 1.932397542E-02 | 7.638467965E-02 |
| A12 = | 1.798354793E-03 | 4.868499404E-04 | -1.050426169E-02 | -4.716333296E-02 |
| A14 = | -9.320547793E-04 | -2.637336483E-04 | 3.695989365E-03 | 2.138300216E-02 |
| A16 = | 2.741737438E-04 | 8.105829043E-05 | -7.948025399E-04 | -7.046474064E-03 |
| A18 = | -4.427853583E-05 | -1.321166109E-05 | 9.401758550E-05 | 1.666712498E-03 |
| A20 = | 3.465492793E-06 | 8.751160843E-07 | -4.661305047E-06 | -2.765318002E-04 |
| A22 = | -9.282396893E-08 | - | - | 3.062238427E-05 |
| A24 = | - | - | - | -2.030000727E-06 |
| A26 = | - | - | - | 6.065963385E-08 |
| Surface # | 13 | 14 | 15 | 16 |
| k = | 0.00000E+00 | 0.00000E+00 | 0.00000E+00 | -1.03938E+00 |
| A4 = | -5.399419673E-02 | -1.054444373E-02 | -3.734210017E-02 | -1.093769903E-01 |
| A6 = | 7.402755626E-02 | 4.388333689E-03 | 2.733509309E-02 | 5.520701907E-02 |
| A8 = | -8.774823426E-02 | -5.919331158E-03 | -1.942486678E-02 | -2.860073825E-02 |
| A10 = | 7.826793985E-02 | 6.520972392E-03 | 1.069323972E-02 | 1.202115509E-02 |

(continued)

| Surface # | 13 | 14 | 15 | 16 |
|---|---|---|---|---|
| A12 = | -5.273855508E-02 | -5.617505311E-03 | -4.810191607E-03 | -3.749247550E-03 |
| A14 = | 2.667631254E-02 | 3.578170109E-03 | 1.724225898E-03 | 7.841430386E-04 |
| A16 = | -1.002178687E-02 | -1.633251229E-03 | -4.905234611E-04 | -9.066509908E-05 |
| A18 = | 2.767401819E-03 | 5.274731950E-04 | 1.103793347E-04 | 7.924900409E-08 |
| A20 = | -5.531885438E-04 | -1.191056142E-04 | -1.928567658E-05 | 1.767549452E-06 |
| A22 = | 7.777216255E-05 | 1.836236408E-05 | 2.501575816E-06 | -2.865375298E-07 |
| A24 = | -7.280199837E-06 | -1.840801386E-06 | -2.228974688E-07 | 2.251327334E-08 |
| A26 = | 4.066184911E-07 | 1.081557549E-07 | 1.197041325E-08 | -9.124232104E-10 |
| A28 = | -1.023765680E-08 | -2.826361854E-09 | -2.882904498E-10 | 1.521652840E-11 |
| Surface # | 17 | 18 | 19 | 20 |
| k = | -9.82995E-01 | 0.00000E+00 | 0.00000E+00 | -7.88350E+00 |
| A4 = | -5.844931550E-02 | 2.260677611E-02 | -8.080235252E-02 | -4.333124289E-02 |
| A6 = | 2.143028817E-02 | -3.804903048E-03 | 2.728645601E-02 | 1.512437356E-02 |
| A8 = | -8.657790375E-03 | -2.482998658E-03 | -7.886700258E-03 | -4.439626735E-03 |
| A10 = | 1.330009732E-03 | 1.721824837E-03 | 1.839183905E-03 | 1.019653826E-03 |
| A12 = | 8.111017151E-04 | -5.769680054E-04 | -2.965579930E-04 | -1.793569626E-04 |
| A14 = | -6.674257534E-04 | 1.265322741E-04 | 3.164691550E-05 | 2.402860998E-05 |
| A16 = | 2.465921736E-04 | -1.939740537E-05 | -2.220629539E-06 | -2.442556050E-06 |
| A18 = | -5.668795327E-05 | 2.111621782E-06 | 1.001437014E-07 | 1.864558158E-07 |
| A20 = | 8.634155226E-06 | -1.622582922E-07 | -2.652711413E-09 | -1.050824067E-08 |
| A22 = | -8.719570144E-07 | 8.583856813E-09 | 2.662083606E-11 | 4.270450316E-10 |
| A24 = | 5.607489440E-08 | -2.967324629E-10 | 5.473933285E-13 | -1.209198694E-11 |
| A26 = | -2.074778485E-09 | 6.018672058E-12 | -1.920351591E-14 | 2.254179525E-13 |
| A28 = | 3.353985810E-11 | -5.419284966E-14 | 1.694148456E-16 | -2.479962323E-15 |
| A30 = | - | - | - | 1.217679741E-17 |

In the 3rd embodiment, the equation of the aspheric surface profiles of the aforementioned lens elements is the same as the equation of the 1st embodiment. Also, the definitions of these parameters shown in Table 3C are the same as those stated in the 1st embodiment with corresponding values for the 3rd embodiment, so an explanation in this regard will not be provided again.

Moreover, these parameters can be calculated from Table 3A and Table 3B as the following values and satisfy the following conditions:

| TABLE 3C | | | |
|---|---|---|---|
| Schematic Parameters | | | |
| f [mm] | 6.89 | f/R12+f/R13 | 4.65 |
| Fno | 1.38 | f/R16 | 2.72 |
| HFOV [deg.] | 41.4 | f5/f1 | 1.21 |
| (V1 +V3+V5)/(V2+V4) | 4.97 | f6/f8 | 1.39 |
| CT1/T12+CT5/T45 | 38.07 | f7/f8 | -0.81 |
| (CT2+CT3+CT4)/(T23+T34) | 1.48 | (f×TL)/(EPD×ImgH) | 1.92 |

(continued)

| TABLE 3C | | | |
|---|---|---|---|
| Schematic Parameters | | | |
| (CT7+CT8)/T78 | 1.55 | 1/|1-tan(HFOV)| | 8.44 |
| T56/T67 | 5.09 | Yc42/Y42 | 0.55 |
| TL/ImgH | 1.39 | Yc62/Y62 | 0.37 |
| R2/R1 | 1.95 | Yc71/Y71 | 0.58 |
| (R3+R4)/|f2| | 0.44 | Yc72/Y72 | 0.57 |
| R12/R13 | 1.40 | Yc82/Y82 | 0.36 |
| |f/f2]+|f/3|+|f/f4| | 1.05 | - | - |

### 4th Embodiment

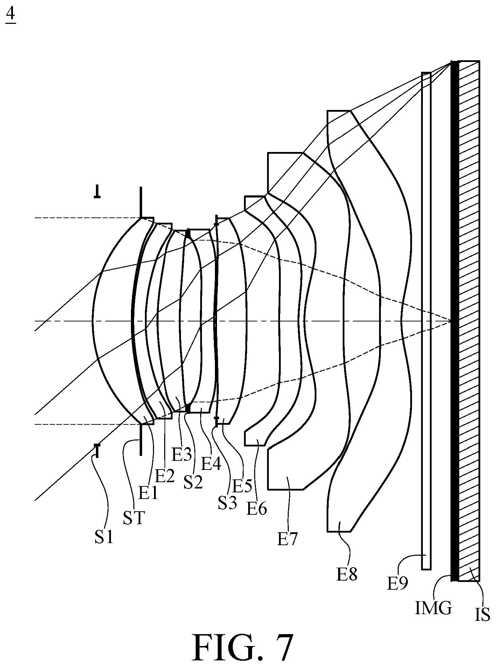

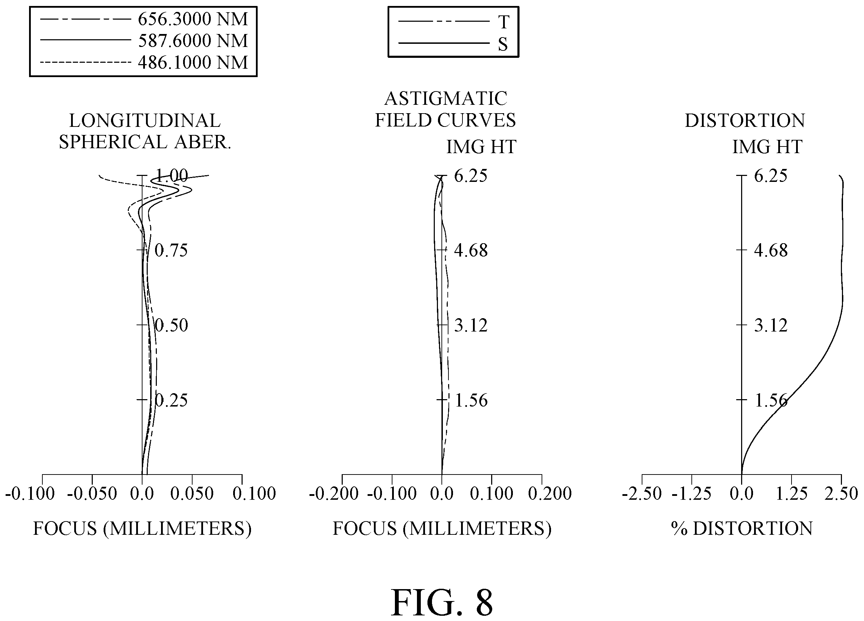

Fig. 7 is a schematic view of an image capturing unit according to the 4th embodiment of the present disclosure. Fig. 8 shows, in order from left to right, spherical aberration curves, astigmatic field curves and a distortion curve of the image capturing unit according to the 4th embodiment. In Fig. 7, the image capturing unit 4 includes the imaging lens assembly (its reference numeral is omitted) of the present disclosure and an image sensor IS. The imaging lens assembly includes, in order from an object side to an image side along an optical axis, a stop S1, an aperture stop ST, a first lens element E1, a second lens element E2, a third lens element E3, a stop S2, a fourth lens element E4, a stop S3, a fifth lens element E5, a sixth lens element E6, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of glass material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of glass material and has the object-side surface and the image-side surface being both aspheric. The object-side surface of the fifth lens element E5 has two critical points in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has two critical points in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has three critical points in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 4th embodiment are shown in Table 4A and the aspheric surface data are shown in Table 4B below.

| TABLE 4A | | | | | | | | |
|---|---|---|---|---|---|---|---|---|
| 4th Embodiment | | | | | | | | |
| f = 6.89 mm, Fno = 1.38, HFOV = 41.5 deg. | | | | | | | | |
| Surface # | | Curvature Radius | | Thickness | Material | Index | Abbe # | Focal Length |
| 0 | Object | Plano | | Infinity | | | | |
| 1 | Stop | Plano | | 1.055 | | | | |
| 2 | Ape. Stop | Plano | | -1.164 | | | | |
| 3 | Lens 1 | 3.2569 | (ASP) | 0.946 | Glass | 1.619 | 63.4 | 10.45 |
| 4 | | 5.8313 | (ASP) | 0.036 | | | | |
| 5 | Lens 2 | 4.9285 | (ASP) | 0.300 | Plastic | 1.686 | 18.4 | -29.47 |
| 6 | | 3.8644 | (ASP) | 0.287 | | | | |
| 7 | Lens 3 | 5.2742 | (ASP) | 0.547 | Plastic | 1.544 | 56.0 | 21.99 |
| 8 | | 9.0865 | (ASP) | 0.208 | | | | |
| 9 | Stop | Plano | | 0.303 | | | | |
| 10 | Lens 4 | 16.0105 | (ASP) | 0.320 | Plastic | 1.686 | 18.4 | -19.90 |
| 11 | | 7.3099 | (ASP) | 0.060 | | | | |
| 12 | Stop | Plano | | -0.014 | | | | |
| 13 | Lens 5 | 10.4691 | (ASP) | 0.739 | Glass | 1.619 | 63.4 | 12.71 |
| 14 | | -30.7984 | (ASP) | 0.790 | | | | |
| 15 | Lens 6 | 12.7115 | (ASP) | 0.466 | Plastic | 1.587 | 28.3 | -8.50 |
| 16 | | 3.5352 | (ASP) | 0.143 | | | | |
| 17 | Lens 7 | 2.7054 | (ASP) | 0.948 | Plastic | 1.566 | 37.4 | 4.74 |
| 18 | | -253.5521 | (ASP) | 0.878 | | | | |
| 19 | Lens 8 | 10.7480 | (ASP) | 0.520 | Plastic | 1.534 | 56.0 | -5.69 |
| 20 | | 2.3302 | (ASP) | 0.500 | | | | |
| 21 | Filter | Plano | | 0.210 | Glass | 1.517 | 64.2 | - |
| 22 | | Plano | | 0.500 | | | | |
| 23 | Image | Plano | | - | | | | |
| Note: Reference wavelength is 587.6 nm (d-line). | | | | | | | | |
| An effective radius of the stop S1 (Surface 1) is 3.000 mm. | | | | | | | | |
| An effective radius of the stop S2 (Surface 9) is 2.040 mm. | | | | | | | | |
| An effective radius of the stop S3 (Surface 12) is 2.340 mm. | | | | | | | | |

| TABLE 4B | | | |
|---|---|---|---|
| Aspheric Coefficients | | | |
| Surface # | 3 | 4 | 5 | 6 |
| k = | 2.61538E-02 | -1.16033E+00 | -7.25688E+00 | 0.00000E+00 |
| A4 = | 4.255364174E-04 | -1.850555031E-02 | -2.253137827E-02 | -1.691130637E-02 |
| A6 = | -1.089089419E-04 | 3.215457117E-02 | 3.922044210E-02 | 1.296271627E-02 |
| A8 = | 2.911170992E-04 | -3.253824964E-02 | -3.963091165E-02 | -1.062777137E-02 |
| A10 = | -2.777194712E-04 | 1.958593189E-02 | 2.455016114E-02 | 5.408994697E-03 |
| A12 = | 1.366005211E-04 | -7.327529235E-03 | -9.545220325E-03 | -1.327754155E-03 |
| A14 = | -3.654580044E-05 | 1.710893790E-03 | 2.340933736E-03 | -6.162445916E-06 |
| A16 = | 4.952204439E-06 | -2.397058768E-04 | -3.474020012E-04 | 8.907058420E-05 |
| A18 = | -2.672137443E-07 | 1.835352357E-05 | 2.827640131E-05 | -1.946219098E-05 |
| A20 = | 4.637534692E-10 | -5.921118028E-07 | -9.677113967E-07 | 1.322618053E-06 |
| Surface # | 7 | 8 | 10 | 11 |
| k = | 0.00000E+00 | 0.00000E+00 | 0.00000E+00 | 1.11475E+00 |
| A4 = | -1.004664900E-02 | -7.577637855E-03 | -2.541606721E-02 | -5.632391442E-02 |
| A6 = | 1.019385910E-03 | 5.459544967E-04 | 1.603443163E-02 | 6.147561468E-02 |
| A8 = | 6.727558441E-04 | -8.643046583E-04 | -2.258371410E-02 | -6.378355581E-02 |
| A10 = | -2.695480033E-03 | -6.522962314E-05 | 1.885579553E-02 | 4.392873322E-02 |
| A12 = | 2.514610659E-03 | 4.398014570E-04 | -1.036214845E-02 | -2.065000268E-02 |
| A14 = | -1.233366642E-03 | -2.781093143E-04 | 3.663958618E-03 | 6.600414957E-03 |
| A16 = | 3.578985607E-04 | 9.145226539E-05 | -7.910154825E-04 | -1.379468201E-03 |
| A18 = | -5.884449515E-05 | -1.543343906E-05 | 9.405310683E-05 | 1.711663897E-04 |
| A20 = | 4.874805655E-06 | 1.041571439E-06 | -4.693413069E-06 | -9.119119956E-06 |
| A22 = | -1.499851207E-07 | - | - | -3.519592872E-07 |
| A24 = | - | - | - | 6.802591597E-08 |
| A26 = | - | - | - | -2.450010148E-09 |
| Surface # | 13 | 14 | 15 | 16 |
| k = | 0.00000E+00 | 0.00000E+00 | 0.00000E+00 | -1.02470E+00 |
| A4 = | -4.489786035E-02 | -1.133497282E-02 | -3.900929296E-02 | -1.014384832E-01 |
| A6 = | 5.422391206E-02 | 5.234215327E-03 | 2.394613093E-02 | 4.208686694E-02 |
| A8 = | -5.112503463E-02 | -6.457020062E-03 | -1.210698862E-02 | -1.656450197E-02 |
| A10 = | 3.259113546E-02 | 7.365117063E-03 | 3.531516863E-03 | 4.936082118E-03 |
| A12 = | -1.445419060E-02 | -6.689881811E-03 | -4.824012493E-05 | -7.174054817E-04 |
| A14 = | 4.688156668E-03 | 4.384914149E-03 | -5.370091629E-04 | -1.924711590E-04 |
| A16 = | -1.208505969E-03 | -2.020572420E-03 | 2.787043817E-04 | 1.434938598E-04 |
| A18 = | 2.802266255E-04 | 6.526764452E-04 | -7.638265463E-05 | -4.076724327E-05 |
| A20 = | -6.136913977E-05 | -1.468575897E-04 | 1.273478204E-05 | 6.821362052E-06 |
| A22 = | 1.117248277E-05 | 2.253347237E-05 | -1.282747344E-06 | -7.158376846E-07 |
| A24 = | -1.411126912E-06 | -2.247340508E-06 | 7.038176625E-08 | 4.626071657E-08 |
| A26 = | 1.043425834E-07 | 1.313226483E-07 | -1.437944495E-09 | -1.682973254E-09 |

(continued)

| Surface # | 13 | 14 | 15 | 16 |
|---|---|---|---|---|
| A28 = | -3.361692586E-09 | -3.411604659E-09 | -1.444122848E-11 | 2.636976324E-11 |
| Surface # | 17 | 18 | 19 | 20 |
| k = | -8.81908E-01 | 0.00000E+00 | 0.00000E+00 | -6.50111E+00 |
| A4 = | -4.783812304E-02 | 2.688388585E-02 | -8.359429083E-02 | -4.853576459E-02 |
| A6 = | 1.211620902E-02 | -2.871608766E-03 | 3.016732141E-02 | 1.934448768E-02 |
| A8 = | -3.242115109E-03 | -3.845179928E-03 | -9.304505214E-03 | -6.416347534E-03 |
| A10 = | -5.571090508E-04 | 2.368468069E-03 | 2.213732933E-03 | 1.624377061E-03 |
| A12 = | 1.072756718E-03 | -7.731161619E-04 | -3.583435388E-04 | -3.084049649E-04 |
| A14 = | -5.812388023E-04 | 1.676316418E-04 | 3.848257927E-05 | 4.372605387E-05 |
| A16 = | 1.869902115E-04 | -2.542137687E-05 | -2.747044012E-06 | -4.614719008E-06 |
| A18 = | -3.971414887E-05 | 2.730028482E-06 | 1.288292741E-07 | 3.601876856E-07 |
| A20 = | 5.724580617E-06 | -2.063933363E-07 | -3.757432605E-09 | -2.056278025E-08 |
| A22 = | -5.547891590E-07 | 1.072623931E-08 | 5.605571826E-11 | 8.432711693E-10 |
| A24 = | 3.454459949E-08 | -3.641694759E-10 | 3.169186081E-14 | -2.409844277E-11 |
| A26 = | -1.244142515E-09 | 7.260730711E-12 | -1.387738169E-14 | 4.545472812E-13 |
| A28 = | 1.962609598E-11 | -6.436717228E-14 | 1.450091327E-16 | -5.079335291E-15 |
| A30 = | - | - | - | 2.544611902E-17 |

In the 4th embodiment, the equation of the aspheric surface profiles of the aforementioned lens elements is the same as the equation of the 1st embodiment. Also, the definitions of these parameters shown in Table 4C are the same as those stated in the 1st embodiment with corresponding values for the 4th embodiment, so an explanation in this regard will not be provided again.

Moreover, these parameters can be calculated from Table 4A and Table 4B as the following values and satisfy the following conditions:

| TABLE 4C | | | |
|---|---|---|---|
| Schematic Parameters | | | |
| f [mm] | 6.89 | f/R12+f/R13 | 4.50 |
| Fno | 1.38 | f/R16 | 2.96 |
| HFOV [deg.] | 41.5 | f5/f1 | 1.22 |
| (V1 +V3+V5)/(V2+V4) | 4.97 | f6/f8 | 1.49 |
| CT1/T12+CT5/T45 | 42.34 | f7/f8 | -0.83 |
| (CT2+CT3+CT4)/(T23+T34) | 1.46 | (f×TL)/(EPD×ImgH) | 1.92 |
| (CT7+CT8)/T78 | 1.67 | 1/\|1-tan(HFOV)\| | 8.65 |
| T56/T67 | 5.52 | Yc42/Y42 | 0.55 |
| TL/ImgH | 1.39 | Yc62/Y62 | 0.37 |
| R2/R1 | 1.79 | Yc71/Y71 | 0.58 |
| (R3+R4)/\|f2\| | 0.30 | Yc72/Y72 | 0.58 |
| R12/R13 | 1.31 | Yc82/Y82 | 0.37 |
| \|f/62]+\|f/3\|+\|f/f4\| | 0.89 | - | - |

**5th Embodiment**

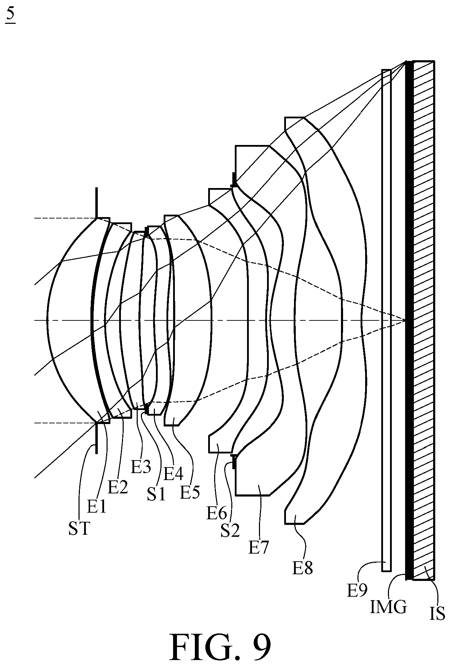

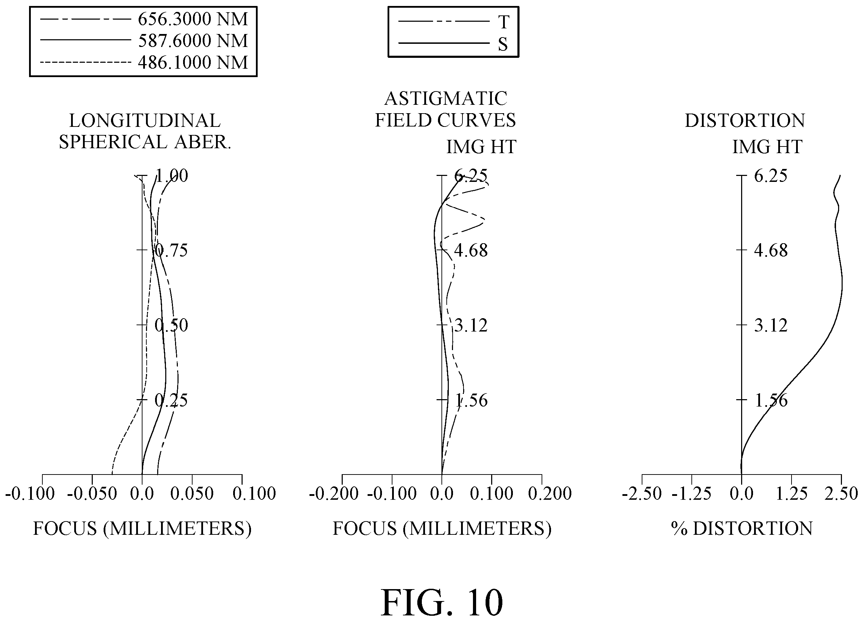

Fig. 9 is a schematic view of an image capturing unit according to the 5th embodiment of the present disclosure. Fig. 10 shows, in order from left to right, spherical aberration curves, astigmatic field curves and a distortion curve of the image capturing unit according to the 5th embodiment. In Fig. 9, the image capturing unit 5 includes the imaging lens assembly (its reference numeral is omitted) of the present disclosure and an image sensor IS. The imaging lens assembly includes, in order from an object side to an image side along an optical axis, an aperture stop ST, a first lens element E1, a second lens element E2, a third lens element E3, a stop S1, a fourth lens element E4, a fifth lens element E5, a sixth lens element E6, a stop S2, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with positive refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being concave in a paraxial region thereof and an image-side surface being convex in a paraxial region thereof. The fifth lens element E5 is made of plastic material and has the object-side surface and the image-side surface being both aspheric.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being concave in a paraxial region thereof and an image-side surface being concave in a paraxial region thereof. The eighth lens element E8 is made of plastic material and has the object-side surface and the image-side surface being both aspheric. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 5th embodiment are shown in Table 5A and the aspheric surface data are shown in Table 5B below.

| TABLE 5A | | | | | | | | |
|---|---|---|---|---|---|---|---|---|
| 5th Embodiment | | | | | | | | |
| f = 6.93 mm, Fno = 1.40, HFOV = 41.3 deg. | | | | | | | | |
| Surface # | | Curvature Radius | Thickness | Material | Index | Abbe # | Focal Length | |
| 0 | Object | Plano | | Infinity | | | | |
| 1 | Ape. Stop | Plano | | -1.196 | | | | |
| 2 | Lens 1 | 3.1587 | (ASP) | 1.068 | Plastic | 1.545 | 56.1 | 10.18 |

(continued)

| TABLE 5A | | | | | | | |
|---|---|---|---|---|---|---|---|
| 5th Embodiment | | | | | | | |
| f = 6.93 mm, Fno = 1.40, HFOV = 41.3 deg. | | | | | | | |
| Surface # | | Curvature Radius | Thickness | Material | Index | Abbe # | Focal Length |
| 3 | | 6.4607 | (ASP) | 0.035 | | | |
| 4 | Lens 2 | 5.3525 | (ASP) | 0.300 | Plastic | 1.686 | 18.4 | -21.59 |
| 5 | | 3.8423 | (ASP) | 0.361 | | | |
| 6 | Lens 3 | 5.3487 | (ASP) | 0.472 | Plastic | 1.544 | 56.0 | 22.56 |
| 7 | | 9.1843 | (ASP) | 0.155 | | | |
| 8 | Stop | Plano | | 0.200 | | | |
| 9 | Lens 4 | 6.5124 | (ASP) | 0.317 | Plastic | 1.713 | 12.4 | 392.27 |
| 10 | | 6.5325 | (ASP) | 0.167 | | | |
| 11 | Lens 5 | -191.3471 | (ASP) | 0.912 | Plastic | 1.544 | 56.0 | 17.43 |
| 12 | | -9.0508 | (ASP) | 0.877 | | | |
| 13 | Lens 6 | 23.6073 | (ASP) | 0.439 | Plastic | 1.686 | 18.4 | -6.49 |
| 14 | | 3.7197 | (ASP) | -0.784 | | | |
| 15 | Stop | Plano | | 0.889 | | | |
| 16 | Lens 7 | 2.3264 | (ASP) | 0.595 | Plastic | 1.639 | 23.5 | 4.32 |
| 17 | | 13.3815 | (ASP) | 1.136 | | | |
| 18 | Lens 8 | -168.7915 | (ASP) | 0.480 | Plastic | 1.639 | 23.5 | -4.81 |
| 19 | | 3.1341 | (ASP) | 0.500 | | | |
| 20 | Filter | Plano | | 0.210 | Glass | 1.517 | 64.2 | - |
| 21 | | Plano | | 0.369 | | | |
| 22 | Image | Plano | | - | | | |
| Note: Reference wavelength is 587.6 nm (d-line). | | | | | | | |
| An effective radius of the stop S1 (Surface 8) is 2.050 mm. | | | | | | | |
| An effective radius of the stop S2 (Surface 15) is 3.250 mm. | | | | | | | |

| TABLE 5B | | | | |
|---|---|---|---|---|
| Aspheric Coefficients | | | | |
| Surface # | 2 | 3 | 4 | 5 |
| k = | 4.18790E-02 | -6.55176E-01 | -7.85494E+00 | 0.00000E+00 |
| A4 = | 2.539963270E-04 | -1.157554739E-02 | -1.697246253E-02 | -1.706554243E-02 |
| A6 = | 3.089865515E-04 | 1.941585722E-02 | 2.149743885E-02 | 9.404642197E-03 |
| A8 = | -3.098752679E-04 | -1.377947511E-02 | -1.329449037E-02 | -4.412912057E-03 |
| A10 = | 2.552948816E-04 | 6.661544332E-03 | 5.678395594E-03 | 2.046693031E-03 |
| A12 = | -1.265718028E-04 | -2.380107715E-03 | -1.827638008E-03 | -9.490237344E-04 |
| A14 = | 3.876735213E-05 | 5.758374132E-04 | 4.176897380E-04 | 3.630907729E-04 |
| A16 = | -7.210902895E-06 | -8.478760197E-05 | -5.987229250E-05 | -8.935460632E-05 |
| A18 = | 7.496912886E-07 | 6.727507472E-06 | 4.680728689E-06 | 1.212913777E-05 |

(continued)

| TABLE 5B | | | |
|---|---|---|---|
| Aspheric Coefficients | | | |
| Surface # | 2 | 3 | 4 | 5 |
| A20 = | -3.383725240E-08 | -2.195767834E-07 | -1.506578439E-07 | -6.913447593E-07 |
| Surface # | 6 | 7 | 9 | 10 |
| k = | 0.00000E+00 | 0.00000E+00 | 0.00000E+00 | -5.02152E-01 |
| A4 = | -8.860056221E-03 | -1.134175450E-02 | -1.923003151E-02 | -9.145528019E-03 |
| A6 = | -6.362573922E-05 | 3.185885795E-03 | -1.218929859E-03 | -1.481944614E-02 |
| A8 = | 1.633711209E-03 | -5.502074990E-03 | -1.964989396E-03 | 2.169348492E-02 |
| A10 = | -2.098636434E-03 | 5.649241742E-03 | 2.081192319E-03 | -2.571974935E-02 |
| A12 = | 1.552851497E-03 | -3.412162487E-03 | -1.103463410E-03 | 2.084286970E-02 |
| A14 = | -7.542845586E-04 | 1.257841411E-03 | 3.868377725E-04 | -1.176190412E-02 |
| A16 = | 2.442516600E-04 | -2.759841568E-04 | -9.116470188E-05 | 4.714081227E-03 |
| A18 = | -5.036347407E-05 | 3.306344122E-05 | 1.247359376E-05 | -1.339594161E-03 |
| A20 = | 5.972237189E-06 | -1.641562884E-06 | -7.269446178E-07 | 2.630717396E-04 |
| A22 = | -3.078199896E-07 | - | - | -3.376300009E-05 |
| A24 = | - | - | - | 2.532327822E-06 |
| A26 = | - | - | - | -8.369474100E-08 |
| Surface # | 11 | 12 | 13 | 14 |
| k = | 0.00000E+00 | 0.00000E+00 | 0.00000E+00 | -8.25761E-01 |
| A4 = | -3.056923536E-03 | -9.968845972E-03 | -3.468119936E-02 | -1.536001384E-01 |
| A6 = | -1.705987781E-03 | 3.244154302E-03 | 2.578738863E-02 | 1.215242005E-01 |
| A8 = | -3.274078685E-04 | -8.603855814E-03 | -1.829672355E-02 | -8.996887259E-02 |
| A10 = | -6.285154535E-04 | 1.213648360E-02 | 8.585040495E-03 | 5.158031524E-02 |
| A12 = | 2.678540574E-03 | -1.120438851E-02 | -2.819846769E-03 | -2.201783872E-02 |
| A14 = | -3.898689910E-03 | 6.985117472E-03 | 6.387747537E-04 | 6.895205392E-03 |
| A16 = | 3.058877999E-03 | -3.007366683E-03 | -1.006930617E-04 | -1.575845512E-03 |
| A18 = | -1.456518288E-03 | 9.049413643E-04 | 1.190069828E-05 | 2.608958478E-04 |
| A20 = | 4.415135195E-04 | -1.898269696E-04 | -1.280195167E-06 | -3.079080577E-05 |
| A22 = | -8.573008104E-05 | 2.718869042E-05 | 1.476022259E-07 | 2.513954384E-06 |
| A24 = | 1.032091885E-05 | -2.532978587E-06 | -1.499542087E-08 | -1.344726810E-07 |
| A26 = | -7.010014220E-07 | 1.382051234E-07 | 9.576405559E-10 | 4.229052928E-09 |
| A28 = | 2.051642721E-08 | -3.346902311E-09 | -2.640828842E-11 | -5.917459223E-11 |
| Surface # | 16 | 17 | 18 | 19 |
| k = | -9.47240E-01 | 0.00000E+00 | 0.00000E+00 | -1.84580E+01 |
| A4 = | -1.073152161E-01 | 2.149418430E-02 | -9.035351087E-02 | -3.707246433E-02 |
| A6 = | 8.981196118E-02 | -1.846341612E-03 | 3.580010060E-02 | 8.450524373E-03 |
| A8 = | -6.842129582E-02 | -4.163795575E-03 | -9.777251121E-03 | 2.974525485E-04 |
| A10 = | 3.832747061E-02 | 2.508554350E-03 | 1.658183119E-03 | -9.297008450E-04 |
| A12 = | -1.571303661E-02 | -8.239114183E-04 | -9.640272638E-05 | 3.360856924E-04 |

(continued)

| Surface # | 16 | 17 | 18 | 19 |
|---|---|---|---|---|
| A14 = | 4.690156745E-03 | 1.785846343E-04 | -1.983188965E-05 | -6.909810965E-05 |
| A16 = | -1.017406852E-03 | -2.665372412E-05 | 5.186442415E-06 | 9.433829525E-06 |
| A18 = | 1.592933328E-04 | 2.770768301E-06 | -5.809241728E-07 | -8.988454706E-07 |
| A20 = | -1.771712762E-05 | -1.997185620E-07 | 3.889568458E-08 | 6.073781193E-08 |
| A22 = | 1.359060116E-06 | 9.765872434E-09 | -1.650245773E-09 | -2.900229546E-09 |
| A24 = | -6.811780816E-08 | -3.084968399E-10 | 4.361471661E-11 | 9.565701548E-11 |
| A26 = | 2.002433368E-09 | 5.670817933E-12 | -6.568925602E-13 | -2.072155602E-12 |
| A28 = | -2.612980938E-11 | -4.601791840E-14 | 4.313230017E-15 | 2.650999084E-14 |
| A30 = | - | - | - | -1.516887162E-16 |

In the 5th embodiment, the equation of the aspheric surface profiles of the aforementioned lens elements is the same as the equation of the 1st embodiment. Also, the definitions of these parameters shown in Table 5C are the same as those stated in the 1st embodiment with corresponding values for the 5th embodiment, so an explanation in this regard will not be provided again.

Moreover, these parameters can be calculated from Table 5A and Table 5B as the following values and satisfy the following conditions:

| TABLE 5C | | | |
|---|---|---|---|
| Schematic Parameters | | | |
| f [mm] | 6.93 | f/R12+f/R13 | 4.84 |
| Fno | 1.40 | f/R16 | 2.21 |
| HFOV [deg.] | 41.3 | f5/f1 | 1.71 |
| (V1 +V3+V5)/(V2+V4) | 5.47 | f6/f8 | 1.35 |
| CT1/T12+CT5/T45 | 35.98 | f7/f8 | -0.90 |
| (CT2+CT3+CT4)/(T23+T34) | 1.52 | (f×TL)/(EPD×ImgH) | 1.95 |
| (CT7+CT8)/T78 | 0.95 | 1/|1-tan(HFOV)| | 8.21 |
| T56/T67 | 8.35 | Yc42/Y42 | 0.61 |
| TL/ImgH | 1.39 | Yc62/Y62 | 0.31 |
| R2/R1 | 2.05 | Yc71/Y71 | 0.56 |
| (R3+R4)/|f2| | 0.43 | Yc72/Y72 | 0.62 |
| R12/R13 | 1.60 | Yc82/Y82 | 0.30 |
| |f/62]+|f/3|+|f/f4| | 0.65 | - | - |

## 6th Embodiment

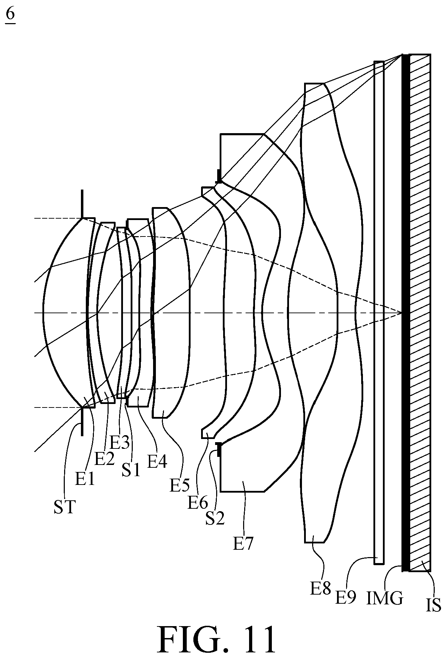

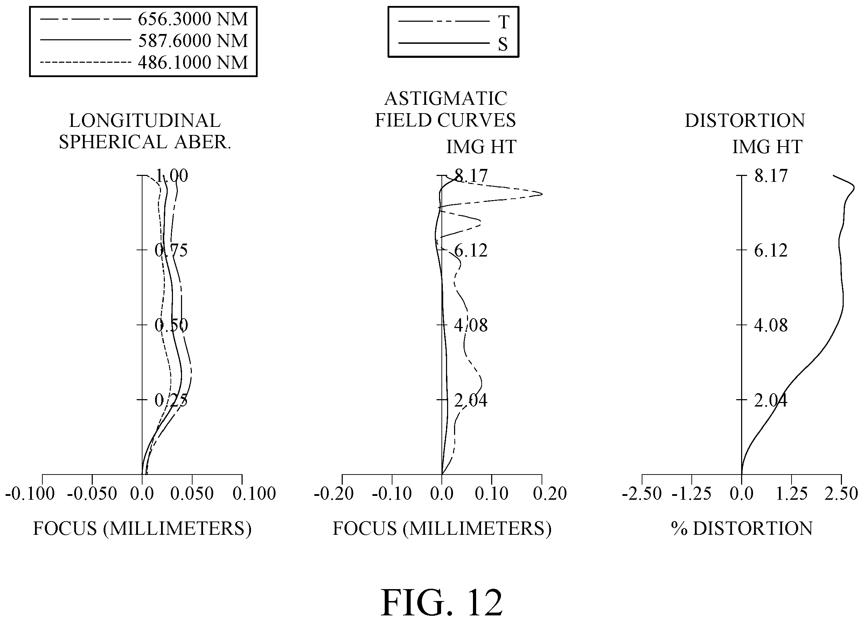

Fig. 11 is a schematic view of an image capturing unit according to the 6th embodiment of the present disclosure. Fig. 12 shows, in order from left to right, spherical aberration curves, astigmatic field curves and a distortion curve of the image capturing unit according to the 6th embodiment. In Fig. 11, the image capturing unit 6 includes the imaging lens assembly (its reference numeral is omitted) of the present disclosure and an image sensor IS. The imaging lens assembly includes, in order from an object side to an image side along an optical axis, an aperture stop ST, a first lens element E1, a second lens element E2, a third lens element E3, a stop S1, a fourth lens element E4, a fifth lens element E5, a sixth lens element E6, a stop S2, a seventh lens element E7, an eighth lens elmenet E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with negative refractive power has an object-side surface being concave in a paraxial region thereof and an image-side surface being convex in a paraxial region thereof. The third lens element E3 is made of plastic material and has the object-side surface and the image-side surface being both aspheric. The image-side surface of the third lens element E3 has one critical point in an off-axis region thereof.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being planar in a paraxial region thereof and an image-side surface being concave in a paraxial region thereof. The eighth lens element E8 is made of plastic material and has the object-side surface and the image-side surface being both aspheric. The object-side surface of the eighth lens element E8 has one critical point in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 6th embodiment are shown in Table 6A and the aspheric surface data are shown in Table 6B below.

| TABLE 6A | | | | | | | |
|---|---|---|---|---|---|---|---|
| 6th Embodiment | | | | | | | |
| f = 8.64 mm, Fno = 1.44, HFOV = 42.7 deg. | | | | | | | |
| Surface # | | Curvature Radius | | Thickness | Material | Index | Abbe # | Focal Length |
| 0 | Object | Plano | | Infinity | | | | |
| 1 | Ape. Stop | Plano | | -1.235 | | | | |
| 2 | Lens 1 | 4.4271 | (ASP) | 1.379 | Plastic | 1.545 | 56.1 | 10.41 |
| 3 | | 17.9479 | (ASP) | 0.035 | | | | |
| 4 | Lens 2 | 9.0692 | (ASP) | 0.300 | Plastic | 1.686 | 18.4 | -34.24 |
| 5 | | 6.4550 | (ASP) | 0.792 | | | | |
| 6 | Lens 3 | -321.5434 | (ASP) | 0.300 | Plastic | 1.544 | 56.0 | -901.42 |
| 7 | | -934.1143 | (ASP) | -0.151 | | | | |
| 8 | Stop | Plano | | 0.388 | | | | |

(continued)

| TABLE 6A | | | | | | | | |
|---|---|---|---|---|---|---|---|---|
| 6th Embodiment | | | | | | | | |
| f = 8.64 mm, Fno = 1.44, HFOV = 42.7 deg. | | | | | | | | |
| Surface # | | Curvature Radius | | Thickness | Material | Index | Abbe # | Focal Length |
| 9 | Lens 4 | 15.5974 | (ASP) | 0.395 | Plastic | 1.686 | 18.4 | -21.87 |
| 10 | | 7.5696 | (ASP) | 0.062 | | | | |
| 11 | Lens 5 | 9.0720 | (ASP) | 1.158 | Plastic | 1.544 | 56.0 | 16.96 |
| 12 | | 523.5602 | (ASP) | 1.070 | | | | |
| 13 | Lens 6 | 12.5728 | (ASP) | 0.960 | Plastic | 1.562 | 44.6 | -18.54 |
| 14 | | 5.5405 | (ASP) | -1.123 | | | | |
| 15 | Stop | Plano | | 1.382 | | | | |
| 16 | Lens 7 | 2.6547 | (ASP) | 0.821 | Plastic | 1.544 | 56.0 | 6.08 |
| 17 | | 11.9792 | (ASP) | 1.571 | | | | |
| 18 | Lens 8 | ∞ | (ASP) | 0.563 | Plastic | 1.534 | 56.0 | -6.49 |
| 19 | | 3.4650 | (ASP) | 0.600 | | | | |
| 20 | Filter | Plano | | 0.300 | Glass | 1.517 | 64.2 | - |
| 21 | | Plano | | 0.592 | | | | |
| 22 | Image | Plano | | - | | | | |
| Note: Reference wavelength is 587.6 nm (d-line). | | | | | | | | |
| An effective radius of the stop S1 (Surface 8) is 2.660 mm. | | | | | | | | |
| An effective radius of the stop S2 (Surface 15) is 4.130 mm. | | | | | | | | |

| TABLE 6B | | | | |
|---|---|---|---|---|
| Aspheric Coefficients | | | | |
| Surface # | 2 | 3 | 4 | 5 |
| k = | 1.02401E-01 | 7.34618E-01 | -1.12803E+01 | 0.00000E+00 |
| A4 = | -8.716300743E-05 | 1.214866623E-03 | 1.224828297E-04 | -2.612804431E-03 |
| A6 = | 3.590224988E-04 | -2.878586515E-03 | -3.268449216E-03 | -7.695198304E-04 |
| A8 = | -2.106616823E-04 | 1.920802950E-03 | 2.287935668E-03 | 5.507225229E-04 |
| A10 = | 8.566568927E-05 | -6.740077152E-04 | -8.305454476E-04 | -1.502357615E-04 |
| A12 = | -2.291035246E-05 | 1.491943035E-04 | 1.985047254E-04 | 2.608387896E-05 |
| A14 = | 4.081614312E-06 | -2.184803851E-05 | -3.257491156E-05 | -3.317567882E-06 |
| A16 = | -4.605091500E-07 | 2.073128664E-06 | 3.536475756E-06 | 2.989302825E-07 |
| A18 = | 2.951233202E-08 | -1.151218390E-07 | -2.249030990E-07 | -1.132882362E-08 |
| A20 = | -8.148941370E-10 | 2.806004989E-09 | 6.230917000E-09 | -2.055015467E-10 |
| Surface # | 6 | 7 | 9 | 10 |
| k = | 0.00000E+00 | 0.00000E+00 | 0.00000E+00 | 1.75141E-01 |
| A4 = | -2.296710802E-03 | -1.318827387E-03 | -7.223857949E-03 | -2.691389060E-02 |
| A6 = | -2.998119936E-03 | -4.780389358E-03 | 3.214475684E-03 | 1.471399675E-02 |
| A8 = | 1.305628571E-03 | 1.317409785E-03 | -4.706662413E-03 | -4.350457271E-03 |

(continued)

| Surface # | 6 | 7 | 9 | 10 |
|---|---|---|---|---|
| A10 = | -3.524011526E-04 | 7.480541110E-05 | 2.624259371E-03 | -2.960248075E-03 |
| A12 = | 9.344282811E-05 | -1.251929481E-04 | -8.396547530E-04 | 3.624393784E-03 |
| A14 = | -2.653090645E-05 | 3.269049309E-05 | 1.630827235E-04 | -1.741225046E-03 |
| A16 = | 6.022055088E-06 | -4.097213363E-06 | -1.898367041E-05 | 4.893736433E-04 |
| A18 = | -8.619793108E-07 | 2.507234994E-07 | 1.215383943E-06 | -8.754899545E-05 |
| A20 = | 6.763952687E-08 | -5.699288684E-09 | -3.276097377E-08 | 1.012347095E-05 |
| A22 = | -2.226168194E-09 | - | - | -7.348454448E-07 |
| A24 = | - | - | - | 3.051469480E-08 |
| A26 = | - | - | - | -5.538879416E-10 |
| Surface # | 11 | 12 | 13 | 14 |
| k = | 0.00000E+00 | 0.00000E+00 | 0.00000E+00 | -1.15759E+00 |
| A4 = | -3.019264638E-02 | -9.118139300E-03 | -1.441650304E-02 | -5.972964169E-02 |
| A6 = | 1.182533856E-02 | 4.254641276E-03 | 1.018026633E-02 | 2.355670168E-02 |
| A8 = | 3.660202809E-03 | -4.333093047E-03 | -6.612882048E-03 | -8.835741266E-03 |
| A10 = | -1.068411431E-02 | 3.095308542E-03 | 3.094444042E-03 | 2.603031900E-03 |
| A12 = | 8.294144690E-03 | -1.499936919E-03 | -1.030783155E-03 | -5.576820749E-04 |
| A14 = | -3.645603847E-03 | 5.014579647E-04 | 2.448422261E-04 | 8.378640652E-05 |
| A16 = | 1.028941789E-03 | -1.173416960E-04 | -4.175861779E-05 | -8.519568726E-06 |
| A18 = | -1.951250858E-04 | 1.932572754E-05 | 5.119854691E-06 | 5.429168731E-07 |
| A20 = | 2.518351889E-05 | -2.226147712E-06 | -4.471107671E-07 | -1.639806141E-08 |
| A22 = | -2.185663000E-06 | 1.753272985E-07 | 2.712413327E-08 | -3.110103323E-10 |
| A24 = | 1.221858840E-07 | -8.985170663E-09 | -1.085684139E-09 | 4.731033274E-11 |
| A26 = | -3.976586474E-09 | 2.696885990E-10 | 2.575987514E-11 | -1.637209107E-12 |
| A28 = | 5.726309189E-11 | -3.592870534E-12 | -2.741217657E-13 | 2.041394256E-14 |
| Surface # | 16 | 17 | 18 | 19 |
| k = | -1.10513E+00 | 0.00000E+00 | 0.00000E+00 | -1.27604E+01 |
| A4 = | -3.514700411E-02 | 1.418785572E-02 | -4.692268365E-02 | -1.849963049E-02 |
| A6 = | 1.253155962E-02 | -2.441431409E-03 | 1.190553426E-02 | 3.526868041E-03 |
| A8 = | -3.592419536E-03 | 4.908254072E-04 | -2.038192011E-03 | -3.585254692E-04 |
| A10 = | 4.972400000E-04 | -1.816307384E-04 | 2.473411795E-04 | 9.549428341E-06 |
| A12 = | 4.127884317E-05 | 4.079030578E-05 | -2.072755842E-05 | 2.187701198E-06 |
| A14 = | -3.695365071E-05 | -5.451868705E-06 | 1.207513474E-06 | -3.270236882E-07 |
| A16 = | 8.797417870E-06 | 4.709522508E-07 | -4.966770417E-08 | 2.358378273E-08 |
| A18 = | -1.212041989E-06 | -2.742327005E-08 | 1.455146984E-09 | -1.072542263E-09 |
| A20 = | 1.070777978E-07 | 1.088846967E-09 | -3.024527866E-11 | 3.286900907E-11 |
| A22 = | -6.148382063E-09 | -2.908612256E-11 | 4.364447389E-13 | -6.899256988E-13 |
| A24 = | 2.220187653E-10 | 5.001842070E-13 | -4.161819347E-15 | 9.797583793E-15 |
| A26 = | -4.579943577E-12 | -5.002069219E-15 | 2.359574493E-17 | -9.007875124E-17 |
| A28 = | 4.114681162E-14 | 2.210645057E-17 | -6.024484740E-20 | 4.841654601E-19 |

(continued)

| Surface # | 16 | 17 | 18 | 19 |
|---|---|---|---|---|
| A30 = | - | - | - | -1.155407848E-21 |

In the 6th embodiment, the equation of the aspheric surface profiles of the aforementioned lens elements is the same as the equation of the 1st embodiment. Also, the definitions of these parameters shown in Table 6C are the same as those stated in the 1st embodiment with corresponding values for the 6th embodiment, so an explanation in this regard will not be provided again.

Moreover, these parameters can be calculated from Table 6A and Table 6B as the following values and satisfy the following conditions:

| TABLE 6C | | | |
|---|---|---|---|
| Schematic Parameters | | | |
| f [mm] | 8.64 | f/R12+f/R13 | 4.81 |
| Fno | 1.44 | f/R16 | 2.49 |
| HFOV [deg.] | 42.7 | f5/f1 | 1.63 |
| (V1 +V3+V5)/(V2+V4) | 4.57 | f6/f8 | 2.86 |
| CT1/T12+CT5/T45 | 58.08 | f7/f8 | -0.94 |
| (CT2+CT3+CT4)/(T23+T34) | 0.97 | (f×TL)/(EPD×ImgH) | 2.01 |
| (CT7+CT8)/T78 | 0.88 | 1/\|1-tan(HFOV)\| | 12.94 |
| T56/T67 | 4.13 | Yc42/Y42 | 0.60 |
| TL/ImgH | 1.40 | Yc62/Y62 | 0.30 |
| R2/R1 | 4.05 | Yc71/Y71 | 0.60 |
| (R3+R4)/\|f2\| | 0.45 | Yc72/Y72 | 0.60 |
| R12/R13 | 2.09 | Yc82/Y82 | 0.34 |
| \|f/62]+\|f/3\|+\|f/f4\| | 0.66 | - | - |

## 7th Embodiment

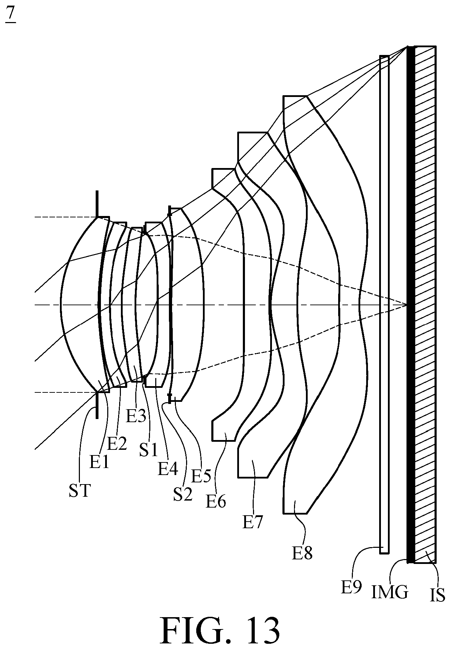

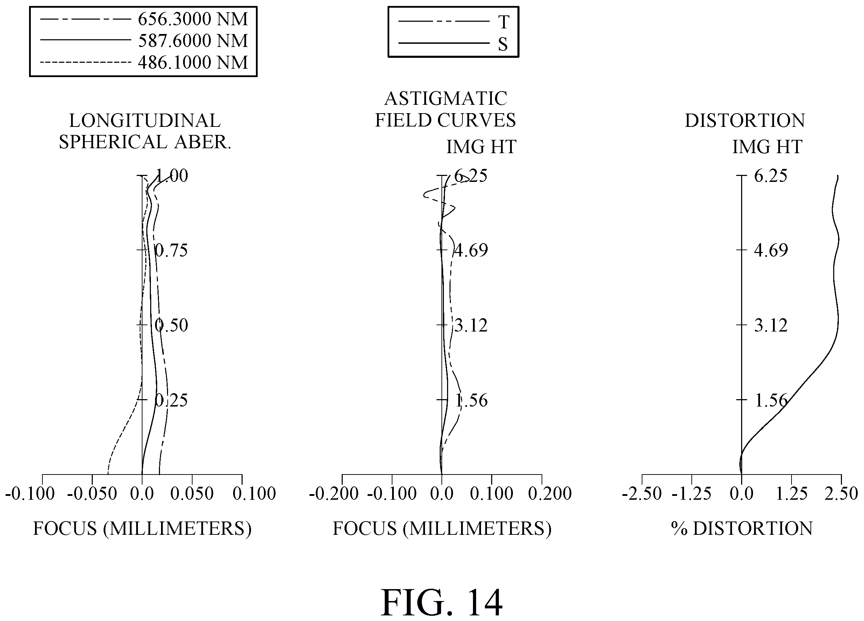

Fig. 13 is a schematic view of an image capturing unit according to the 7th embodiment of the present disclosure. Fig. 14 shows, in order from left to right, spherical aberration curves, astigmatic field curves and a distortion curve of the image capturing unit according to the 7th embodiment. In Fig. 13, the image capturing unit 7 includes the imaging lens assembly (its reference numeral is omitted) of the present disclosure and an image sensor IS. The imaging lens assembly includes, in order from an object side to an image side along an optical axis, an aperture stop ST, a first lens element E1, a second lens element E2, a third lens element E3, a stop S1, a fourth lens element E4, a stop S2, a fifth lens element E5, a sixth lens lement E6, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being concave in a paraxial region thereof and an image-side surface being concave in a paraxial region thereof. The fourth lens element E4 is made of plastic material and has the object-side surface and the image-side surface being both aspheric. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has one critical point in an off-axis region thereof.

The sixth lens element E6 with negative refractive power has an object-side surface being concave in a paraxial region thereof and an image-side surface being concave in a paraxial region thereof. The sixth lens element E6 is made of plastic material and has the object-side surface and the image-side surface being both aspheric. The object-side surface of the sixth lens element E6 has two critical points in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one critical point in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 7th embodiment are shown in Table 7A and the aspheric surface data are shown in Table 7B below.

| TABLE 7A | | | | | | | |
|---|---|---|---|---|---|---|---|
| 7th Embodiment | | | | | | | |
| f = 6.68 mm, Fno = 1.57, HFOV = 42.4 deg. | | | | | | | |
| Surface # | | Curvature Radius | Thickness | Material | Index | Abbe # | Focal Length |
| 0 | Object | Plano | | Infinity | | | |
| 1 | Ape. Stop | Plano | | -0.877 | | | |
| 2 | Lens 1 | 2.9554 | (ASP) | 0.911 | Plastic | 1.545 | 56.1 | 11.43 |
| 3 | | 5.0109 | (ASP) | 0.035 | | | |
| 4 | Lens 2 | 5.6420 | (ASP) | 0.242 | Plastic | 1.686 | 18.4 | 217.56 |
| 5 | | 5.7613 | (ASP) | 0.292 | | | |
| 6 | Lens 3 | 5.2513 | (ASP) | 0.334 | Plastic | 1.544 | 56.0 | 57.56 |
| 7 | | 6.1679 | (ASP) | 0.218 | | | |
| 8 | Stop | Plano | | 0.320 | | | |
| 9 | Lens 4 | -195.6947 | (ASP) | 0.292 | Plastic | 1.686 | 18.4 | -19.60 |
| 10 | | 14.4500 | (ASP) | -0.005 | | | |
| 11 | Stop | Plano | | 0.040 | | | |
| 12 | Lens 5 | 13.9392 | (ASP) | 0.788 | Plastic | 1.544 | 56.0 | 11.07 |
| 13 | | -10.3924 | (ASP) | 0.975 | | | |
| 14 | Lens 6 | -201.2072 | (ASP) | 0.613 | Plastic | 1.686 | 18.4 | -5.73 |
| 15 | | 4.0116 | (ASP) | 0.035 | | | |
| 16 | Lens 7 | 2.0749 | (ASP) | 0.645 | Plastic | 1.639 | 23.3 | 3.78 |
| 17 | | 12.9369 | (ASP) | 1.009 | | | |
| 18 | Lens 8 | 7.5022 | (ASP) | 0.487 | Plastic | 1.639 | 23.3 | -4.93 |

(continued)

| TABLE 7A | | | | | | | | |
|---|---|---|---|---|---|---|---|---|
| 7th Embodiment | | | | | | | | |
| f = 6.68 mm, Fno = 1.57, HFOV = 42.4 deg. | | | | | | | | |
| Surface # | | Curvature Radius | Thickness | Material | Index | Abbe # | Focal Length | |
| 19 | | 2.1626 | (ASP) | 0.500 | | | | |
| 20 | Filter | Plano | | 0.210 | Glass | 1.517 | 64.2 | - |
| 21 | | Plano | | 0.458 | | | | |
| 22 | Image | Plano | | - | | | | |
| Note: Reference wavelength is 587.6 nm (d-line). | | | | | | | | |
| An effective radius of the stop S1 (Surface 8) is 1.754 mm. | | | | | | | | |
| An effective radius of the stop S2 (Surface 11) is 2.181 mm. | | | | | | | | |

| TABLE 7B | | | | |
|---|---|---|---|---|
| Aspheric Coefficients | | | | |
| Surface # | 2 | 3 | 4 | 5 |
| k = | -7.72464E-02 | -1.49707E+01 | -3.31921E+00 | 0.00000E+00 |
| A4 = | 7.448914076E-05 | -5.889001557E-02 | -6.838830973E-02 | -1.804076475E-02 |
| A6 = | -1.170164409E-04 | 9.369204911E-02 | 1.074110823E-01 | 4.167103928E-02 |
| A8 = | 9.042719167E-04 | -8.413953899E-02 | -9.452796450E-02 | -4.253129813E-02 |
| A10 = | -1.003944631E-03 | 4.735943257E-02 | 5.289952439E-02 | 3.073434742E-02 |
| A12 = | 5.695296672E-04 | -1.736860920E-02 | -1.901069898E-02 | -1.675683900E-02 |
| A14 = | -1.857972519E-04 | 4.173361449E-03 | 4.267817066E-03 | 7.134106414E-03 |
| A16 = | 3.349224748E-05 | -6.321662314E-04 | -5.251044645E-04 | -2.304032459E-03 |
| A18 = | -2.713897580E-06 | 5.428390521E-05 | 1.759021605E-05 | 5.184291698E-04 |
| A20 = | -1.754374993E-08 | -1.984360974E-06 | 2.875312261E-06 | -7.013473300E-05 |
| A22 = | 1.218621661E-08 | - | -2.391426582E-07 | 4.169113220E-06 |
| Surface # | 6 | 7 | 9 | 10 |
| k = | 0.00000E+00 | 0.00000E+00 | 0.00000E+00 | 2.15124E-01 |
| A4 = | -1.918049752E-02 | -1.222649257E-02 | -2.298521651E-02 | -3.694362763E-02 |
| A6 = | 1.406555319E-02 | 1.295542020E-03 | 6.309991725E-03 | 2.832192594E-02 |
| A8 = | -2.266941609E-02 | -9.515616528E-04 | -1.158286213E-02 | -3.253213240E-02 |
| A10 = | 2.489806485E-02 | -2.073073905E-03 | 9.634515891E-03 | 2.752863909E-02 |
| A12 = | -1.915633414E-02 | 3.191943882E-03 | -5.554493496E-03 | -1.606395052E-02 |
| A14 = | 1.016302199E-02 | -2.019708721E-03 | 2.075024474E-03 | 5.189271665E-03 |
| A16 = | -3.574318564E-03 | 7.046112118E-04 | -4.558038782E-04 | -1.681545729E-05 |
| A18 = | 7.930928690E-04 | -1.306881247E-04 | 5.039931985E-05 | -7.585202660E-04 |
| A20 = | -9.982059214E-05 | 1.015760001E-05 | -1.940484275E-06 | 3.362597074E-04 |
| A22 = | 5.393789894E-06 | - | - | -7.282903496E-05 |
| A24 = | - | - | - | 8.249705095E-06 |
| A26 = | - | - | - | -3.909204529E-07 |

(continued)

| Surface # | 12 | 13 | 14 | 15 |
|---|---|---|---|---|
| k = | 0.00000E+00 | 0.00000E+00 | 0.00000E+00 | -8.60499E-01 |
| A4 = | -3.089075298E-02 | -6.613757060E-03 | 1.484501386E-02 | -1.286241687E-01 |
| A6 = | 3.833303729E-02 | -2.947442611E-03 | -2.849554175E-02 | 7.830543920E-02 |
| A8 = | -4.896106967E-02 | -9.894799401E-04 | 3.218579385E-02 | -4.027378421E-02 |
| A10 = | 4.792143617E-02 | 9.092852315E-03 | -2.556646517E-02 | 1.610899994E-02 |
| A12 = | -3.188362642E-02 | -1.433787016E-02 | 1.425981699E-02 | -4.997995820E-03 |
| A14 = | 1.284826997E-02 | 1.251989095E-02 | -5.708187111E-03 | 1.200775637E-03 |
| A16 = | -2.107123845E-03 | -7.026733139E-03 | 1.653971103E-03 | -2.214716253E-04 |
| A18 = | -6.616097418E-04 | 2.663260587E-03 | -3.462731958E-04 | 3.082277518E-05 |
| A20 = | 4.954373437E-04 | -6.907512452E-04 | 5.168279957E-05 | -3.158726067E-06 |
| A22 = | -1.390645193E-04 | 1.210507583E-04 | -5.342870560E-06 | 2.301645183E-07 |
| A24 = | 2.144520461E-05 | -1.371836012E-05 | 3.622107594E-07 | -1.125455186E-08 |
| A26 = | -1.788356666E-06 | 9.079347679E-07 | -1.443201212E-08 | 3.302739818E-10 |
| A28 = | 6.319856194E-08 | -2.664602692E-08 | 2.552635630E-10 | -4.384266398E-12 |
| Surface # | 16 | 17 | 18 | 19 |
| k = | -9.89541E-01 | 0.00000E+00 | 0.00000E+00 | -8.81374E+00 |
| A4 = | -1.300637223E-01 | 2.218079181E-02 | -1.233634047E-01 | -5.141896394E-02 |
| A6 = | 9.573037426E-02 | -6.757302208E-03 | 4.614392529E-02 | 1.642918924E-02 |
| A8 = | -6.003500182E-02 | 2.097657741E-03 | -1.186750618E-02 | -3.256982553E-03 |
| A10 = | 2.805632953E-02 | -1.431051171E-03 | 2.117810207E-03 | 3.393063619E-04 |
| A12 = | -9.934044019E-03 | 5.982062975E-04 | -2.507475406E-04 | 4.234735281E-08 |
| A14 = | 2.621176793E-03 | -1.484763773E-04 | 1.826316024E-05 | -5.545268223E-06 |
| A16 = | -5.061695935E-04 | 2.393770120E-05 | -6.131375426E-07 | 8.766369372E-07 |
| A18 = | 7.048211957E-05 | -2.624284004E-06 | -1.796994493E-08 | -7.501747636E-08 |
| A20 = | -6.957066334E-06 | 1.980988955E-07 | 3.102406273E-09 | 4.059433805E-09 |
| A22 = | 4.734926244E-07 | -1.015057443E-08 | -1.611470143E-10 | -1.425552798E-10 |
| A24 = | -2.110375759E-08 | 3.372265758E-10 | 4.508768707E-12 | 3.158338027E-12 |
| A26 = | 5.540500012E-10 | -6.549170380E-12 | -6.820086347E-14 | -4.019590959E-14 |
| A28 = | -6.492744116E-12 | 5.640570629E-14 | 4.397467489E-16 | 2.243291630E-16 |

In the 7th embodiment, the equation of the aspheric surface profiles of the aforementioned lens elements is the same as the equation of the 1st embodiment. Also, the definitions of these parameters shown in Table 7C are the same as those stated in the 1st embodiment with corresponding values for the 7th embodiment, so an explanation in this regard will not be provided again.

Moreover, these parameters can be calculated from Table 7A and Table 7B as the following values and satisfy the following conditions:

| TABLE 7C | | | |
|---|---|---|---|
| Schematic Parameters | | | |
| f [mm] | 6.68 | f/R12+f/R13 | 4.88 |
| Fno | 1.57 | f/R16 | 3.09 |

(continued)

| TABLE 7C | | | |
|---|---|---|---|
| Schematic Parameters | | | |
| HFOV [deg.] | 42.4 | f5/f1 | 0.97 |
| (V1 +V3+V5)/(V2+V4) | 4.57 | f6/f8 | 1.16 |
| CT1/T12+CT5/T45 | 48.54 | f7/f8 | -0.77 |
| (CT2+CT3+CT4)/(T23+T34) | 1.05 | (f×TL)/(EPD×ImgH) | 2.11 |
| (CT7+CT8)/T78 | 1.12 | 1/\|1-tan(HFOV)\| | 11.50 |
| T56/T67 | 27.86 | Yc42/Y42 | 0.43 |
| TL/ImgH | 1.34 | Yc62/Y62 | 0.30 |
| R2/R1 | 1.70 | Yc71/Y71 | 0.53 |
| (R3+R4)/\|f2\| | 0.05 | Yc72/Y72 | 0.53 |
| R12/R13 | 1.93 | Yc82/Y82 | 0.34 |
| \|f/f2\|+\|f/f3\|+\|f/f4\| | 0.49 | - | - |

## 8th Embodiment

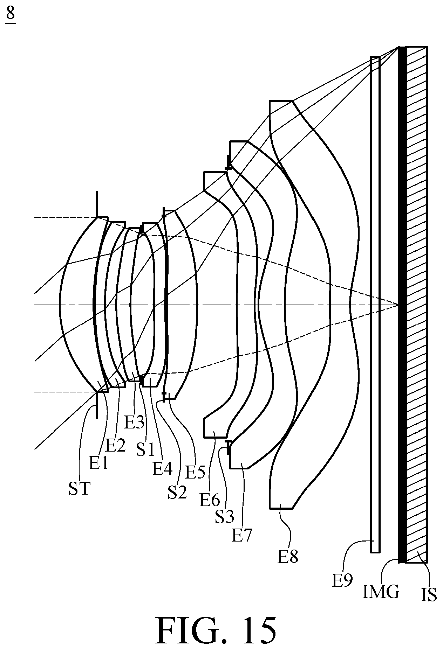

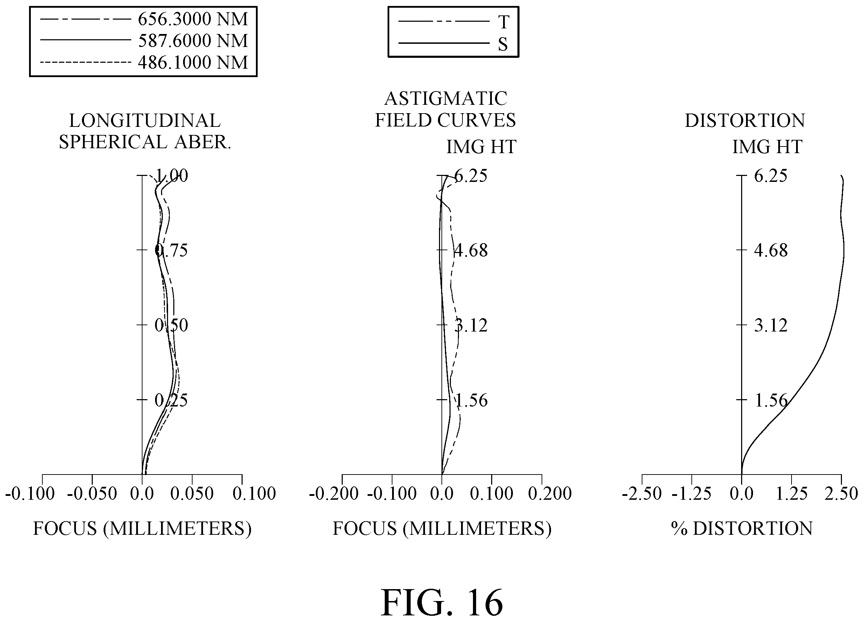

Fig. 15 is a schematic view of an image capturing unit according to the 8th embodiment of the present disclosure. Fig. 16 shows, in order from left to right, spherical aberration curves, astigmatic field curves and a distortion curve of the image capturing unit according to the 8th embodiment. In Fig. 15, the image capturing unit 8 includes the imaging lens assembly (its reference numeral is omitted) of the present disclosure and an image sensor IS. The imaging lens assembly includes, in order from an object side to an image side along an optical axis, an aperture stop ST, a first lens element E1, a second lens element E2, a third lens element E3, a stop S1, a fourth lens element E4, a stop S2, a fifth lens element E5, a sixth lens lement E6, a stop S3, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of glass material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has two critical points in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has three critical points in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 8th embodiment are shown in Table 8A and the aspheric surface data are shown in Table 8B below.

| TABLE 8A | | | | | | | | |
|---|---|---|---|---|---|---|---|---|
| 8th Embodiment | | | | | | | | |
| f = 6.65 mm, Fno = 1.57, HFOV = 42.4 deg. | | | | | | | | |
| Surface # | | Curvature Radius | Thickness | Material | Index | Abbe # | Focal Length | |
| 0 | Object | Plano | Infinity | | | | | |
| 1 | Ape. Stop | Plano | | -0.900 | | | | |
| 2 | Lens 1 | 2.9139 | (ASP) | 0.816 | Glass | 1.619 | 63.8 | 9.14 |
| 3 | | 5.3676 | (ASP) | 0.035 | | | | |
| 4 | Lens 2 | 6.9551 | (ASP) | 0.242 | Plastic | 1.686 | 18.4 | -27.91 |
| 5 | | 5.0296 | (ASP) | 0.273 | | | | |
| 6 | Lens 3 | 4.2627 | (ASP) | 0.343 | Plastic | 1.544 | 56.0 | 33.26 |
| 7 | | 5.4184 | (ASP) | 0.258 | | | | |
| 8 | Stop | Plano | | 0.315 | | | | |
| 9 | Lens 4 | 23.2922 | (ASP) | 0.264 | Plastic | 1.686 | 18.4 | -18.87 |
| 10 | | 8.2827 | (ASP) | -0.029 | | | | |
| 11 | Stop | Plano | | 0.076 | | | | |
| 12 | Lens 5 | 14.6379 | (ASP) | 0.728 | Plastic | 1.544 | 56.0 | 11.03 |
| 13 | | -9.9862 | (ASP) | 0.957 | | | | |
| 14 | Lens 6 | 13.1364 | (ASP) | 0.429 | Plastic | 1.587 | 28.3 | -6.96 |
| 15 | | 3.0799 | (ASP) | -0.638 | | | | |
| 16 | Stop | Plano | | 0.731 | | | | |
| 17 | Lens 7 | 2.0123 | (ASP) | 0.640 | Plastic | 1.566 | 37.4 | 4.41 |
| 18 | | 9.2100 | (ASP) | 1.082 | | | | |
| 19 | Lens 8 | 8.6962 | (ASP) | 0.487 | Plastic | 1.534 | 56.0 | -6.00 |
| 20 | | 2.2974 | (ASP) | 0.500 | | | | |
| 21 | Filter | Plano | | 0.210 | Glass | 1.517 | 64.2 | - |
| 22 | | Plano | | 0.470 | | | | |
| 23 | Image | Plano | | - | | | | |
| Note: Reference wavelength is 587.6 nm (d-line). | | | | | | | | |
| An effective radius of the stop S1 (Surface 8) is 1.756 mm. | | | | | | | | |

(continued)

| TABLE 8A | | | | | | |
|---|---|---|---|---|---|---|
| 8th Embodiment | | | | | | |
| f = 6.65 mm, Fno = 1.57, HFOV = 42.4 deg. | | | | | | |
| Surface # | | Curvature Radius | Thickness | Material | Index | Abbe # | Focal Length |
| An effective radius of the stop S2 (Surface 11) is 2.151 mm. | | | | | | |
| An effective radius of the stop S3 (Surface 16) is 3.298 mm. | | | | | | |

| TABLE 8B | | | | |
|---|---|---|---|---|
| Aspheric Coefficients | | | | |
| Surface # | 2 | 3 | 4 | 5 |
| k = | -5.78314E-02 | -3.97258E+00 | 3.26632E+00 | 0.00000E+00 |
| A4 = | 6.779268706E-04 | -2.297854837E-02 | -3.361843201E-02 | -1.716837343E-02 |
| A6 = | 3.045093951E-04 | 3.474975414E-02 | 5.348991904E-02 | 3.207764475E-02 |
| A8 = | 1.243266142E-04 | -2.004512690E-02 | -3.382612884E-02 | -2.528272286E-02 |
| A10 = | -2.745888927E-04 | 3.308047866E-03 | 7.084633509E-03 | 1.118173086E-02 |
| A12 = | 9.114642920E-05 | 1.223427443E-03 | 4.187747493E-03 | -3.903129498E-04 |
| A14 = | 4.078891714E-05 | -5.734297014E-04 | -3.888122143E-03 | -2.315113623E-03 |
| A16 = | -3.970108300E-05 | 6.888341077E-05 | 1.510021680E-03 | 1.266645499E-03 |
| A18 = | 1.217160466E-05 | 9.820407957E-07 | -3.330243465E-04 | -3.189104769E-04 |
| A20 = | -1.718958326E-06 | -4.821368699E-07 | 4.007200294E-05 | 4.023663328E-05 |
| A22 = | 9.501775302E-08 | - | -2.032092058E-06 | -2.076023428E-06 |
| Surface # | 6 | 7 | 9 | 10 |
| k = | 0.00000E+00 | 0.00000E+00 | 0.00000E+00 | -2.16126E+01 |
| A4 = | -2.560317303E-02 | -1.495377499E-02 | -3.121320973E-02 | -4.494925787E-02 |
| A6 = | 8.411554378E-03 | 2.829525679E-03 | 8.530226998E-03 | 4.287931961E-02 |
| A8 = | -4.368612446E-03 | -4.329807015E-03 | -8.991183699E-03 | -7.060227122E-02 |
| A10 = | -4.132437616E-04 | 4.627414984E-03 | 3.643013504E-03 | 9.520543621E-02 |
| A12 = | 3.068510046E-03 | -2.908259212E-03 | 5.472748072E-06 | -9.870846151E-02 |
| A14 = | -2.552208092E-03 | 1.117446329E-03 | -7.612100467E-04 | 7.340889515E-02 |
| A16 = | 1.127643309E-03 | -2.298259044E-04 | 3.640171869E-04 | -3.782649181E-02 |
| A18 = | -2.889305367E-04 | 1.983084056E-05 | -7.628401021E-05 | 1.327375783E-02 |
| A20 = | 4.105341998E-05 | 4.470287301E-08 | 6.281071772E-06 | -3.102925817E-03 |
| A22 = | -2.534303866E-06 | - | - | 4.615128617E-04 |
| A24 = | - | - | - | -3.944323658E-05 |
| A26 = | - | - | - | 1.471843803E-06 |
| Surface # | 12 | 13 | 14 | 15 |
| k = | 0.00000E+00 | 0.00000E+00 | 0.00000E+00 | -1.00000E+00 |
| A4 = | -3.631756265E-02 | -8.891861668E-03 | -3.777526056E-02 | -1.729032987E-01 |
| A6 = | 4.710953768E-02 | -1.292894114E-02 | 3.518754662E-02 | 1.295139189E-01 |
| A8 = | -8.806394099E-02 | 2.841677946E-02 | -2.468578740E-02 | -8.360220207E-02 |

(continued)

| Surface # | 12 | 13 | 14 | 15 |
|---|---|---|---|---|
| A10 = | 1.337923287E-01 | -3.720118178E-02 | 1.031943191E-02 | 4.160932467E-02 |
| A12 = | -1.484215457E-01 | 3.186076855E-02 | -1.399761009E-03 | -1.522389372E-02 |
| A14 = | 1.159465937E-01 | -1.854618014E-02 | -1.096932923E-03 | 4.023162248E-03 |
| A16 = | -6.318531025E-02 | 7.453530492E-03 | 7.879998807E-04 | -7.644893678E-04 |
| A18 = | 2.399414802E-02 | -2.058933268E-03 | -2.623027954E-04 | 1.038228575E-04 |
| A20 = | -6.310591371E-03 | 3.802196537E-04 | 5.364404742E-05 | -9.933707245E-06 |
| A22 = | 1.125783346E-03 | -4.388371938E-05 | -7.060245010E-06 | 6.510841381E-07 |
| A24 = | -1.298776857E-04 | 2.658901864E-06 | 5.840608138E-07 | -2.772918891E-08 |
| A26 = | 8.734318569E-06 | -3.220328869E-08 | -2.765304428E-08 | 6.895021033E-10 |
| A28 = | -2.598395975E-07 | -3.141917083E-09 | 5.711795012E-10 | -7.582474195E-12 |
| Surface # | 17 | 18 | 19 | 20 |
| k = | -1.00000E+00 | 0.00000E+00 | 0.00000E+00 | -7.67834E+00 |
| A4 = | -1.106385366E-01 | 3.634629841E-02 | -9.666643448E-02 | -4.615193597E-02 |
| A6 = | 8.204132451E-02 | -8.445424853E-03 | 3.365065791E-02 | 1.478012492E-02 |
| A8 = | -5.471847763E-02 | -5.118110790E-03 | -9.245163622E-03 | -3.639650033E-03 |
| A10 = | 2.527390767E-02 | 3.673811895E-03 | 1.875818412E-03 | 6.219397365E-04 |
| A12 = | -8.311188609E-03 | -1.175107181E-03 | -2.556286880E-04 | -7.015008779E-05 |
| A14 = | 1.985171687E-03 | 2.368833487E-04 | 2.187109831E-05 | 4.661271051E-06 |
| A16 = | -3.472675613E-04 | -3.268489528E-05 | -1.008379386E-06 | -9.332816617E-08 |
| A18 = | 4.429511487E-05 | 3.166973118E-06 | 3.240586509E-09 | -1.270271507E-08 |
| A20 = | -4.048121876E-06 | -2.154546336E-07 | 2.604794587E-09 | 1.345888767E-09 |
| A22 = | 2.565035240E-07 | 1.007699961E-08 | -1.666829996E-10 | -6.416677223E-11 |
| A24 = | -1.064183214E-08 | -3.084564072E-10 | 5.170635086E-12 | 1.734584104E-12 |
| A26 = | 2.588745424E-10 | 5.562344860E-12 | -8.419146209E-14 | -2.572060420E-14 |
| A28 = | -2.790535149E-12 | -4.479559150E-14 | 5.771315447E-16 | 1.633707293E-16 |

In the 8th embodiment, the equation of the aspheric surface profiles of the aforementioned lens elements is the same as the equation of the 1st embodiment. Also, the definitions of these parameters shown in Table 8C are the same as those stated in the 1st embodiment with corresponding values for the 8th embodiment, so an explanation in this regard will not be provided again.

Moreover, these parameters can be calculated from Table 8A and Table 8B as the following values and satisfy the following conditions:

| TABLE 8C | | | |
|---|---|---|---|
| Schematic Parameters | | | |
| f [mm] | 6.65 | f/R12+f/R13 | 5.47 |
| Fno | 1.57 | f/R16 | 2.90 |
| HFOV [deg.] | 42.4 | f5/f1 | 1.21 |
| (V1 +V3+V5)/(V2+V4) | 4.78 | f6/f8 | 1.16 |
| CT1/T12+CT5/T45 | 38.80 | f7/f8 | -0.73 |
| (CT2+CT3+CT4)/(T23+T34) | 1.00 | (f×TL)/(EPD×ImgH) | 2.06 |

(continued)

| TABLE 8C | | | |
|---|---|---|---|
| Schematic Parameters | | | |
| (CT7+CT8)/T78 | 1.04 | 1/\|1-tan(HFOV)\| | 11.56 |
| T56/T67 | 10.29 | Yc42/Y42 | 0.49 |
| TL/ImgH | 1.31 | Yc62/Y62 | 0.34 |
| R2/R1 | 1.84 | Yc71/Y71 | 0.55 |
| (R3+R4)/\|f2\| | 0.43 | Yc72/Y72 | 0.56 |
| R12/R13 | 1.53 | Yc82/Y82 | 0.35 |
| \|f/f2\|+\|f/f3\|+\|f/f4\| | 0.79 | - | - |

### 9th Embodiment

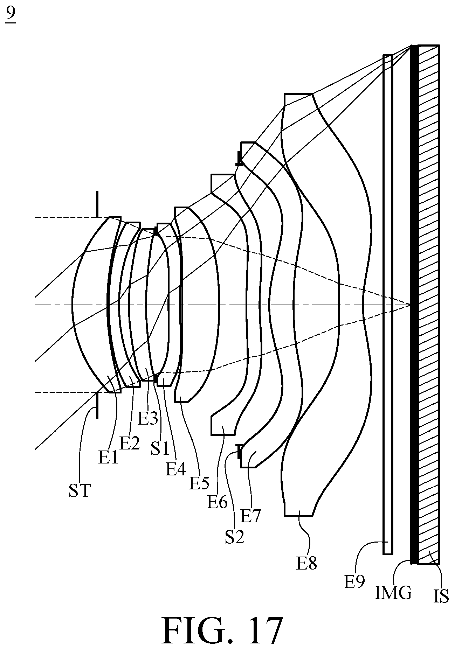

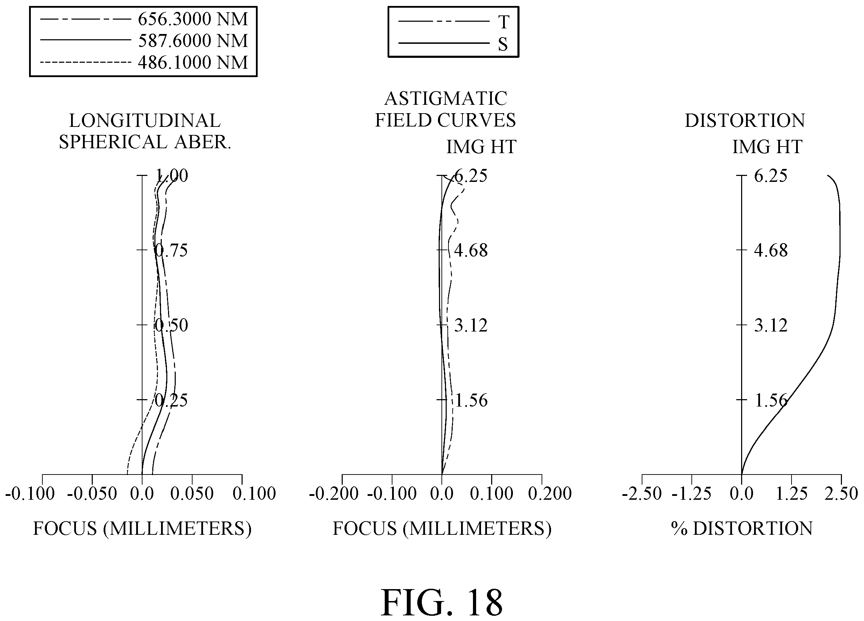

Fig. 17 is a schematic view of an image capturing unit according to the 9th embodiment of the present disclosure. Fig. 18 shows, in order from left to right, spherical aberration curves, astigmatic field curves and a distortion curve of the image capturing unit according to the 9th embodiment. In Fig. 17, the image capturing unit 9 includes the imaging lens assembly (its reference numeral is omitted) of the present disclosure and an image sensor IS. The imaging lens assembly includes, in order from an object side to an image side along an optical axis, an aperture stop ST, a first lens element E1, a second lens element E2, a third lens element E3, a stop S1, a fourth lens element E4, a fifth lens element E5, a sixth lens lement E6, a stop S2, a seventh lens element E7, an eighth lens element E8, a filter E9 and an image surface IMG. The imaging lens assembly includes eight lens elements (E1, E2, E3, E4, E5, E6, E7 and E8) with no additional lens element disposed between each of the adjacent eight lens elements.

The first lens element E1 with positive refractive power has an object-side surface being convex in a paraxial region thereof and an image-side surface being concave in a paraxial region thereof. The first lens element E1 is made of glass material and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with negative refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one critical point in an off-axis region thereof. The image-side surface of the fourth lens element E4 has one critical point in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one critical point in an off-axis region thereof. The image-side surface of the sixth lens element E6 has one critical point in an off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one critical point in an off-axis region thereof. The image-side surface of the seventh lens element E7 has one critical point in an off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has two critical points in an off-axis region thereof. The image-side surface of the eighth lens element E8 has one critical point in an off-axis region thereof.

The filter E9 is made of glass material and located between the eighth lens element E8 and the image surface IMG, and will not affect the focal length of the imaging lens assembly. The image sensor IS is disposed on or near the image surface IMG of the imaging lens assembly.

The detailed optical data of the 9th embodiment are shown in Table 9A and the aspheric surface data are shown in Table 9B below.

| TABLE 9A | | | | | | | | |
|---|---|---|---|---|---|---|---|---|
| 9th Embodiment | | | | | | | | |
| f = 6.65 mm, Fno = 1.56, HFOV = 42.6 deg. | | | | | | | | |
| Surface # | | Curvature Radius | Thickness | Material | Index | Abbe # | Focal Length | |
| 0 | Object | Plano | | Infinity | | | | |
| 1 | Ape. Stop | Plano | | -0.600 | | | | |
| 2 | Lens 1 | 2.9245 | (ASP) | 0.848 | Glass | 1.619 | 63.8 | 8.76 |
| 3 | | 5.6415 | (ASP) | 0.033 | | | | |
| 4 | Lens 2 | 5.4708 | (ASP) | 0.250 | Plastic | 1.686 | 18.4 | -25.45 |
| 5 | | 4.0882 | (ASP) | 0.239 | | | | |
| 6 | Lens 3 | 4.8903 | (ASP) | 0.416 | Plastic | 1.544 | 56.0 | 28.99 |
| 7 | | 6.8760 | (ASP) | 0.233 | | | | |
| 8 | Stop | Plano | | 0.309 | | | | |
| 9 | Lens 4 | 19.8981 | (ASP) | 0.278 | Plastic | 1.686 | 18.4 | -31.57 |
| 10 | | 10.3112 | (ASP) | 0.059 | | | | |
| 11 | Lens 5 | 535.0139 | (ASP) | 0.887 | Plastic | 1.544 | 56.0 | 16.01 |
| 12 | | -8.8497 | (ASP) | 0.657 | | | | |
| 13 | Lens 6 | 9.5722 | (ASP) | 0.320 | Plastic | 1.587 | 28.3 | -18.70 |
| 14 | | 5.0514 | (ASP) | -0.500 | | | | |
| 15 | Stop | Plano | | 0.734 | | | | |
| 16 | Lens 7 | 2.9683 | (ASP) | 0.587 | Plastic | 1.566 | 37.4 | 7.07 |
| 17 | | 10.6807 | (ASP) | 1.088 | | | | |
| 18 | Lens 8 | 20.5511 | (ASP) | 0.580 | Plastic | 1.534 | 56.0 | -5.76 |
| 19 | | 2.6506 | (ASP) | 0.500 | | | | |
| 20 | Filter | Plano | | 0.210 | Glass | 1.517 | 64.2 | - |
| 21 | | Plano | | 0.459 | | | | |
| 22 | Image | Plano | | - | | | | |
| Note: Reference wavelength is 587.6 nm (d-line). | | | | | | | | |
| An effective radius of the stop S1 (Surface 8) is 1.720 mm. | | | | | | | | |
| An effective radius of the stop S2 (Surface 15) is 3.395 mm. | | | | | | | | |

| TABLE 9B | | | | |
|---|---|---|---|---|
| Aspheric Coefficients | | | | |
| Surface # | 2 | 3 | 4 | 5 |
| k = | -8.10718E-02 | -4.48184E+00 | 3.32109E+00 | 2.02361E+00 |
| A4 = | 3.714552233E-04 | -1.002783441E-02 | -2.167792109E-02 | -1.628913048E-02 |

(continued)

| TABLE 9B | | | | |
|---|---|---|---|---|
| Aspheric Coefficients | | | | |
| Surface # | 2 | 3 | 4 | 5 |
| A6 = | 1.450693750E-03 | 9.815476233E-03 | 2.115096958E-02 | 1.692309940E-02 |
| A8 = | -1.974739299E-03 | 5.314406522E-03 | -2.167922241E-03 | -1.250921241E-02 |
| A10 = | 1.619245613E-03 | -1.735433078E-02 | -1.429202752E-02 | 8.589694798E-03 |
| A12 = | -7.921214155E-04 | 1.391947116E-02 | 1.340278373E-02 | -6.497638589E-03 |
| A14 = | 2.029459528E-04 | -5.619909211E-03 | -5.696648399E-03 | 4.248147328E-03 |
| A16 = | -1.199752069E-05 | 1.254349632E-03 | 1.307538093E-03 | -1.848839837E-03 |
| A18 = | -6.952427937E-06 | -1.476714214E-04 | -1.574114803E-04 | 4.851544581E-04 |
| A20 = | 1.718577552E-06 | 7.154339224E-06 | 7.800043670E-06 | -6.954789528E-05 |
| A22 = | -1.240793137E-07 | - | - | 4.157894275E-06 |
| Surface # | 6 | 7 | 9 | 10 |
| k = | -9.38005E+00 | -1.65487E+01 | 0.00000E+00 | -2.28814E+01 |
| A4 = | -5.729630684E-03 | -2.698086756E-03 | -3.101496010E-02 | -2.553448183E-02 |
| A6 = | 3.135220276E-03 | 1.103181118E-03 | 3.135821002E-03 | 3.670777451E-03 |
| A8 = | -1.488534520E-03 | -3.348527571E-03 | -6.931853012E-03 | -9.360168775E-03 |
| A10 = | -1.727512782E-04 | 4.308827854E-03 | 5.556699556E-03 | 1.236190581E-02 |
| A12 = | 6.399909301E-04 | -3.074931988E-03 | -3.207343624E-03 | -1.427703116E-02 |
| A14 = | -3.093778403E-04 | 1.295405557E-03 | 1.178026739E-03 | 1.220514860E-02 |
| A16 = | 7.851931673E-05 | -2.843010400E-04 | -2.415198763E-04 | -6.751040895E-03 |
| A18 = | -8.034319792E-06 | 2.607309500E-05 | 2.114317156E-05 | 2.327868744E-03 |
| A20 = | - | - | - | -4.845028987E-04 |
| A22 = | - | - | - | 5.582344912E-05 |
| A24 = | - | - | - | -2.734548003E-06 |
| Surface # | 11 | 12 | 13 | 14 |
| k = | 0.00000E+00 | -2.90983E+01 | -2.21320E+01 | -2.02520E+01 |
| A4 = | -8.244841094E-03 | -1.549826511E-02 | -3.244934484E-02 | -5.780104594E-02 |
| A6 = | -2.036766891E-03 | -2.156214759E-03 | 1.590165583E-02 | 2.188837968E-02 |
| A8 = | 6.187153817E-03 | 1.619470563E-03 | -2.443896948E-03 | -2.222395955E-03 |
| A10 = | -1.136637143E-02 | 3.175009312E-03 | -3.427036619E-03 | -2.915047384E-03 |
| A12 = | 8.807918702E-03 | -7.857297287E-03 | 2.749138075E-03 | 1.937616823E-03 |
| A14 = | -1.958144060E-03 | 8.188180543E-03 | -1.067149426E-03 | -6.541500395E-04 |
| A16 = | -1.266777737E-03 | -5.180302804E-03 | 2.512869972E-04 | 1.390935696E-04 |
| A18 = | 1.045687107E-03 | 2.188000735E-03 | -3.712349540E-05 | -1.933911931E-05 |
| A20 = | -3.370119361E-04 | -6.382815144E-04 | 3.345379804E-06 | 1.752693355E-06 |
| A22 = | 5.799103063E-05 | 1.291569101E-04 | -1.669857691E-07 | -9.991364075E-08 |
| A24 = | -5.235528707E-06 | -1.778524992E-05 | 3.512142795E-09 | 3.260095521E-09 |
| A26 = | 1.945278062E-07 | 1.586991250E-06 | - | -4.655044968E-11 |
| A28 = | - | -8.251847430E-08 | - | - |

(continued)

| Surface # | 11 | 12 | 13 | 14 |
|---|---|---|---|---|
| A30 = | - | 1.891992122E-09 | - | - |

| Surface # | 16 | 17 | 18 | 19 |
|---|---|---|---|---|
| k = | -4.37064E+00 | 0.00000E+00 | 0.00000E+00 | -7.90453E+00 |
| A4 = | -9.058554294E-03 | 2.679839514E-02 | -7.370710685E-02 | -3.843953966E-02 |
| A6 = | -4.843832039E-04 | -9.556702537E-03 | 2.334285632E-02 | 1.134063342E-02 |
| A8 = | -8.919484562E-04 | -8.948018276E-04 | -6.202250077E-03 | -2.496361477E-03 |
| A10 = | 7.605537946E-04 | 1.518939052E-03 | 1.302225937E-03 | 3.447863321E-04 |
| A12 = | -4.363027639E-04 | -6.175406076E-04 | -2.097718021E-04 | -2.006619283E-05 |
| A14 = | 1.778919468E-04 | 1.593484553E-04 | 2.612761134E-05 | -2.281301570E-06 |
| A16 = | -4.957067735E-05 | -2.952314815E-05 | -2.495769322E-06 | 6.538844670E-07 |
| A18 = | 9.340894955E-06 | 4.026591865E-06 | 1.795079082E-07 | -7.473743407E-08 |
| A20 = | -1.188709050E-06 | -4.020840971E-07 | -9.532204491E-09 | 5.236547876E-09 |
| A22 = | 1.013784956E-07 | 2.884148419E-08 | 3.654902648E-10 | -2.429970944E-10 |
| A24 = | -5.656902736E-09 | -1.438917811E-09 | -9.798795431E-12 | 7.520675984E-12 |
| A26 = | 1.957756756E-10 | 4.722901107E-11 | 1.738245707E-13 | -1.497573503E-13 |
| A28 = | -3.745743386E-12 | -9.146052608E-13 | -1.829623009E-15 | 1.739344437E-15 |
| A30 = | 2.936217488E-14 | 7.903715628E-15 | 8.636537512E-18 | -8.967851320E-18 |

In the 9th embodiment, the equation of the aspheric surface profiles of the aforementioned lens elements is the same as the equation of the 1st embodiment. Also, the definitions of these parameters shown in Table 9C are the same as those stated in the 1st embodiment with corresponding values for the 9th embodiment, so an explanation in this regard will not be provided again.

Moreover, these parameters can be calculated from Table 9A and Table 9B as the following values and satisfy the following conditions:

| TABLE 9C | | | |
|---|---|---|---|
| Schematic Parameters | | | |
| f [mm] | 6.65 | f/R12+f/R13 | 3.55 |
| Fno | 1.56 | f/R16 | 2.51 |
| HFOV [deg.] | 42.6 | f5/f1 | 1.83 |
| (V1 +V3+V5)/(V2+V4) | 4.78 | f6/f8 | 3.25 |
| CT1/T12+CT5/T45 | 40.73 | f7/f8 | -1.23 |
| (CT2+CT3+CT4)/(T23+T34) | 1.21 | (f×TL)/(EPD×ImgH) | 2.05 |
| (CT7+CT8)/T78 | 1.07 | 1/\|1-tan(HFOV)\| | 12.23 |
| T56/T67 | 2.81 | Yc42/Y42 | 0.47 |
| TL/ImgH | 1.31 | Yc62/Y62 | 0.35 |
| R2/R1 | 1.93 | Yc71/Y71 | 0.56 |
| (R3+R4)/\|f2\| | 0.38 | Yc72/Y72 | 0.54 |
| R12/R13 | 1.70 | Yc82/Y82 | 0.36 |
| \|f/f2\|+\|f/f3\|+\|f/f4\| | 0.70 | - | - |

## 10th Embodiment

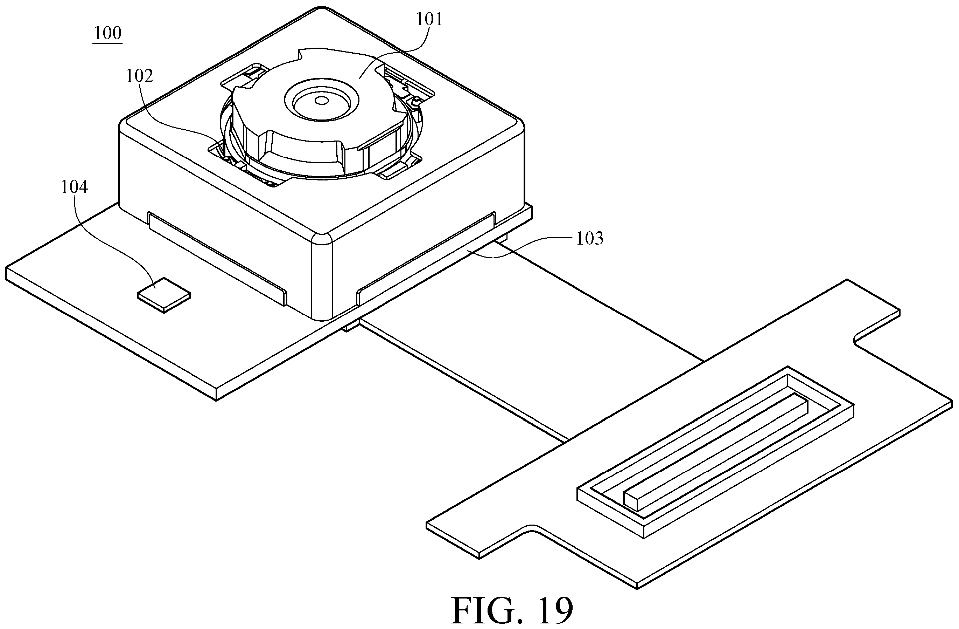

Fig. 19 is a perspective view of an image capturing unit according to the 10th embodiment of the present disclosure. In this embodiment, an image capturing unit 100 is a camera module including a lens unit 101, a driving device 102, an image sensor 103 and an image stabilizer 104. The lens unit 101 includes the imaging lens assembly disclosed in the 1st embodiment, a barrel and a holder member (their reference numerals are omitted) for holding the imaging lens assembly. However, the lens unit 101 may alternatively be provided with the imaging lens assembly disclosed in other embodiments of the present disclosure, and the present disclosure is not limited thereto. The imaging light converges in the lens unit 101 of the image capturing unit 100 to generate an image with the driving device 102 utilized for image focusing on the image sensor 103, and the generated image is then digitally transmitted to other electronic component for further processing.

The driving device 102 can have auto focusing functionality, and different driving configurations can be obtained through the usages of voice coil motors (VCM), micro electro-mechanical systems (MEMS), piezoelectric systems, or shape memory alloy materials. The driving device 102 is favorable for obtaining a better imaging position of the lens unit 101, so that a clear image of the imaged object can be captured by the lens unit 101 with different object distances. The image sensor 103 (for example, CCD or CMOS), which can feature high photosensitivity and low noise, is disposed on the image surface of the imaging lens assembly to provide higher image quality.

The image stabilizer 104, such as an accelerometer, a gyro sensor and a Hall effect sensor, is configured to work with the driving device 102 to provide optical image stabilization (OIS). The driving device 102 working with the image stabilizer 104 is favorable for compensating for pan and tilt of the lens unit 101 to reduce blurring associated with motion during exposure. In some cases, the compensation can be provided by electronic image stabilization (EIS) with image processing software, thereby improving image quality while in motion or low-light conditions.

## 11th Embodiment

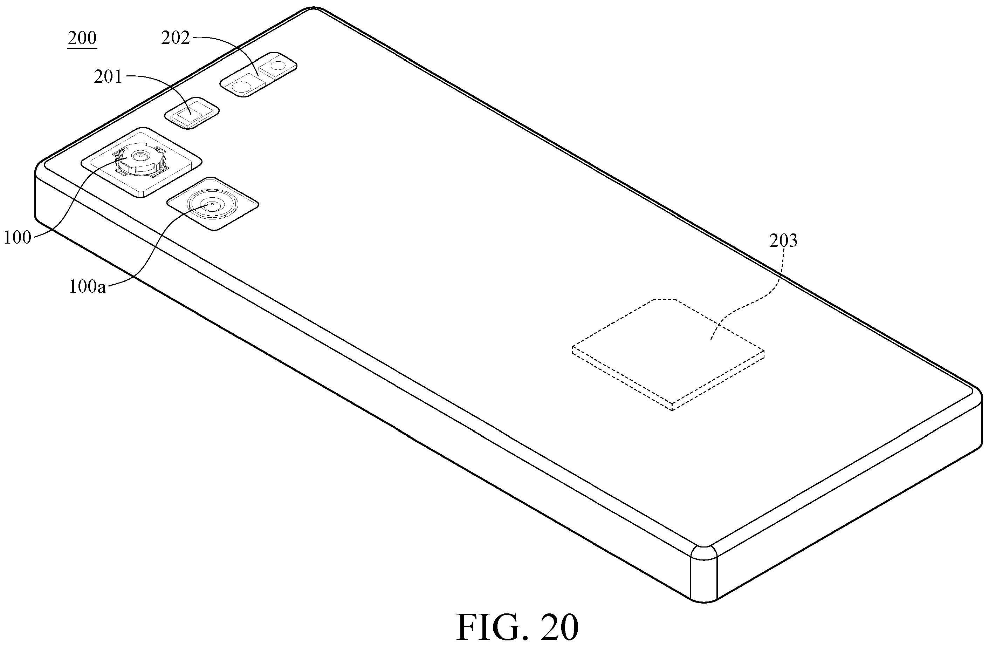

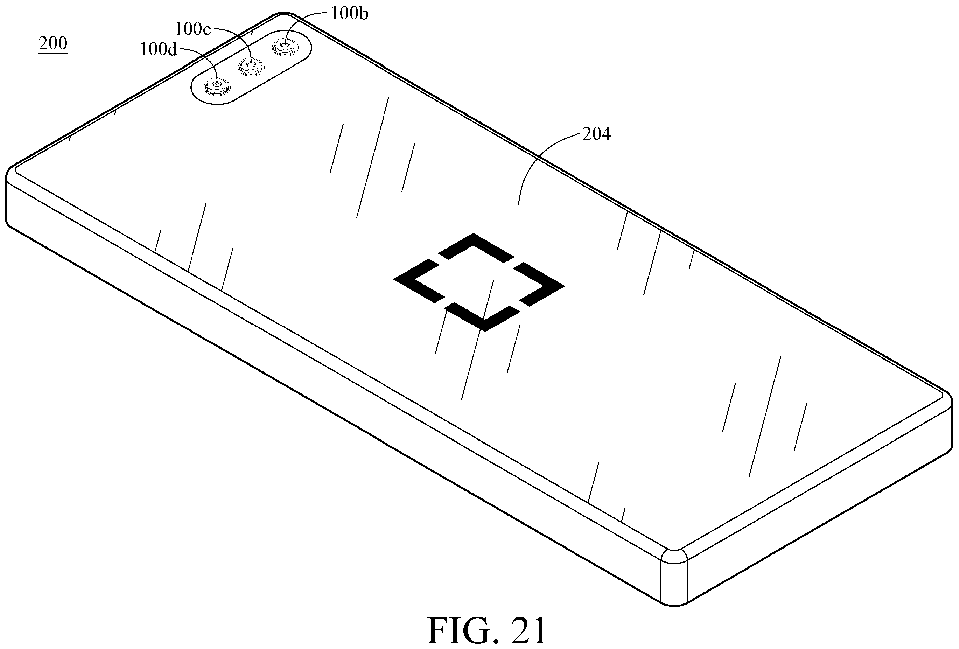

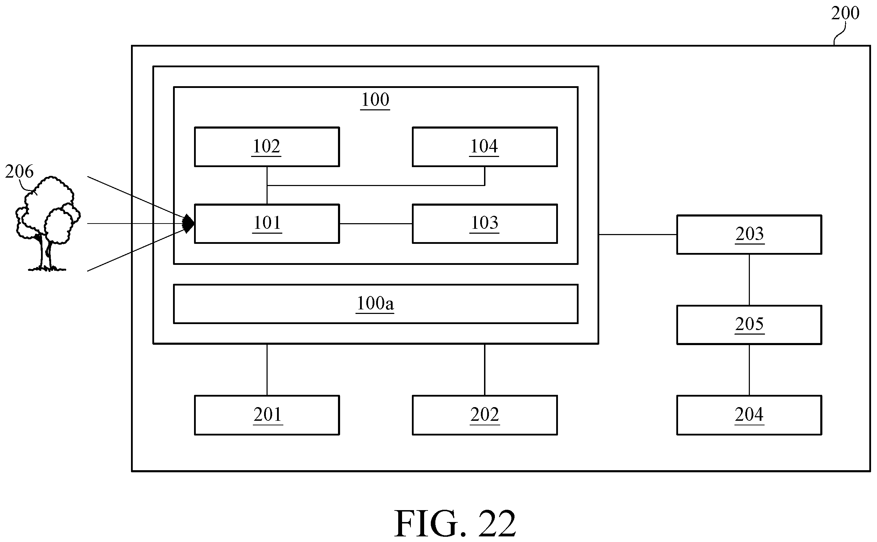

Fig. 20 is one perspective view of an electronic device according to the 11th embodiment of the present disclosure. Fig. 21 is another perspective view of the electronic device in Fig. 20. Fig. 22 is a block diagram of the electronic device in Fig. 20.

In this embodiment, an electronic device 200 is a smartphone including the image capturing unit 100 disclosed in the 10th embodiment, an image capturing unit 100a, an image capturing unit 100b, an image capturing unit 100c, an image capturing unit 100d, a flash module 201, a focus assist module 202, an image signal processor 203, a display module 204 and an image software processor 205. The image capturing unit 100 and the image capturing unit 100a are disposed on the same side of the electronic device 200. The focus assist module 202 can be a laser rangefinder or a ToF (time of flight) module, but the present disclosure is not limited thereto. The image capturing unit 100b, the image capturing unit 100c, the image capturing unit 100d and the display module 204 are disposed on the opposite side of the electronic device 200, and the display module 204 can be a user interface, such that the image capturing units 100b, 100c, 100d can be front-facing cameras of the electronic device 200 for taking selfies, but the present disclosure is not limited thereto. Furthermore, each of the image capturing units 100a, 100b, 100c and 100d can include the imaging lens assembly of the present disclosure and can have a configuration similar to that of the image capturing unit 100. In detail, each of the image capturing units 100a, 100b, 100c and 100d can include a lens unit, a driving device, an image sensor and an image stabilizer, and each of the lens unit can include an imaging lens assembly such as the imaging lens assembly of the present disclosure, a barrel and a holder member for holding the imaging lens assembly.

The image capturing unit 100 is a wide-angle image capturing unit, the image capturing unit 100a is an ultra-wide-angle image capturing unit, the image capturing unit 100b is a wide-angle image capturing unit, the image capturing unit 100c is an ultra-wide-angle image capturing unit, and the image capturing unit 100d is a ToF image capturing unit. In this embodiment, the image capturing units 100 and 100a have different fields of view, such that the electronic device 200 can have various magnification ratios so as to meet the requirement of optical zoom functionality. In addition, the image capturing unit 100d can determine depth information of the imaged object. In this embodiment, the electronic device 200 includes multiple image capturing units 100, 100a, 100b, 100c and 100d, but the present disclosure is not limited to the number and arrangement of image capturing units.

When a user captures images of an object 206, the light rays converge in the image capturing unit 100 or the image capturing unit 100a to generate images, and the flash module 201 is activated for light supplement. The focus assist module 202 detects the object distance of the imaged object 206 to achieve fast auto focusing. The image signal processor 203 is configured to optimize the captured image to improve image quality. The light beam emitted from the focus assist module 202 can be either conventional infrared or laser. In addition, the light rays may converge in the image capturing unit 100b, 100c or 100d to generate images. The display module 204 can include a touch screen, and the user is able to interact with the display module 204 and the image software processor 205 having multiple functions to capture images and complete image processing. Alternatively, the user may capture images via a physical button. The image processed by the image software processor 205 can be displayed on the display module 204.

### 12th Embodiment

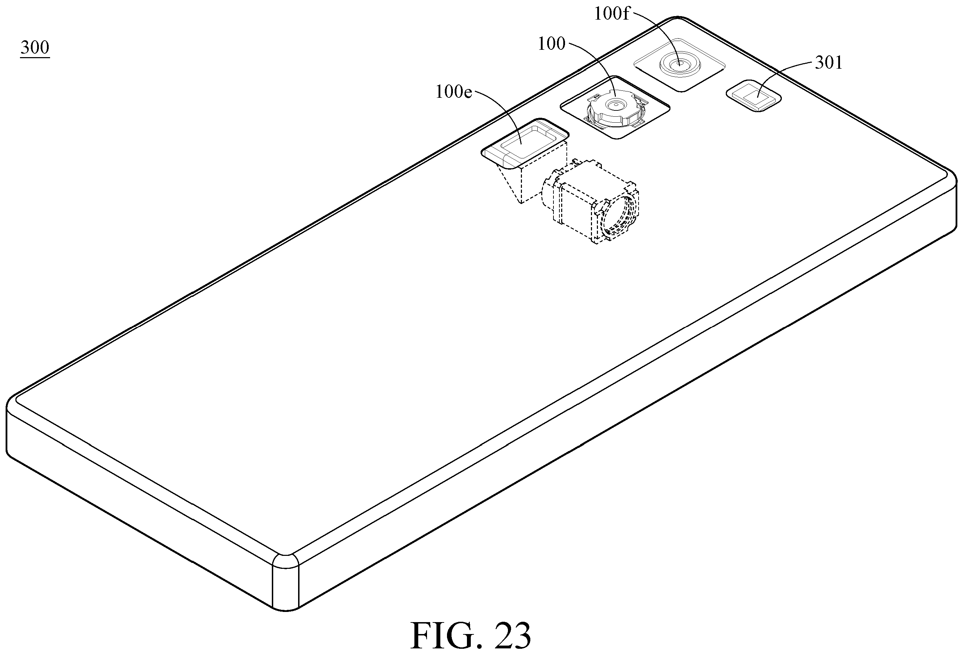

Fig. 23 is one perspective view of an electronic device according to the 12th embodiment of the present disclosure.

In this embodiment, an electronic device 300 is a smartphone including the image capturing unit 100 disclosed in the 10th embodiment, an image capturing unit 100e, an image capturing unit 100f, a flash module 301, a focus assist module, an image signal processor, a display module and an image software processor (not shown). The image capturing unit 100, the image capturing unit 100e and the image capturing unit 100f are disposed on the same side of the electronic device 300, while the display module is disposed on the opposite side of the electronic device 300. Furthermore, each of the image capturing units 100e and 100f can include the imaging lens assembly of the present disclosure and can have a configuration similar to that of the image capturing unit 100, and the details in this regard will not be provided again.

The image capturing unit 100 is a wide-angle image capturing unit, the image capturing unit 100e is a telephoto image capturing unit, and the image capturing unit 100f is an ultra-wide-angle image capturing unit. In this embodiment, the image capturing units 100, 100e and 100f have different fields of view, such that the electronic device 300 can have various magnification ratios so as to meet the requirement of optical zoom functionality. Moreover, the image capturing unit 100e can be a telephoto image capturing unit having a light-folding element configuration, such that the total track length of the image capturing unit 100e is not limited by the thickness of the electronic device 300. Moreover, the light-folding element configuration of the image capturing unit 100e can be similar to, for example, one of the structures shown in Fig. 26 to Fig. 28, which can be referred to foregoing descriptions corresponding to Fig. 26 to Fig. 28, and the details in this regard will not be provided again. In this embodiment, the electronic device 300 includes multiple image capturing units 100, 100e and 100f, but the present disclosure is not limited to the number and arrangement of image capturing units. When a user captures images of an object, light rays converge in the image capturing unit 100, 100e or 100f to generate images, and the flash module 301 is activated for light supplement. Further, the subsequent processes are performed in a manner similar to the abovementioned embodiment, so the details in this regard will not be provided again.

### 13th Embodiment

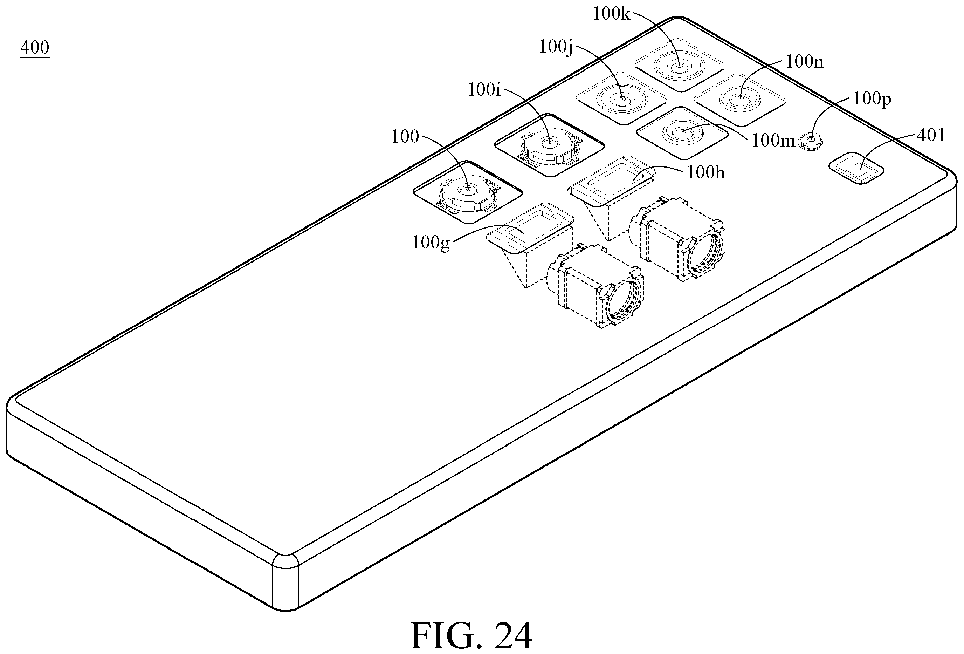

Fig. 24 is one perspective view of an electronic device according to the 13th embodiment of the present disclosure.

In this embodiment, an electronic device 400 is a smartphone including the image capturing unit 100 disclosed in the 10th embodiment, an image capturing unit 100g, an image capturing unit 100h, an image capturing unit 100i, an image capturing unit 100j, an image capturing unit 100k, an image capturing unit 100m, an image capturing unit 100n, an image capturing unit 100p, a flash module 401, a focus assist module, an image signal processor, a display module and an image software processor (not shown). The image capturing units 100, 100g, 100h, 100i, 100j, 100k, 100m, 100n and 100p are disposed on the same side of the electronic device 400, while the display module is disposed on the opposite side of the electronic device 400. Furthermore, each of the image capturing units 100g, 100h, 100i, 100j, 100k, 100m, 100n and 100p can include the imaging lens assembly of the present disclosure and can have a configuration similar to that of the image capturing unit 100, and the details in this regard will not be provided again.

The image capturing unit 100 is a wide-angle image capturing unit, the image capturing unit 100g is a telephoto image capturing unit, the image capturing unit 100h is a telephoto image capturing unit, the image capturing unit 100i is a wide-angle image capturing unit, the image capturing unit 100j is an ultra-wide-angle image capturing unit, the image capturing unit 100k is an ultra-wide-angle image capturing unit, the image capturing unit 100m is a telephoto image capturing unit, the image capturing unit 100n is a telephoto image capturing unit, and the image capturing unit 100p is a ToF image capturing unit. In this embodiment, the image capturing units 100, 100g, 100h, 100i, 100j, 100k, 100m and 100n have different fields of view, such that the electronic device 400 can have various magnification ratios so as to meet the requirement of optical zoom functionality. Moreover, each of the image capturing units 100g and 100h can be a telephoto image capturing unit having a light-folding element configuration. Moreover, the light-folding element configuration of each of the image capturing unit 100g and 100h can be similar to, for example, one of the structures shown in Fig. 26 to Fig. 28, which can be referred to foregoing descriptions corresponding to Fig. 26 to Fig. 28, and the details in this regard will not be provided again. In addition, the image capturing unit 100p can determine depth information of the imaged object. In this embodiment, the electronic device 400 includes multiple image capturing units 100, 100g, 100h, 100i, 100j, 100k, 100m, 100n and 100p, but the present disclosure is not limited to the number and arrangement of image capturing units. When a user captures images of an object, the light rays converge in the image capturing unit 100, 100g, 100h, 100i, 100j, 100k, 100m, 100n or 100p to generate images, and the flash module 401 is activated for light supplement. Further, the subsequent processes are performed in a manner similar to the abovementioned embodiments, and the details in this regard will not be provided again.

The smartphone in this embodiment is only exemplary for showing the image capturing unit of the present disclosure installed in an electronic device, and the present disclosure is not limited thereto. The image capturing unit can be optionally applied to optical systems with a movable focus. Furthermore, the imaging lens assembly of the image capturing unit features good capability in aberration corrections and high image quality, and can be applied to 3D (three-dimensional) image capturing applications, in products such as digital cameras, mobile devices, digital tablets, smart televisions, network surveillance devices, dashboard cameras, vehicle backup cameras, multi-camera devices, image recognition systems, motion sensing input devices, wearable devices and other electronic imaging devices.

The foregoing description, for the purpose of explanation, has been described with reference to specific embodiments. It is to be noted that TABLES 1A-9C show different data of the different embodiments, however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

## Claims

1. An imaging lens assembly comprising eight lens elements (E1, E2, E3, E4, E5, E6, E7, E8), the eight lens elements (E1, E2, E3, E4, E5, E6, E7, E8) being, in order from an object side to an image side along an optical path, a first lens element (E1), a second lens element (E2), a third lens element (E3), a fourth lens element (E4), a fifth lens element (E5), a sixth lens element (E6), a seventh lens element (E7) and an eighth lens element (E8), and each of the eight lens elements (E1, E2, E3, E4, E5, E6, E7, E8) having an object-side surface facing toward the object side and an image-side surface facing toward the image side;

   wherein a total number of lens elements of the imaging lens assembly is eight, the first lens element (E1) has positive refractive power, the object-side surface of the first lens element (E1) is convex in a paraxial region thereof, the image-side surface of the first lens element (E1) is concave in a paraxial region thereof, the object-side surface of the second lens element (E2) is convex in a paraxial region thereof, the image-side surface of the second lens element (E2) is concave in a paraxial region thereof, the fifth lens element (E5) has positive refractive power, the sixth lens element (E6) has negative refractive power, the image-side surface of the sixth lens element (E6) is concave in a paraxial region thereof, the seventh lens element (E7) has positive refractive power, the object-side surface of the seventh lens element (E7) is convex in a paraxial region thereof, the eighth lens element (E8) has negative refractive power, and at least one of the object-side surface and the image-side surface of at least one lens element of the imaging lens assembly has at least one critical point in an off-axis region thereof; wherein an Abbe number of the first lens element (E1) is V1, an Abbe number of the second lens element (E2) is V2, an Abbe number of the third lens element (E3) is V3, an Abbe number of the fourth lens element (E4) is V4, an Abbe number of the fifth lens element (E5) is V5, a curvature radius of the image-side surface of the sixth lens element (E6) is R12, a curvature radius of the object-side surface of the seventh lens element (E7) is R13, a focal length of the first lens element (E1) is f1, a focal length of the fifth lens element (E5) is f5, a focal length of the sixth lens element (E6) is f6, a focal length of the seventh lens element (E7) is f7, a focal length of the eighth lens element (E8) is f8, a central thickness of the first lens element (E1) is CT1, a central thickness of the fifth lens element (E5) is CT5, an axial distance between the first lens element (E1) and the second lens element (E2) is T12, an axial distance between the fourth lens element (E4) and the fifth lens element (E5) is T45, a focal length of the imaging lens assembly is f, an axial distance between the object-side surface of the first lens element (E1) and an image surface (IMG) is TL, an entrance pupil diameter of the imaging lens assembly is EPD, a maximum image height of the imaging lens assembly is ImgH, and the following conditions are satisfied:

$$2.0 < (V1+V3+V5)/(V2+V4) < 9.0;$$

$$0.60 < R12/R13 < 3.3;$$

$$0.20 < f5/f1 < 4.0;$$

$$0.10 < f6/f8 < 4.5;$$

$$-1.7 < f7/f8 < -0.20;$$

$$25.0 < CT1/T12+CT5/T45;$$

and

$$1.2 < (f{\times}TL)/(EPD{\times}ImgH) < 2.2.$$

2. The imaging lens assembly of claim 1, wherein the focal length of the first lens element (E1) is f1, the focal length of the fifth lens element (E5) is f5, and the following condition is satisfied:

$$0.40 < f5/f1 < 3.5.$$

3. The imaging lens assembly of claim 1, wherein the focal length of the seventh lens element (E7) is f7, the focal length of the eighth lens element (E8) is f8, and the following condition is satisfied:

$$-1.5 < f7/f8 < -0.40.$$

4. The imaging lens assembly of claim 1, wherein the central thickness of the first lens element (E1) is CT1, the central thickness of the fifth lens element (E5) is CT5, the axial distance between the first lens element (E1) and the second lens element (E2) is T12, the axial distance between the fourth lens element (E4) and the fifth lens element (E5) is T45, and the following condition is satisfied:

$$29.0 < CT1/T12+CT5/T45 < 150.$$

5. The imaging lens assembly of claim 1, wherein a curvature radius of the object-side surface of the second lens element (E2) is R3, a curvature radius of the image-side surface of the second lens element (E2) is R4, a focal length of the second lens element (E2) is f2, and the following condition is satisfied:

$$0 \le (R3+R4)/|f2| < 0.90.$$

6. The imaging lens assembly of claim 1, wherein an f-number of the imaging lens assembly is Fno, half of a maximum field of view of the imaging lens assembly is HFOV, and the following conditions are satisfied:

$$0.90 < Fno < 2.0;$$

and

$$3.5 < 1/|1\text{-}tan(HFOV)|.$$

7. The imaging lens assembly of claim 1, wherein the image-side surface of the fourth lens element (E4) is concave in a paraxial region thereof, a vertical distance between a convex critical point on the image-side surface of the fourth lens element (E4) and an optical axis is Yc42, a maximum effective radius of the image-side surface of the fourth lens element (E4) is Y42, and at least one convex critical point on the image-side surface of the fourth lens element (E4) in an off-axis region satisfies the following condition:

$$0.25 < Yc42/Y42 < 0.80.$$

8. The imaging lens assembly of claim 1, wherein the image-side surface of the eighth lens element (E8) is concave in a paraxial region thereof, a vertical distance between a convex critical point on the image-side surface of the eighth lens element (E8) and an optical axis is Yc82, a maximum effective radius of the image-side surface of the eighth lens element (E8) is Y82, and at least one convex critical point on the image-side surface of the eighth lens element (E8) in an off-axis region satisfies the following condition:

$$0.15 < Yc82/Y82 < 0.55.$$

9. An image capturing unit (100), comprising:

> the imaging lens assembly of claim 1; and
> an image sensor (103) disposed on the image surface (IMG) of the imaging lens assembly.

10. An electronic device (200), comprising:
the image capturing unit (100) of claim 9.

**Patentansprüche**

1. Bildgebungslinsenanordnung, die acht Linsenelemente (E1, E2, E3, E4, E5, E6, E7, E8) aufweist, wobei die acht Linsenelemente (E1, E2, E3, E4, E5, E6, E7, E8) in der Reihenfolge von einer Objektseite zu einer Bildseite entlang eines Strahlengangs ein erstes Linsenelement (E1), ein zweites Linsenelement (E2), ein drittes Linsenelement (E3), ein viertes Linsenelement (E4), ein fünften Linsenelement (E5), ein sechstes Linsenelement (E6), ein siebtes Linsenelement (E7), und ein achtes Linsenelement (E8) aufweisen, und wobei jedes der acht Linsenelemente (E1, E2, E3, E4, E5, E6, E7, E8) eine objektseitige Fläche aufweist, die der Objektseite zugewandt ist, und eine bildseitige Fläche aufweist, die der Bildseite zugewandt ist;

> wobei eine Gesamtanzahl von Linsenelementsn der Bildgebungslinsenanordnung acht beträgt, das erste Linsenelement (E1) eine positive Brechkraft aufweist, die objektseitige Fläche des ersten Linsenelements (E1) in einem paraxialen Bereich desselben konvex ist, die bildseitige Fläche des ersten Linsenelements (E1) in einem paraxialen Bereich desselben konkav ist, die objektseitige Fläche des zweiten Linsenelements (E2) in einem paraxialen Bereich desselben konvex ist, die bildseitige Fläche des zweiten Linsenelements (E2) in einem paraxialen Bereich desselben konkav ist, das fünfte Linsenelement (E5) eine positive Brechkraft hat, das sechste Linsenelement (E6) eine negative Brechkraft hat, die bildseitige Fläche des sechsten Linsenelements (E6) in einem paraxialen Bereich desselben konkav ist, das siebte Linsenelement (E7) eine positive Brechkraft hat, die objektseitige Fläche des siebten Linsenelements (E7) in einem paraxialen Bereich desselben konvex ist, das achte Linsenelement (E8) eine negative Brechkraft hat, und die objektseitige Fläche und/oder die bildseitige Fläche mindestens eines Linsenelements der Bildgebungslinsenanordnung mindestens einen kritischen Punkt in einem gegenüber der Achse versetzten Bereich desselben aufweist;
> wobei eine Abbe-Zahl des ersten Linsenelements (E1) V1 ist, eine Abbe-Zahl des zweiten Linsenelements (E2) V2 ist, eine Abbe-Zahl des dritten Linsenelements (E3) V3 ist, eine Abbe-Zahl des vierten Linsenelements (E4) V4 ist, eine Abbe-Zahl des fünften Linsenelements (E5) V5 ist, ein Krümmungsradius der bildseitigen Fläche des sechsten Linsenelements (E6) R12 ist, ein Krümmungsradius der objektseitigen Fläche des siebten Linsenelements (E7) R13 ist, eine Brennweite des ersten Linsenelements (E1) f1 ist, eine Brennweite des fünften Linsenelements (E5) f5 ist, eine Brennweite des sechsten Linsenelements (E6) f6 ist, eine Brennweite des siebten Linsenelements (E7) f7 ist, eine Brennweite des achten Linsenelements (E8) f8 ist, eine Mittendicke des ersten Linsenelements (E1) CT1 ist, eine Mittendicke des fünften Linsenelements (E5) CT5 ist, ein axialer Abstand zwischen dem ersten Linsenelement (E1) und dem zweiten Linsenelement (E2) T12, ein axialer Abstand zwischen dem vierten Linsenelement (E4) und dem fünften Linsenelement (E5) T45 ist, eine Brennweite der Bildgebungslinsenanordnung f ist, ein axialer Abstand zwischen der objektseitigen Fläche des ersten Linsenelements (E1) und einer Bildfläche (IMG) TL ist, ein Eintrittspupillendurchmesser der Bildgebungslinsenanordnung EPD ist, eine maximale Bildhöhe der Bildgebungslinsenanordnung ImgH ist, und die folgenden Bedingungen erfüllt sind:

$$2,0 < (V1+V3+V5)/(V2+V4) < 9,0;$$

$$0,60 < R12/R13 < 3,3;$$

$$0,20 < f5/f1 < 4,0;$$

$$0,10 < f6/f8 < 4,5;$$

$$-1,7 < f7/f8 < -0,20;$$

$$25,0 < CT1/T12+CT5/T45;$$

und

$$1,2 < (f \times TL)/(EPD \times ImgH) < 2,2.$$

2. Bildgebungslinsenanordnung nach Anspruch 1, bei welcher die Brennweite des ersten Linsenelements (E1) f1 ist, die Brennweite des fünften Linsenelements (E5) f5 ist, und die folgende Bedingung erfüllt ist:

$$0,40 < f5/f1 < 3,5.$$

3. Bildgebungslinsenanordnung nach Anspruch 1, bei welcher die Brennweite des siebten Linsenelements (E7) f7 ist, die Brennweite des achten Linsenelements (E8) f8 ist, und die folgende Bedingung erfüllt ist:

$$-1,5 < f7/f8 < -0,40.$$

4. Bildgebungslinsenanordnung nach Anspruch 1, bei welcher die Mittendicke des ersten Linsenelements (E1) CT1 ist, die Mittendicke des fünften Linsenelements (E5) T45 ist, der axiale Abstand zwischen dem ersten Linsenelement (E1) und dem zweiten Linsenelement (E2) T12 ist, der axiale Abstand zwischen dem vierten Linsenelement (E4) und dem fünften Linsenelement (E5) T45 ist, und die folgende Bedingung erfüllt ist:

$$29,0 < CT1/T12+CT5/T45 < 150.$$

5. Bildgebungslinsenanordnung nach Anspruch 1, bei welcher ein Krümmungsradius der objektseitigen Fläche des zweiten Linsenelements (E2) R3 ist, ein Krümmungsradius der bildseitigen Fläche des zweiten Linsenelements (E2) R4 ist, eine Brennweite des zweiten Linsenelements (E2) f2 ist, und die folgende Bedingung erfüllt ist:

$$0 \leq (R3+R4)/|f2| < 0,90.$$

6. Bildgebungslinsenanordnung nach Anspruch 1, bei welcher eine Blendenzahl der Bildgebungslinsenanordnung Fno ist, die Hälfte eines maximalen Bildwinkels der Bildgebungslinsenanordnung HFOV ist, und die folgenden Bedingungen erfüllt sind:

$$0,90 < Fno < 2,0;$$

und

$$3,5 < 1/|1-\tan(HFOV)|.$$

7. Bildgebungslinsenanordnung nach Anspruch 1, bei welcher die bildseitige Fläche des vierten Linsenelements (E4) in einem paraxialen Bereich desselben konkav ist, ein vertikaler Abstand zwischen einem konvexen kritischen Punkt auf der bildseitigen Fläche des vierten Linsenelements (E4) und einer optischen Achse Yc42 ist, ein maximaler effektiver Radius der bildseitigen Fläche des vierten Linsenelements (E4) Y42 ist, und mindestens ein konvexer kritischer Punkt auf der bildseitigen Fläche des vierten Linsenelements (E4) in einem gegenüber der Achse versetzten Bereich die folgende Bedingung erfüllt:

$$0,25 < Yc42/Y42 < 0,80.$$

8. Bildgebungslinsenanordnung nach Anspruch 1, bei welcher die bildseitige Fläche des achten Linsenelements (E8) in einem paraxialen Bereich desselben konkav ist, ein vertikaler Abstand zwischen einem konvexen kritischen Punkt auf der bildseitigen Fläche des achten Linsenelements (E8) und einer optischen Achse Yc82 ist, ein maximaler effektiver Radius der bildseitigen Fläche des schten Linsenelements (E8) Y82 ist, und mindestens ein konvexer kritischer Punkt auf der bildseitigen Fläche des achten Linsenelements (E8) in einem gegenüber der Achse versetzten Bereich die folgende Bedingung erfüllt:

$$0,15 < Yc82/Y82 < 0,55.$$

9. Bilderfassungseinheit (100) mit:

   der Bildgebungslinsenanordnung nach Anspruch 1; und
   einem Bildsensor (103), der auf der Bildfläche (IMG) der Bildgebungslinsenanordnung angeordnet ist.

10. Elektronische Vorrichtung (200) mit:
    der Bilderfassungseinheit (100) nach Anspruch 9.

**Revendications**

1. Ensemble lentille d'imagerie comprenant huit éléments de lentille (E1, E2, E3, E4, E5, E6, E7, E8), les huit éléments de lentille (E1, E2, E3, E4, E5, E6, E7, E8) étant, dans l'ordre d'un côté objet à un côté image le long d'un chemin optique, un premier élément de lentille (E1), un deuxième élément de lentille (E2), un troisième élément de lentille (E3), un quatrième élément de lentille (E4), un cinquième élément de lentille (E5), un sixième élément de lentille (E6), un septième élément de lentille (E7) et un huitième élément de lentille (E8), et chacun des huit éléments de lentille (E1, E2, E3, E4, E5, E6, E7, E8) ayant une surface côté objet orientée vers le côté objet et une surface côté image orientée vers le côté image ;

   un nombre total d'éléments de lentille de l'ensemble lentille d'imagerie étant huit, le premier élément de lentille (E1) ayant un pouvoir de réfraction positif, la surface côté objet du premier élément de lentille (E1) étant convexe dans une zone paraxiale de celle-ci, la surface côté image du premier élément de lentille (E1) étant concave dans une zone paraxiale de celle-ci, la surface côté objet du deuxième élément de lentille (E2) étant convexe dans une zone paraxiale de celle-ci, la surface côté image du deuxième élément de lentille (E2) étant concave dans une zone paraxiale de celle-ci, le cinquième élément de lentille (E5) ayant un pouvoir de réfraction positif, le sixième élément de lentille (E6) ayant un pouvoir de réfraction négatif, la surface côté image du sixième élément de lentille (E6) étant concave dans une zone paraxiale de celle-ci, le septième élément de lentille (E7) ayant un pouvoir de réfraction positif, la surface côté objet du septième élément de lentille (E7) étant convexe dans une zone paraxiale de celle-ci, le huitième élément de lentille (E8) ayant un pouvoir de réfraction négatif, au moins une parmi la surface côté objet et la surface côté image d'au moins un élément de lentille de l'ensemble lentille d'imagerie ayant au moins un point critique dans une zone hors axe de ceux-ci ;
   un nombre d'Abbe du premier élément de lentille (E1) étant V1, un nombre d'Abbe du deuxième élément de lentille (E2) étant V2, un nombre d'Abbe du troisième élément de lentille (E3) étant V3, un nombre d'Abbe du quatrième élément de lentille (E4) étant V4, un nombre d'Abbe du cinquième élément de lentille (E5) étant V5, un rayon de courbure de la surface côté image du sixième élément de lentille (E6) étant R12, un rayon de courbure de la surface côté objet du septième élément de lentille (E7) étant R13, une longueur focale du premier élément de lentille (E1) étant f1, une longueur focale du cinquième élément de lentille (E5) étant f5, une longueur focale du sixième élément de lentille (E6) étant f6, une longueur focale du septième élément de lentille (E7) étant f7, une longueur focale du huitième élément de lentille (E8) étant f8, une épaisseur centrale du premier élément de lentille (E1) étant CT1, une épaisseur centrale du cinquième élément de lentille (E5) étant CT5, une distance axiale entre le premier élément de lentille (E1) et le deuxième élément de lentille (E2) étant T12, une distance axiale entre le quatrième élément de lentille (E4) et le cinquième élément de lentille (E5) étant T45, une longueur focale de l'ensemble lentille d'imagerie étant f, une distance axiale entre la surface côté objet du premier élément de lentille (E1) et une surface d'image (IMG) étant TL, un diamètre de pupille d'entrée de l'ensemble lentille d'imagerie étant EPD, une hauteur d'image maximale de l'ensemble lentille d'imagerie étant ImgH, et les conditions suivantes sont remplies :

$$2,0 < (V1+V3+V5)/V2+V4) < 9,0 ;$$

$$0,60 < R12/R13 < 3,3 ;$$

$$0,20 < f5/f1 < 4,0 \; ;$$

$$0,10 < f6/f8 < 4,5 \; ;$$

$$-1,7 < f7/f8 < -0,20 \; ;$$

$$25,0 < CT1/T12 + CT5/T45 \; ;$$

et

$$1,2 < (f{\bullet}TL)/EPD{\bullet}ImgH) < 2,2.$$

2. Ensemble lentille d'imagerie selon la revendication 1, la longueur focale du premier élément de lentille (E1) étant f1, la longueur focale du cinquième élément de lentille (E5) étant f5, et la condition suivante étant remplie :

$$0,40 < f5/f1 < 3,5.$$

3. Ensemble lentille d'imagerie selon la revendication 1, la longueur focale du septième élément de lentille (E7) étant f7, la longueur focale du huitième élément de lentille (E8) étant f8, et la condition suivante étant remplie :

$$-1,5 < f7/f8 < -0,40.$$

4. Ensemble lentille d'imagerie selon la revendication 1, l'épaisseur centrale du premier élément de lentille (E1) étant CT1, l'épaisseur centrale du cinquième élément de lentille (E5) étant CT5, la distance axiale entre le premier élément de lentille (E1) et le deuxième élément de lentille (E2) étant T12, la distance axiale entre le quatrième élément de lentille (E4) et le cinquième élément de lentille (E5) étant T45, et la condition suivante étant remplie :

$$29,0 < CT1/T12 + CT5/T45 < 150.$$

5. Ensemble lentille d'imagerie selon la revendication 1, un rayon de courbure de la surface côté objet du deuxième élément de lentille (E2) étant R3, un rayon de courbure de la surface côté image du deuxième élément de lentille (E2) étant R4, une longueur focale du deuxième élément de lentille (E2) étant f2, et la condition suivante étant remplie :

$$0 \leq (R3+R4)/\,|f2| < 0,90.$$

6. Ensemble lentille d'imagerie selon la revendication 1, un numéro f de l'ensemble lentille d'imagerie étant Fno, la moitié d'un champ maximal de vue de l'ensemble lentille d'imagerie étant HFOV, et les conditions suivantes étant remplies :

$$0,90 < Fno < 2,0 \; ;$$

et

$$3,5 < 1/|1\text{-}\tan(HFOV)|.$$

7. Ensemble lentille d'imagerie selon la revendication 1, la surface côté image du quatrième élément de lentille (E4) étant concave dans une zone paraxiale de celle-ci, une distance verticale entre un point critique convexe sur la surface côté image du quatrième élément de lentille (E4) et un axe optique étant Yc42, un rayon effectif maximal de la surface côté image du quatrième élément de lentille (E4) étant Y42, et au moins un point critique convexe sur la surface côté image du quatrième élément de lentille (E4) dans une zone hors axe remplissant la condition suivante :

$$0{,}25 < \mathrm{Yc42/Y42} < 0{,}80.$$

8. Ensemble lentille d'imagerie selon la revendication 1, la surface côté image du huitième élément de lentille (E8) étant concave dans une zone paraxiale de celle-ci, une distance verticale entre un point critique convexe sur la surface côté image du huitième élément de lentille (E8) et un axe optique étant Yc82, un rayon effectif maximal de la surface côté image du huitième élément de lentille (E8) étant Y82, et au moins un point critique convexe sur la surface côté image du huitième élément de lentille (E8) dans une zone hors axe remplissant la condition suivante :

$$0{,}15 < \mathrm{Yc82/Y82} < 0{,}55.$$

9. Unité de capture d'images (100) comprenant :

   l'ensemble lentille d'imagerie selon la revendication 1 et
   un capteur d'image (103) disposé sur la surface d'image (IMG) de l'ensemble lentille d'imagerie.

10. Dispositif électronique (200) comprenant :
    l'unité de capture d'images (100) selon la revendication 9.

FIG. 1

EP 4 296 743 B1

FIG. 2

FIG. 3

FIG. 4

FIG. 5

FIG. 6

FIG. 7

LONGITUDINAL
SPHERICAL ABER.

| | |
|---|---|
| — · — · — | 656.3000 NM |
| ———— | 587.6000 NM |
| -------- | 486.1000 NM |

ASTIGMATIC
FIELD CURVES
IMG HT

| | |
|---|---|
| — · — | T |
| ———— | S |

DISTORTION
IMG HT

-0.100 -0.050 0.0 0.050 0.100

FOCUS (MILLIMETERS)

-0.200 -0.100 0.0 0.100 0.200

FOCUS (MILLIMETERS)

-2.50 -1.25 0.0 1.25 2.50

% DISTORTION

FIG. 8

EP 4 296 743 B1

ST

E1

E2

E3

S1

E4

E5

E6

S2

E7

E8

E9

IMG

IS

5

FIG. 9

EP 4 296 743 B1

| | |
|---|---|
| — - — - — | 656.3000 NM |
| ————— | 587.6000 NM |
| - - - - - - - | 486.1000 NM |

| | |
|---|---|
| — - — - — | T |
| ————— | S |

LONGITUDINAL
SPHERICAL ABER.

ASTIGMATIC
FIELD CURVES
IMG HT

DISTORTION
IMG HT

-0.100  -0.050  0.0  0.050  0.100

FOCUS (MILLIMETERS)

-0.200  -0.100  0.0  0.100  0.200

FOCUS (MILLIMETERS)

-2.50  -1.25  0.0  1.25  2.50

% DISTORTION

FIG. 10

FIG. 11

LONGITUDINAL
SPHERICAL ABER.

ASTIGMATIC
FIELD CURVES
IMG HT

DISTORTION
IMG HT

656.3000 NM
587.6000 NM
486.1000 NM

T
S

FOCUS (MILLIMETERS)

FOCUS (MILLIMETERS)

% DISTORTION

FIG. 12

FIG. 13

EP 4 296 743 B1

LONGITUDINAL
SPHERICAL ABER.

656.3000 NM
587.6000 NM
486.1000 NM

1.00

0.75

0.50

0.25

-0.100 -0.050 0.0 0.050 0.100
FOCUS (MILLIMETERS)

ASTIGMATIC
FIELD CURVES
IMG HT

T
S

6.25

4.69

3.12

1.56

-0.200 -0.100 0.0 0.100 0.200
FOCUS (MILLIMETERS)

DISTORTION
IMG HT

6.25

4.69

3.12

1.56

-2.50 -1.25 0.0 1.25 2.50
% DISTORTION

FIG. 14

**FIG. 15**

LONGITUDINAL
SPHERICAL ABER.

656.3000 NM
587.6000 NM
486.1000 NM

ASTIGMATIC
FIELD CURVES
IMG HT

T
S

DISTORTION
IMG HT

FOCUS (MILLIMETERS)

FOCUS (MILLIMETERS)

% DISTORTION

FIG. 16

FIG. 17

EP 4 296 743 B1

| 656.3000 NM |
| 587.6000 NM |
| 486.1000 NM |

| T |
| S |

LONGITUDINAL
SPHERICAL ABER.

ASTIGMATIC
FIELD CURVES
IMG HT

DISTORTION
IMG HT

1.00

0.75

0.50

0.25

-0.100 -0.050 0.0 0.050 0.100

FOCUS (MILLIMETERS)

6.25

4.68

3.12

1.56

-0.200 -0.100 0.0 0.100 0.200

FOCUS (MILLIMETERS)

6.25

4.68

3.12

1.56

-2.50 -1.25 0.0 1.25 2.50

% DISTORTION

FIG. 18

FIG. 19

EP 4 296 743 B1

FIG. 20

EP 4 296 743 B1

FIG. 21

EP 4 296 743 B1

FIG. 22

FIG. 23

FIG. 24

FIG. 25

EP 4 296 743 B1

OA1

LF

LG

OA2

IMG

**FIG. 26**

FIG. 27

FIG. 28

EP 4 296 743 B1

**EP 4 296 743 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021181480 A1
- US 2021157092 A1
- US 2020393648 A1